(19) **Europäisches Patentamt / European Patent Office / Office européen des brevets**

(11) **EP 4 033 822 A1**

(12) # EUROPEAN PATENT APPLICATION

(43) Date of publication:
**27.07.2022 Bulletin 2022/30**

(21) Application number: **22161363.1**

(22) Date of filing: **10.08.2018**

(51) International Patent Classification (IPC):
*H04W 52/34* (2009.01)    *H04W 52/44* (2009.01)
*H04B 17/382* (2015.01)    *H04W 52/24* (2009.01)
*H04W 76/19* (2018.01)    *H04W 16/28* (2009.01)
*H04W 72/04* (2009.01)    *H04W 74/08* (2009.01)

(52) Cooperative Patent Classification (CPC):
**H04W 52/346; H04B 17/382; H04W 52/242;
H04W 52/44; H04W 76/19;** H04W 16/28;
H04W 72/046; H04W 74/08

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2017 US 201762543816 P
10.08.2017 US 201762543820 P
10.08.2017 US 201762543821 P
10.08.2017 US 201762543826 P**

(62) Document number(s) of the earlier application(s) in
accordance with Art. 76 EPC:
**18762437.4 / 3 665 971**

(71) Applicant: **Comcast Cable Communications LLC
Philadelphia, Pennsylvania 19103 (US)**

(72) Inventors:
• **ZHOU, Hua
Philadelphia, 19103 (US)**
• **DINAN, Esmael
Philadelphia, 19103 (US)**
• **JEON, Hyoungsuk
Philadelphia, 19103 (US)**
• **PARK, Kyungmin
Philadelphia, 19103 (US)**
• **BABAEI, Alireza
Philadelphia, 19103 (US)**

(74) Representative: **V.O.
P.O. Box 87930
2508 DH Den Haag (NL)**

Remarks:
This application was filed on 10.03.2022 as a
divisional application to the application mentioned
under INID code 62.

(54) **BEAM FAILURE RECOVERY REQUEST TRANSMISSION**

(57) Systems, apparatuses, and methods are described for wireless communications. Beam failure recovery (BFR) may be used for recovering a beam pair link between a base station and a wireless device. A wireless device and/or a base station may detect a beam failure and determine a type of BFR procedure, resources for the BFR procedure, and a transmission power for the BFR procedure.

EP 4 033 822 A1

**FIG. 31**

**Description**

CROSS-REFERENCE TO RELATED APPLICATIONS

This application claims the benefit of U.S. Provisional Application No. 62/543,816, titled "BFR Request Transmission" and filed on August 10, 2017; U.S. Provisional Application No. 62/543,820, titled "Resource Configuration of BFR Request" and filed on August 10, 2017; U.S. Provisional Application No. 62/543,821, titled "Transmission Power of BFR Request" and filed on August 10, 2017; and U.S. Provisional Application No. 62/543,826, titled "Priority of BFR Request and Uplink Channels" and filed on August 10, 2017; each of the above of which is hereby incorporated by reference in its entirety.

BACKGROUND

In wireless communications, beam failure recovery may be used for recovering a beam pair link between a base station and a wireless device. If a beam failure is detected, difficulties may arise in performing a successful beam failure recovery in a timely and efficient manner.

SUMMARY

The following summary presents a simplified summary of certain features. The summary is not an extensive overview and is not intended to identify key or critical elements.

Systems, apparatuses, and methods are described for communications associated with beam failure recovery. A base station may determine a received target power for a beam failure recovery preamble and increase the likelihood that the base station will receive the beam failure recovery preamble. The received target power for the beam failure recovery preamble may be different from a received target power for a random access preamble. The base station may transmit, to the wireless device, one or more messages comprising configuration parameters. The configuration parameters may comprise an indication of the received target power for the beam failure recovery preamble. The wireless device may detect a beam failure. After detecting a beam failure, the wireless device may transmit a beam failure recovery request preamble using a transmission power based on the indication of the received target power.

Systems, apparatuses, and methods are described for communications associated with beam failure recovery. A base station may determine a type of a beam failure recovery for a wireless device. The base station may transmit, to the wireless device, one or more messages comprising configuration parameters. The configuration parameters may comprise an indication of the type of a beam failure recovery for the wireless device. The wireless device may detect a beam failure. Based on the type of a beam failure, the wireless device may transmit a beam failure recovery request with or without an indication of one or more candidate beams.

Systems, apparatuses, and methods are described for communications associated with beam failure recovery. A base station may transmit, to a wireless device, one or more messages comprising configuration parameters for beam failure recovery. The configuration parameters may comprise an indication of reference signals and/or channel resources to be used in beam failure recovery. The configuration parameters may be transmitted using a medium access control (MAC) control element (CE). The wireless device may detect a beam failure. The wireless device and/or the base station may utilize the reference signals and/or channel resources in performing a beam failure recovery procedure.

Systems, apparatuses, and methods are described for communications associated with beam failure recovery. A base station may transmit, to a wireless device, one or more messages comprising configuration parameters for beam failure recovery. The configuration parameters may comprise an indication of beam failure recovery priority information for the wireless device. The priority information may be predefined or preconfigured. The wireless device may detect a beam failure. The wireless device may adjust transmission power based on the priority information so as not to exceed a total transmission power threshold when performing beam failure recovery.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1 shows example sets of orthogonal frequency division multiplexing (OFDM) subcarriers.

FIG. 2 shows example transmission time and reception time for two carriers in a carrier group.

FIG. 3 shows example OFDM radio resources.

FIG. 4 shows hardware elements of a base station and a wireless device.

FIG. 5A, FIG. 5B, FIG. 5C and FIG. 5D show examples for uplink and downlink signal transmission.

FIG. 6 shows an example protocol structure with multi-connectivity.

FIG. 7 shows an example protocol structure with carrier aggregation (CA) and dual connectivity (DC).

FIG. 8 shows example timing advance group (TAG) configurations.

FIG. 9 shows example message flow in a random access process in a secondary TAG.

FIG. 10A and FIG. 10B show examples for interfaces between a 5G core network and base stations.

FIG. 11A, FIG. 11B, FIG. 11C, FIG. 11D, FIG. 11E, and FIG. 11F show examples for architectures of tight interworking between a 5G RAN and a long term evolution (LTE) radio access network (RAN).

FIG. 12A, FIG. 12B, and FIG. 12C show examples for radio protocol structures of tight interworking bearers.

FIG. 13A and FIG.13B show examples for gNodeB (gNB) deployment.

FIG. 14 shows functional split option examples of a centralized gNB deployment.

FIG. 15 shows an example of a synchronization signal burst set.

FIG. 16 shows an example of a random access procedure.

FIG. 17 shows an example of transmitting channel state information reference signals periodically for a beam.

FIG. 18 shows an example of a channel state information reference signal mapping.

FIG. 19 shows an example of a beam failure event involving a single transmission and receiving point.

FIG. 20 shows an example of a beam failure event involving multiple transmission and receiving points.

FIG. 21 shows an example of a beam failure event and transmissions of first and second preambles.

FIG. 22 shows an example transmission of configuration parameters.

FIG. 23 shows an example of a beam failure recovery procedure by a base station.

FIG. 24 shows an example of a beam failure recovery preamble procedure by a base station using offsets.

FIG. 25 shows an example of a beam failure recovery preamble procedure by a wireless device using offsets.

FIG. 26 shows an example of a beam failure recovery preamble procedure by a wireless device using Layer 1 measurement and path loss.

FIG. 27 shows an example of procedures for random access preamble transmission and beam failure recovery preamble transmission by a wireless device.

FIG. 28 shows an example of random access and beam failure recovery procedures by a base station.

FIG. 29 shows an example of beam failure request transmissions with different request types.

FIG. 30 shows an example of radio resource control (RRC) configurations for multiple beams.

FIG. 31 shows an example of processes for a wireless device for beam failure recovery requests.

FIG. 32 shows an example of processes for a base station for beam failure recovery requests.

FIG. 33 shows an example of processes for a base station to determine a beam failure request type.

FIG. 34 shows an example of a beam failure recovery request utilizing a PRACH channel.

FIG. 35 shows an example of a multi-beam BFR-PRACH configuration.

FIG. 36 shows an example of a multi-beam BFR-PRACH configuration.

FIG. 37 shows an example of a PRACH configuration for a beam failure recovery request transmission.

FIG. 38 shows an example of MAC signaling activating a subset of a configured CSI-RS associated with a BFR-PRACH resource.

FIG. 39 shows an example of PRACH configuration and activation for a beam failure recovery request transmission.

FIG. 40 shows an example MAC CE structure for CSI-RS and/or BFR-PRACH activation or deactivation.

FIG. 41 shows an example of PRACH configuration and activation for BFR request transmission.

FIG. 42 shows an example MAC CE for CSI-RS activation and/or deactivation, and/or BFR-PRACH configuration.

FIG. 43 shows an example of processes for a wireless device for beam failure recovery requests.

FIG. 44 shows an example of processes for a base station for beam failure recovery requests.

FIG. 45 shows an example of a BFR-PRACH transmission in conjunction with a regulated transmission.

FIG. 46 shows an example of a BFR request transmission in a multiple-TRP system.

FIG. 47 shows an example of processes for a wireless device for beam failure recovery requests.

FIG. 48 shows an example of processes for a base station for beam failure recovery requests

FIG. 49 shows example elements of a computing device that may be used to implement any of the various devices described herein.

DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.
Examples may enable operation of carrier aggregation and may be employed in the technical field of multicarrier communication systems. Examples may relate to beam failure recovery in a multicarrier communication system.
The following acronyms are used throughout the present disclosure, provided below for convenience although other acronyms may be introduced in the detailed description:

3GPP          3rd Generation Partnership Project
5G            5th generation wireless systems
5GC           5G Core Network
ACK           Acknowledgement
AMF           Access and Mobility Management Function
ASIC          application-specific integrated circuit
BFR           beam failure recovery
BPSK          binary phase shift keying

| | |
|---|---|
| CA | carrier aggregation |
| CC | component carrier |
| CDMA | code division multiple access |
| CP | cyclic prefix |
| CPLD | complex programmable logic devices |
| CSI | channel state information |
| CSS | common search space |
| CU | central unit |
| DC | dual connectivity |
| DCI | downlink control information |
| DFTS-OFDM | discrete fourier transform spreading OFDM |
| DL | downlink |
| DU | distributed unit |
| eLTE | enhanced LTE |
| eMBB | enhanced mobile broadband |
| eNB | evolved Node B |
| EPC | evolved packet core |
| E-UTRAN | evolved-universal terrestrial radio access network |
| FDD | frequency division multiplexing |
| FPGA | field programmable gate arrays |
| Fs-C | Fs-control plane |
| Fs-U | Fs-user plane |
| gNB | next generation node B |
| HARQ | hybrid automatic repeat request |
| HDL | hardware description languages |
| ID | identifier |
| IE | information element |
| LTE | long term evolution |
| MAC | media access control |
| MCG | master cell group |
| MeNB | master evolved node B |
| MIB | master information block |
| MME | mobility management entity |
| mMTC | massive machine type communications |
| NACK | Negative Acknowledgement |
| NAS | non-access stratum |
| NG CP | next generation control plane core |
| NGC | next generation core |
| NG-C | NG-control plane |
| NG-U | NG-user plane |
| NR MAC | new radio MAC |
| NR PDCP | new radio PDCP |
| NR PHY | new radio physical |
| NR RLC | new radio RLC |
| NR RRC | new radio RRC |
| NR | new radio |
| NSSAI | network slice selection assistance information |
| OFDM | orthogonal frequency division multiplexing |
| PCC | primary component carrier |
| PCell | primary cell |
| PDCCH | physical downlink control channel |
| PDCP | packet data convergence protocol |
| PDU | packet data unit |
| PHICH | physical HARQ indicator channel |
| PHY | physical |
| PLMN | public land mobile network |
| PSCell | primary secondary cell |
| pTAG | primary timing advance group |

| PUCCH | physical uplink control channel |
|---|---|
| PUSCH | physical uplink shared channel |
| QAM | quadrature amplitude modulation |
| QPSK | quadrature phase shift keying |
| RA | random access |
| RACH | random access channel |
| RAN | radio access network |
| RAP | random access preamble |
| RAR | random access response |
| RB | resource blocks |
| RBG | resource block groups |
| RLC | radio link control |
| RRC | radio resource control |
| RRM | radio resource management |
| RV | redundancy version |
| SCC | secondary component carrier |
| SCell | secondary cell |
| SCG | secondary cell group |
| SC-OFDM | single carrier-OFDM |
| SDU | service data unit |
| SeNB | secondary evolved node B |
| SFN | system frame number |
| S-GW | serving gateway |
| SIB | system information block |
| SC-OFDM | single carrier orthogonal frequency division multiplexing |
| SRB | signaling radio bearer |
| sTAG(s) | secondary timing advance group(s) |
| TA | timing advance |
| TAG | timing advance group |
| TAI | tracking area identifier |
| TAT | time alignment timer |
| TDD | time division duplexing |
| TDMA | time division multiple access |
| TTI | transmission time interval |
| TB | transport block |
| UE | user equipment |
| UL | uplink |
| UPGW | user plane gateway |
| URLLC | ultra-reliable low-latency communications |
| VHDL | VHSIC hardware description language |
| Xn-C | Xn-control plane |
| Xn-U | Xn-user plane |
| Xx-C | Xx-control plane |
| Xx-U | Xx-user plane |

Examples may be implemented using various physical layer modulation and transmission mechanisms. Example transmission mechanisms may include, but are not limited to: CDMA, OFDM, TDMA, Wavelet technologies, and/or the like. Hybrid transmission mechanisms such as TDMA/CDMA, and OFDM/CDMA may also be employed. Various modulation schemes may be used for signal transmission in the physical layer. Examples of modulation schemes include, but are not limited to: phase, amplitude, code, a combination of these, and/or the like. An example radio transmission method may implement QAM using BPSK, QPSK, 16-QAM, 64-QAM, 256-QAM, and/or the like. Physical radio transmission may be enhanced by dynamically or semi-dynamically changing the modulation and coding scheme depending on transmission requirements and radio conditions.

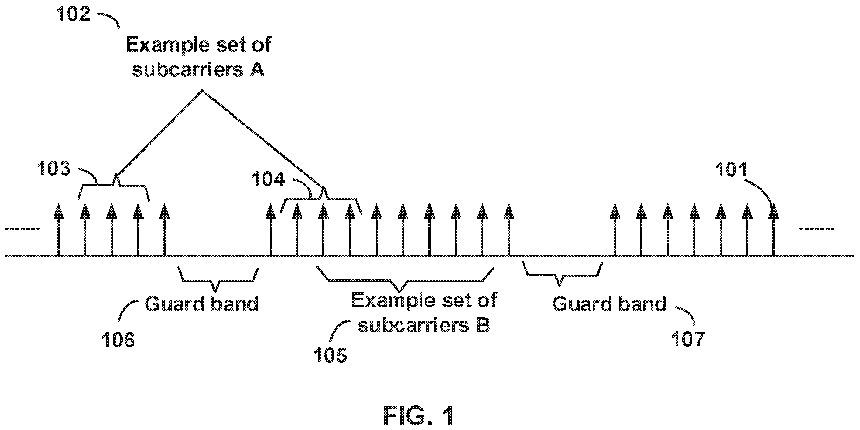

FIG. 1 shows example sets of OFDM subcarriers. As shown in this example, arrow(s) in the diagram may depict a subcarrier in a multicarrier OFDM system. The OFDM system may use technology such as OFDM technology, DFTS-OFDM, SC-OFDM technology, or the like. For example, arrow 101 shows a subcarrier transmitting information symbols. FIG. 1 is shown as an example, and a typical multicarrier OFDM system may include more subcarriers in a carrier. For example, the number of subcarriers in a carrier may be in the range of 10 to 10,000 subcarriers. FIG. 1 shows two guard bands 106 and 107 in a transmission band. As shown in FIG. 1, guard band 106 is between subcarriers 103 and subcarriers 104. The example set of subcarriers A 102 includes subcarriers 103 and subcarriers 104. FIG. 1 also shows an example set of subcarriers B 105. As shown, there is no guard band between any two subcarriers in the example set of subcarriers B 105. Carriers in a multicarrier OFDM communication system may be contiguous carriers, non-contiguous carriers, or a combination of both contiguous and non-contiguous carriers.

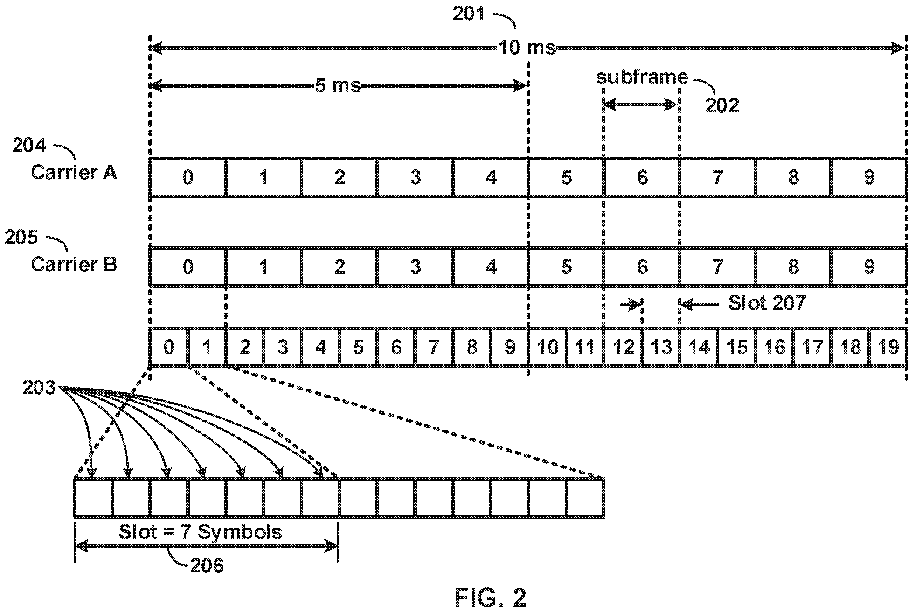

FIG. 2 shows an example timing arrangement with transmission time and reception time for two carriers. A multicarrier OFDM communication system may include one or more carriers, for example, ranging from 1 to 10 carriers. Carrier A 204 and carrier B 205 may have the same or different timing structures. Although FIG. 2 shows two synchronized carriers, carrier A 204 and carrier B 205 may or may not be synchronized with each other. Different radio frame structures may be supported for FDD and TDD duplex mechanisms. FIG. 2 shows an example FDD frame timing. Downlink and uplink transmissions may be organized into radio frames 201. In this example, radio frame duration is 10 milliseconds (msec). Other frame durations, for example, in the range of 1 to 100 msec may also be supported. In this example, each 10 msec radio frame 201 may be divided into ten equally sized subframes 202. Other subframe durations such as including 0.5 msec, 1 msec, 2 msec, and 5 msec may also be supported. Subframe(s) may consist of two or more slots (e.g., slots 206 and 207). For the example of FDD, 10 subframes may be available for downlink transmission and 10 subframes may be available for uplink transmissions in each 10 msec interval. Uplink and downlink transmissions may be separated in the frequency domain. A slot may be 7 or 14 OFDM symbols for the same subcarrier spacing of up to 60 kHz with normal CP. A slot may be 14 OFDM symbols for the same subcarrier spacing higher than 60 kHz with normal CP. A slot may include all downlink, all uplink, or a downlink part and an uplink part, and/or alike. Slot aggregation may be supported, e.g., data transmission may be scheduled to span one or multiple slots. For example, a mini-slot may start at an OFDM symbol in a subframe. A mini-slot may have a duration of one or more OFDM symbols. Slot(s) may include a plurality of OFDM symbols 203. The number of OFDM symbols 203 in a slot 206 may depend on the cyclic prefix length and subcarrier spacing.

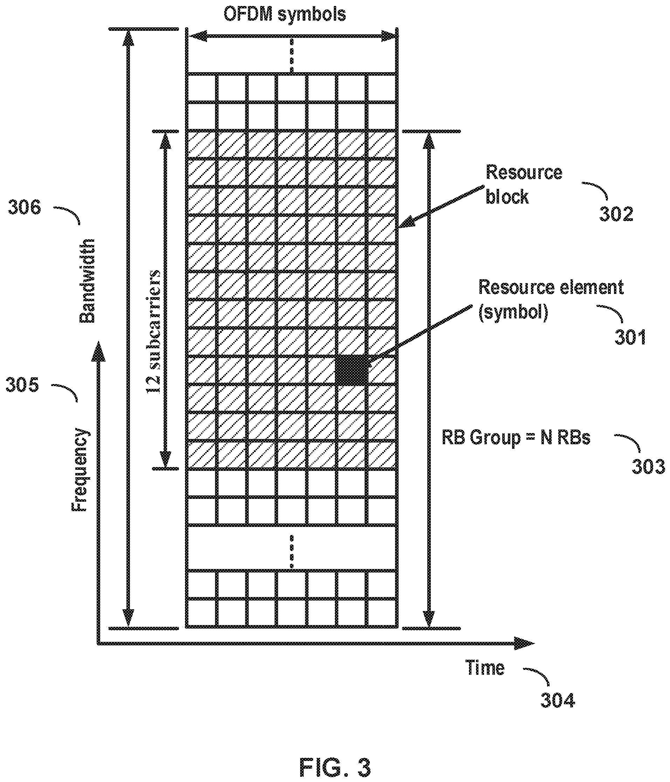

FIG. 3 shows an example of OFDM radio resources, including a resource grid structure in time 304 and frequency 305. The quantity of downlink subcarriers or RBs may depend, at least in part, on the downlink transmission bandwidth 306 configured in the cell. The smallest radio resource unit may be called a resource element (e.g., 301). Resource elements may be grouped into resource blocks (e.g., 302). Resource blocks may be grouped into larger radio resources called Resource Block Groups (RBG) (e.g., 303). The transmitted signal in slot 206 may be described by one or several resource grids of a plurality of subcarriers and a plurality of OFDM symbols. Resource blocks may be used to describe the mapping of certain physical channels to resource elements. Other pre-defined groupings of physical resource elements may be implemented in the system depending on the radio technology. For example, 24 subcarriers may be grouped as a radio block for a duration of 5 msec. A resource block may correspond to one slot in the time domain and 180 kHz in the frequency domain (for 15 kHz subcarrier bandwidth and 12 subcarriers).

Multiple numerologies may be supported. A numerology may be derived by scaling a basic subcarrier spacing by an integer N. Scalable numerology may allow at least from 15 kHz to 480 kHz subcarrier spacing. The numerology with 15 kHz and scaled numerology with different subcarrier spacing with the same CP overhead may align at a symbol boundary every 1 msec in a NR carrier.

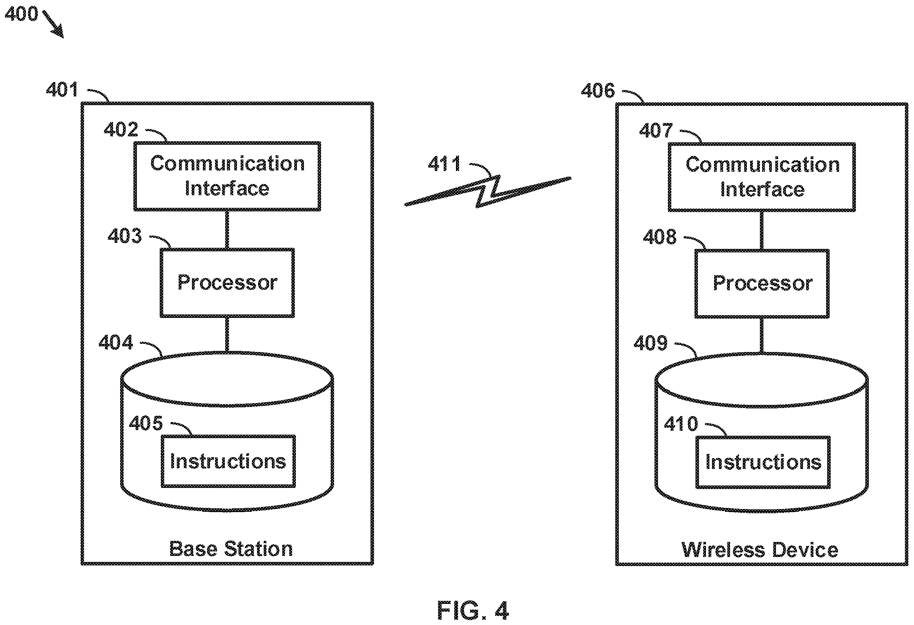

FIG. 4 shows hardware elements of a base station 401 and a wireless device 406. A communication network 400 may include at least one base station 401 and at least one wireless device 406. The base station 401 may include at least one communication interface 402, one or more processors 403, and at least one set of program code instructions 405 stored in non-transitory memory 404 and executable by the one or more processors 403. The wireless device 406 may include at least one communication interface 407, one or more processors 408, and at least one set of program code instructions 410 stored in non-transitory memory 409 and executable by the one or more processors 408. A communication interface 402 in the base station 401 may be configured to engage in communication with a communication interface 407 in the wireless device 406, such as via a communication path that includes at least one wireless link 411. The wireless link 411 may be a bi-directional link. The communication interface 407 in the wireless device 406 may also be configured to engage in communication with the communication interface 402 in the base station 401. The base station 401 and the wireless device 406 may be configured to send and receive data over the wireless link 411 using multiple frequency carriers. Base stations, wireless devices, and other communication devices may include structure and operations of transceiver(s). A transceiver is a device that includes both a transmitter and receiver. Transceivers may be employed in devices such as wireless devices, base stations, relay nodes, and/or the like. Examples for radio technology implemented in the communication interfaces 402, 407 and the wireless link 411 are shown in FIG. 1, FIG. 2, FIG. 3, FIG. 5, and associated text. The communication network 400 may comprise any number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network 400, and any other network referenced herein, may comprise an LTE network, a 5G network, or any other network for wireless communications. Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network. As used throughout, the term "base station" may comprise one or more of: a base station, a node, a Node B, a gNB, an eNB, an ng-eNB, a relay node (e.g., an integrated access and backhaul (IAB) node), a donor node (e.g., a donor eNB, a donor gNB, etc.), an access point (e.g., a WiFi access point), a computing device, a device capable of wirelessly communicating, or any other device capable of sending and/or receiving signals. As used throughout, the term "wireless device" may comprise one or more of: a UE, a handset, a mobile device, a computing device, a node, a device capable of wirelessly communicating, or any other device capable of sending and/or receiving signals. Any reference to one or more of these terms/devices also considers use of any other term/device mentioned above.

The communications network 400 may comprise Radio Access Network (RAN) architecture. The RAN architecture may comprise one or more RAN nodes that may be a next generation Node B (gNB) (e.g., 401) providing New Radio (NR) user plane and control plane protocol terminations towards a first wireless device (e.g. 406). A RAN node may be a next generation evolved Node B (ng-eNB), providing Evolved UMTS Terrestrial Radio Access (E-UTRA) user plane and control plane protocol terminations towards a second wireless device. The first wireless device may communicate with a gNB over a Uu interface. The second wireless device may communicate with a ng-eNB over a Uu interface. Base station 401 may comprise one or more of a gNB, ng-eNB, and/or the like.

A gNB or an ng-eNB may host functions such as: radio resource management and scheduling, IP header compression, encryption and integrity protection of data, selection of Access and Mobility Management Function (AMF) at User Equipment (UE) attachment, routing of user plane and control plane data, connection setup and release, scheduling and transmission of paging messages (originated from the AMF), scheduling and transmission of system broadcast information (originated from the AMF or Operation and Maintenance (O&M)), measurement and measurement reporting configuration, transport level packet marking in the uplink, session management, support of network slicing, Quality of Service (QoS) flow management and mapping to data radio bearers, support of wireless devices in RRC_INACTIVE state, distribution function for Non-Access Stratum (NAS) messages, RAN sharing, and dual connectivity or tight interworking between NR and E-UTRA.

One or more gNBs and/or one or more ng-eNBs may be interconnected with each other by means of Xn interface. A gNB or an ng-eNB may be connected by means of NG interfaces to 5G Core Network (5GC). 5GC may comprise one or more AMF/User Plane Function (UPF) functions. A gNB or an ng-eNB may be connected to a UPF by means of an NG-User plane (NG-U) interface. The NG-U interface may provide delivery (e.g., non-guaranteed delivery) of user plane Protocol Data Units (PDUs) between a RAN node and the UPF. A gNB or an ng-eNB may be connected to an AMF by means of an NG-Control plane (e.g., NG-C) interface. The NG-C interface may provide functions such as NG interface management, UE context management, UE mobility management, transport of NAS messages, paging, PDU session management, configuration transfer or warning message transmission.

A UPF may host functions such as anchor point for intra-/inter-Radio Access Technology (RAT) mobility (if applicable), external PDU session point of interconnect to data network, packet routing and forwarding, packet inspection and user plane part of policy rule enforcement, traffic usage reporting, uplink classifier to support routing traffic flows to a data network, branching point to support multi-homed PDU session, QoS handling for user plane, e.g. packet filtering, gating, Uplink (UL)/Downlink (DL) rate enforcement, uplink traffic verification (e.g. Service Data Flow (SDF) to QoS flow mapping), downlink packet buffering and/or downlink data notification triggering.

An AMF may host functions such as NAS signaling termination, NAS signaling security, Access Stratum (AS) security control, inter Core Network (CN) node signaling for mobility between 3rd Generation Partnership Project (3GPP) access networks, idle mode UE reachability (e.g., control and execution of paging retransmission), registration area management, support of intra-system and inter-system mobility, access authentication, access authorization including check of roaming rights, mobility management control (subscription and policies), support of network slicing and/or Session Management Function (SMF) selection

An interface may be a hardware interface, a firmware interface, a software interface, and/or a combination thereof. The hardware interface may include connectors, wires, electronic devices such as drivers, amplifiers, and/or the like. A software interface may include code stored in a memory device to implement protocol(s), protocol layers, communication drivers, device drivers, combinations thereof, and/or the like. A firmware interface may include a combination of embedded hardware and code stored in and/or in communication with a memory device to implement connections, electronic device operations, protocol(s), protocol layers, communication drivers, device drivers, hardware operations, combinations thereof, and/or the like.

The term configured may relate to the capacity of a device whether the device is in an operational or a non-operational state. Configured may also refer to specific settings in a device that effect the operational characteristics of the device whether the device is in an operational or a non-operational state. In other words, the hardware, software, firmware, registers, memory values, and/or the like may be "configured" within a device, whether the device is in an operational or a nonoperational state, to provide the device with specific characteristics. Terms such as "a control message to cause in a device" may mean that a control message has parameters that may be used to configure specific characteristics in the device, whether the device is in an operational or a non-operational state.

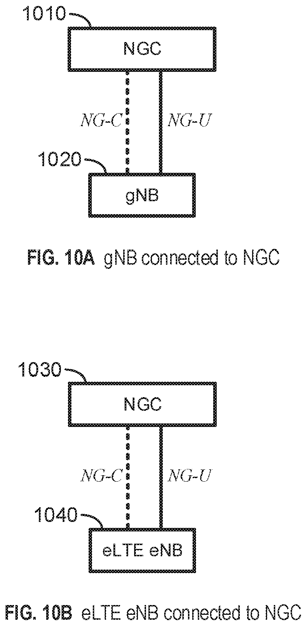

A 5G network may include a multitude of base stations, providing a user plane NR PDCP/NR RLC/NR MAC/NR PHY and control plane (NR RRC) protocol terminations towards the wireless device. The base station(s) may be interconnected with other base station(s) (e.g., employing an Xn interface). The base stations may also be connected employing, for example, an NG interface to an NGC. FIG. 10A and FIG. 10B show examples for interfaces between a 5G core network (e.g., NGC) and base stations (e.g., gNB and eLTE eNB). For example, the base stations may be interconnected to the NGC control plane (e.g., NG CP) employing the NG-C interface and to the NGC user plane (e.g., UPGW) employing the NG-U interface. The NG interface may support a many-to-many relation between 5G core networks and base stations.

A base station may include many sectors, for example: 1, 2, 3, 4, or 6 sectors. A base station may include many cells, for example, ranging from 1 to 50 cells or more. A cell may be categorized, for example, as a primary cell or secondary cell. At RRC connection establishment/re-establishment/handover, one serving cell may provide the NAS (non-access stratum) mobility information (e.g., TAI), and at RRC connection re-establishment/handover, one serving cell may provide the security input. This cell may be referred to as the Primary Cell (PCell). In the downlink, the carrier corresponding to the PCell may be the Downlink Primary Component Carrier (DL PCC); in the uplink, the carrier corresponding to the PCell may be the Uplink Primary Component Carrier (UL PCC). Depending on wireless device capabilities, Secondary Cells (SCells) may be configured to form together with the PCell a set of serving cells. In the downlink, the carrier corresponding to an SCell may be a Downlink Secondary Component Carrier (DL SCC); in the uplink, the carrier corresponding to an SCell may be an Uplink Secondary Component Carrier (UL SCC). An SCell may or may not have an uplink carrier.

A cell, comprising a downlink carrier and optionally an uplink carrier, may be assigned a physical cell ID and a cell index. A carrier (downlink or uplink) may belong to only one cell. The cell ID or cell index may also identify the downlink carrier or uplink carrier of the cell (depending on the context in which it is used). The cell ID may be equally referred to a carrier ID, and cell index may be referred to carrier index. In implementation, the physical cell ID or cell index may be assigned to a cell. A cell ID may be determined using a synchronization signal transmitted on a downlink carrier. A cell index may be determined using RRC messages. For example, reference to a first physical cell ID for a first downlink carrier may indicate that the first physical cell ID is for a cell comprising the first downlink carrier. The same concept may apply to, for example, carrier activation. Reference to a first carrier that is activated may indicate that the cell comprising the first carrier is activated.

A device be configured to operate as needed by freely combining any of the examples. The disclosed mechanisms may be performed if certain criteria are met, for example, in a wireless device, a base station, a radio environment, a network, a combination of the above, and/or the like. Example criteria may be based, at least in part, on for example, traffic load, initial system set up, packet sizes, traffic characteristics, a combination of the above, and/or the like. One or more criteria may be satisfied. It may be possible to implement examples that selectively implement disclosed protocols.

A base station may communicate with a variety of wireless devices. Wireless devices may support multiple technologies, and/or multiple releases of the same technology. Wireless devices may have some specific capability(ies) depending on its wireless device category and/or capability(ies). A base station may comprise multiple sectors. Reference to a base station communicating with a plurality of wireless devices may indicate that a base station may communicate with a subset of the total wireless devices in a coverage area. A plurality of wireless devices of a given LTE or 5G release, with a given capability and in a given sector of the base station, may be used. The plurality of wireless devices may refer to a selected plurality of wireless devices, and/or a subset of total wireless devices in a coverage area which perform according to disclosed methods, and/or the like. There may be a plurality of wireless devices in a coverage area that may not comply with the disclosed methods, for example, because those wireless devices perform based on older releases of LTE or 5G technology.

A base station may transmit (e.g., to a wireless device) one or more messages (e.g. RRC messages) that may comprise a plurality of configuration parameters for one or more cells. One or more cells may comprise at least one primary cell and at least one secondary cell. An RRC message may be broadcasted or unicasted to the wireless device. Configuration parameters may comprise common parameters and dedicated parameters.

Services and/or functions of an RRC sublayer may comprise at least one of: broadcast of system information related to AS and NAS; paging initiated by 5GC and/or NG-RAN; establishment, maintenance, and/or release of an RRC connection between a wireless device and NG-RAN, which may comprise at least one of addition, modification and release of carrier aggregation; or addition, modification, and/or release of dual connectivity in NR or between E-UTRA and NR. Services and/or functions of an RRC sublayer may further comprise at least one of security functions comprising key management; establishment, configuration, maintenance, and/or release of Signaling Radio Bearers (SRBs) and/or Data Radio Bearers (DRBs); mobility functions which may comprise at least one of a handover (e.g. intra NR mobility or inter-RAT mobility) and a context transfer; or a wireless device cell selection and reselection and control of cell selection and reselection. Services and/or functions of an RRC sublayer may further comprise at least one of QoS management functions; a wireless device measurement configuration/reporting; detection of and/or recovery from radio link failure; or NAS message transfer to/from a core network entity (e.g. AMF, Mobility Management Entity (MME)) from/to the wireless device.

An RRC sublayer may support an RRC_Idle state, an RRC_Inactive state and/or an RRC_Connected state for a wireless device. In an RRC_Idle state, a wireless device may perform at least one of: Public Land Mobile Network (PLMN) selection; receiving broadcasted system information; cell selection/re-selection; monitoring/receiving a paging for mobile terminated data initiated by 5GC; paging for mobile terminated data area managed by 5GC; or DRX for CN paging configured via NAS. In an RRC_Inactive state, a wireless device may perform at least one of: receiving broadcasted system information; cell selection/re-selection; monitoring/receiving a RAN/CN paging initiated by NG-RAN/5GC; RAN-based notification area (RNA) managed by NG-RAN; or DRX for RAN/CN paging configured by NG-RAN/NAS. In an RRC_Idle state of a wireless device, a base station (e.g. NG-RAN) may keep a 5GC-NG-RAN connection (both C/U-planes) for the wireless device; and/or store a UE AS context for the wireless device. In an RRC_Connected state of a wireless device, a base station (e.g. NG-RAN) may perform at least one of: establishment of 5GC-NG-RAN connection (both C/U-planes) for the wireless device; storing a UE AS context for the wireless device; transmit/receive of unicast data to/from the wireless device; or network-controlled mobility based on measurement results received from the wireless device. In an RRC_Connected state of a wireless device, an NG-RAN may know a cell that the wireless device belongs to.

System information (SI) may be divided into minimum SI and other SI. The minimum SI may be periodically broadcast. The minimum SI may comprise basic information required for initial access and information for acquiring any other SI broadcast periodically or provisioned on-demand, i.e. scheduling information. The other SI may either be broadcast, or be provisioned in a dedicated manner, either triggered by a network or upon request from a wireless device. A minimum SI may be transmitted via two different downlink channels using different messages (e.g. MasterInformation-Block and SystemInformationBlockType1). The other SI may be transmitted via SystemInformationBlockType2. For a wireless device in an RRC_Connected state, dedicated RRC signaling may be employed for the request and delivery of the other SI. For the wireless device in the RRC_Idle state and/or the RRC_Inactive state, the request may trigger a random-access procedure.

A wireless device may send its radio access capability information which may be static. A base station may request what capabilities for a wireless device to report based on band information. If allowed by a network, a temporary capability restriction request may be sent by the wireless device to signal the limited availability of some capabilities (e.g. due to hardware sharing, interference or overheating) to the base station. The base station may confirm or reject the request. The temporary capability restriction may be transparent to 5GC (e.g., static capabilities may be stored in 5GC).

If CA is configured, a wireless device may have an RRC connection with a network. At RRC connection establishment/re-establishment/handover procedure, one serving cell may provide NAS mobility information, and at RRC connection re-establishment/handover, one serving cell may provide a security input. This cell may be referred to as the PCell. Depending on the capabilities of the wireless device, SCells may be configured to form together with the PCell a set of serving cells. The configured set of serving cells for the wireless device may comprise one PCell and one or more SCells.

The reconfiguration, addition and removal of SCells may be performed by RRC. At intra-NR handover, RRC may also add, remove, or reconfigure SCells for usage with the target PCell. If adding a new SCell, dedicated RRC signaling may be employed to send all required system information of the SCell. In connected mode, wireless devices may not need to acquire broadcasted system information directly from the SCells.

An RRC connection reconfiguration procedure may be used to modify an RRC connection, (e.g. to establish, modify and/or release RBs, to perform handover, to setup, modify, and/or release measurements, to add, modify, and/or release SCells and cell groups). As part of the RRC connection reconfiguration procedure, NAS dedicated information may be transferred from the network to the wireless device. The RRCConnectionReconfiguration message may be a command to modify an RRC connection. It may convey information for measurement configuration, mobility control, radio resource configuration (e.g. RBs, MAC main configuration and physical channel configuration) comprising any associated dedicated NAS information and security configuration. If the received RRC Connection Reconfiguration message includes the sCellToReleaseList, the wireless device may perform an SCell release. If the received RRC Connection Reconfiguration message includes the sCellToAddModList, the wireless device may perform SCell additions or modification.

An RRC connection establishment (or reestablishment, resume) procedure may be used to establish (or reestablish, resume) an RRC connection. An RRC connection establishment procedure may comprise SRB1 establishment. The RRC connection establishment procedure may be used to transfer the initial NAS dedicated information message from a wireless device to E-UTRAN. The RRCConnectionReestablishment message may be used to re-establish SRB1.

A measurement report procedure may be to transfer measurement results from a wireless device to NG-RAN. The wireless device may initiate a measurement report procedure, e.g., after successful security activation. A measurement report message may be employed to transmit measurement results.

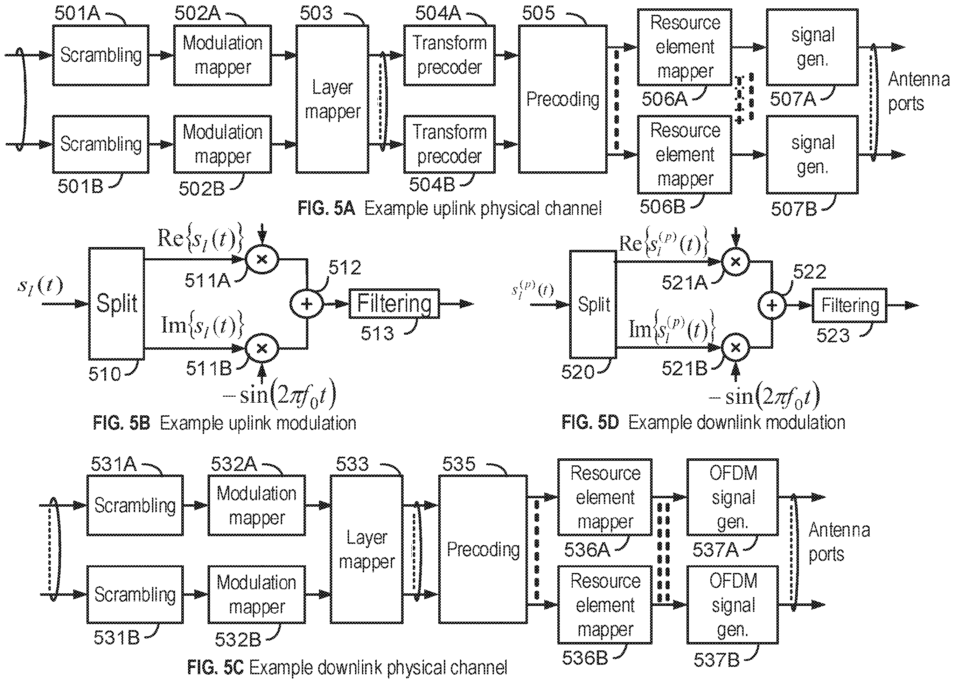

FIG. 5A, FIG. 5B, FIG. 5C, and FIG. 5D show examples of architecture for uplink and downlink signal transmission. FIG. 5A shows an example for an uplink physical channel. The baseband signal representing the physical uplink shared channel may be processed according to the following processes, which may be performed by structures described below. These structures and corresponding functions are shown as examples, however, it is anticipated that other structures and/or functions may be implemented in various examples. The structures and corresponding functions may comprise, e.g., one or more scrambling devices 501A and 501B configured to perform scrambling of coded bits in each of the codewords to be transmitted on a physical channel; one or more modulation mappers 502A and 502B configured to perform modulation of scrambled bits to generate complex-valued symbols; a layer mapper 503 configured to perform mapping of the complex-valued modulation symbols onto one or several transmission layers; one or more transform precoders 504A and 504B to generate complex-valued symbols; a precoding device 505 configured to perform precoding of the complex-valued symbols; one or more resource element mappers 506A and 506B configured to perform mapping of precoded complex-valued symbols to resource elements; one or more signal generators 507A and 507B configured to perform the generation of a complex-valued time-domain DFTS-OFDM/SC-FDMA signal for each antenna port; and/or the like.

FIG. 5B shows an example for performing modulation and up-conversion to the carrier frequency of the complex-valued DFTS-OFDM/SC-FDMA baseband signal, e.g., for each antenna port and/or for the complex-valued physical random access channel (PRACH) baseband signal. For example, the baseband signal, represented as $s1(t),$ may be split, by a signal splitter 510, into real and imaginary components, Re{$s1(t)$} and Im{$s1(t)$}, respectively. The real component may be modulated by a modulator 511A, and the imaginary component may be modulated by a modulator 511B. The output signal of the modulator 511A and the output signal of the modulator 511B may be mixed by a mixer 512. The output signal of the mixer 512 may be input to a filtering device 513, and filtering may be employed by the filtering device 513 prior to transmission.

FIG. 5C shows an example structure for downlink transmissions. The baseband signal representing a downlink physical channel may be processed by the following processes, which may be performed by structures described below. These structures and corresponding functions are shown as examples, however, it is anticipated that other structures and/or functions may be implemented in various examples. The structures and corresponding functions may comprise, e.g., one or more scrambling devices 531A and 531B configured to perform scrambling of coded bits in each of the codewords to be transmitted on a physical channel; one or more modulation mappers 532A and 532B configured to perform modulation of scrambled bits to generate complex-valued modulation symbols; a layer mapper 533 configured to perform mapping of the complex-valued modulation symbols onto one or several transmission layers; a precoding device 534 configured to perform precoding of the complex-valued modulation symbols on each layer for transmission on the antenna ports; one or more resource element mappers 535A and 535B configured to perform mapping of complex-valued modulation symbols for each antenna port to resource elements; one or more OFDM signal generators 536A and 536B configured to perform the generation of complex-valued time-domain OFDM signal for each antenna port; and/or the like.

FIG. 5D shows an example structure for modulation and up-conversion to the carrier frequency of the complex-valued OFDM baseband signal for each antenna port. For example, the baseband signal, represented as $sl(p)(t),$ may be split, by a signal splitter 520, into real and imaginary components, Re{$s1(p)(t)$} and Im{$s1(p)(t)$}, respectively. The real component may be modulated by a modulator 521A, and the imaginary component may be modulated by a modulator 521B. The output signal of the modulator 521A and the output signal of the modulator 521B may be mixed by a mixer 522. The output signal of the mixer 522 may be input to a filtering device 523, and filtering may be employed by the filtering device 523 prior to transmission.

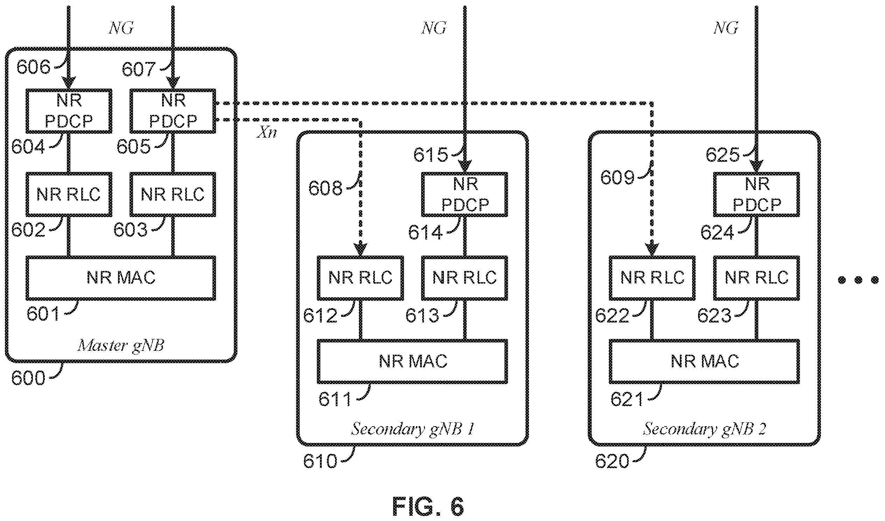

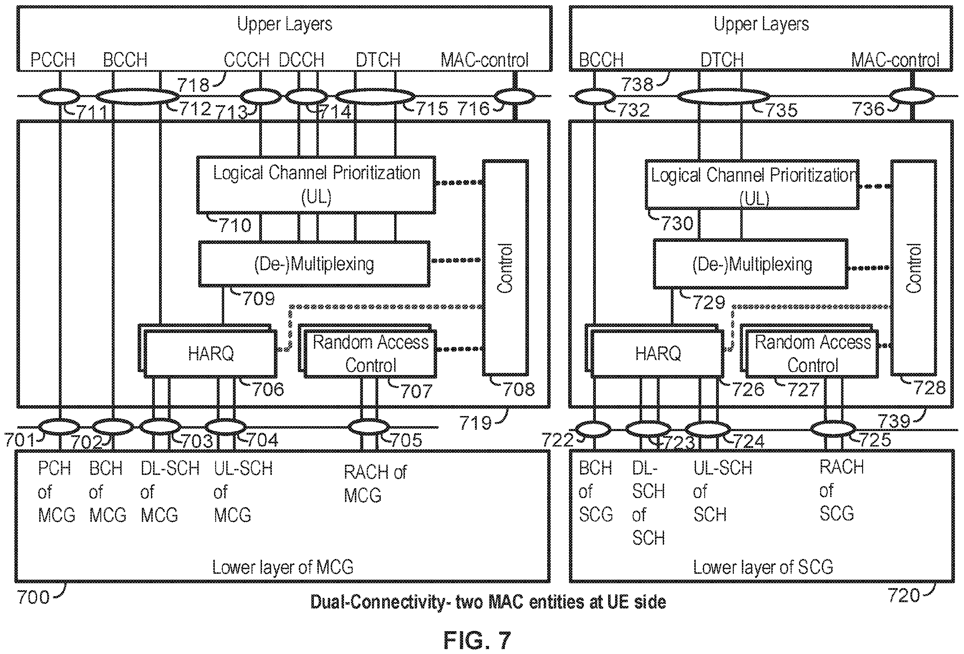

FIG. 6 and FIG. 7 show examples for protocol structures with CA and multi-connectivity. NR may support multi-connectivity operation, whereby a multiple receiver/transmitter (RX/TX) wireless device in RRC_CONNECTED may be configured to utilize radio resources provided by multiple schedulers located in multiple gNBs connected via a non-ideal or ideal backhaul over the Xn interface. gNBs involved in multi-connectivity for a certain wireless device may assume two different roles: a gNB may either act as a master gNB (e.g., 600) or as a secondary gNB (e.g., 610 or 620). In multi-connectivity, a wireless device may be connected to one master gNB (e.g., 600) and one or more secondary gNBs (e.g., 610 and/or 620). Any one or more of the Master gNB 600 and/or the secondary gNBs 610 and 620 may be a Next Generation (NG) NodeB. The master gNB 600 may comprise protocol layers NR MAC 601, NR RLC 602 and 603, and NR PDCP 604 and 605. The secondary gNB may comprise protocol layers NR MAC 611, NR RLC 612 and 613, and NR PDCP 614. The secondary gNB may comprise protocol layers NR MAC 621, NR RLC 622 and 623, and NR PDCP 624. The master gNB 600 may communicate via an interface 606 and/or via an interface 607, the secondary gNB 610 may communicate via an interface 615, and the secondary gNB 620 may communicate via an interface 625. The master gNB 600 may also communicate with the secondary gNB 610 and the secondary gNB 621 via interfaces 608 and 609, respectively, which may include Xn interfaces. For example, the master gNB 600 may communicate via the interface 608, at layer NR PDCP 605, and with the secondary gNB 610 at layer NR RLC 612. The master gNB 600 may communicate via the interface 609, at layer NR PDCP 605, and with the secondary gNB 620 at layer NR RLC 622.

FIG. 7 shows an example structure for the UE side MAC entities, e.g., if a Master Cell Group (MCG) and a Secondary Cell Group (SCG) are configured. Media Broadcast Multicast Service (MBMS) reception may be included but is not shown in this figure for simplicity.

In multi-connectivity, the radio protocol architecture that a particular bearer uses may depend on how the bearer is set up. As an example, three alternatives may exist, an MCG bearer, an SCG bearer, and a split bearer, such as shown in FIG. 6. NR RRC may be located in a master gNB and SRBs may be configured as a MCG bearer type and may use the radio resources of the master gNB. Multi-connectivity may have at least one bearer configured to use radio resources provided by the secondary gNB. Multi-connectivity may or may not be configured or implemented.

For multi-connectivity, the wireless device may be configured with multiple NR MAC entities: e.g., one NR MAC entity for a master gNB, and other NR MAC entities for secondary gNBs. In multi-connectivity, the configured set of serving cells for a wireless device may comprise two subsets: e.g., the Master Cell Group (MCG) including the serving cells of the master gNB, and the Secondary Cell Groups (SCGs) including the serving cells of the secondary gNBs.

At least one cell in a SCG may have a configured UL component carrier (CC) and one of the UL CCs, e.g., named PSCell (or PCell of SCG, or sometimes called PCell), may be configured with PUCCH resources. If the SCG is configured, there may be at least one SCG bearer or one split bearer. If a physical layer problem or a random access problem on a PSCell occurs or is detected, if the maximum number of NR RLC retransmissions has been reached associated with the SCG, or if an access problem on a PSCell during a SCG addition or a SCG change occurs or is detected, then an RRC connection re-establishment procedure may not be triggered, UL transmissions towards cells of the SCG may be stopped, a master gNB may be informed by the wireless device of a SCG failure type, and for a split bearer the DL data transfer over the master gNB may be maintained. The NR RLC Acknowledge Mode (AM) bearer may be configured for the split bearer. Like the PCell, a PSCell may not be de-activated. The PSCell may be changed with an SCG change (e.g., with a security key change and a RACH procedure). A direct bearer type may change between a split bearer and an SCG bearer, or a simultaneous configuration of an SCG and a split bearer may or may not be supported.

A master gNB and secondary gNBs may interact for multi-connectivity. The master gNB may maintain the RRM measurement configuration of the wireless device, and the master gNB may, (e.g., based on received measurement reports, and/or based on traffic conditions and/or bearer types), decide to ask a secondary gNB to provide additional resources (e.g., serving cells) for a wireless device. If a request from the master gNB is received, a secondary gNB may create a container that may result in the configuration of additional serving cells for the wireless device (or the secondary gNB decide that it has no resource available to do so). For wireless device capability coordination, the master gNB may provide some or all of the Active Set (AS) configuration and the wireless device capabilities to the secondary gNB. The master gNB and the secondary gNB may exchange information about a wireless device configuration, such as by employing NR RRC containers (e.g., inter-node messages) carried in Xn messages. The secondary gNB may initiate a reconfiguration of its existing serving cells (e.g., PUCCH towards the secondary gNB). The secondary gNB may decide which cell is the PSCell within the SCG. The master gNB may or may not change the content of the NR RRC configuration provided by the secondary gNB. In an SCG addition and an SCG SCell addition, the master gNB may provide the latest measurement results for the SCG cell(s). Both a master gNB and a secondary gNBs may know the system frame number (SFN) and subframe offset of each other by operations, administration, and maintenance (OAM) (e.g., for the purpose of discontinuous reception (DRX) alignment and identification of a measurement gap). If adding a new SCG SCell, dedicated NR RRC signaling may be used for sending required system information of the cell for CA, except, e.g., for the SFN acquired from an MIB of the PSCell of an SCG.

FIG. 7 shows an example of dual-connectivity (DC) for two MAC entities at a wireless device side. A first MAC entity may comprise a lower layer of an MCG 700, an upper layer of an MCG 718, and one or more intermediate layers of an MCG 719. The lower layer of the MCG 700 may comprise, e.g., a paging channel (PCH) 701, a broadcast channel (BCH) 702, a downlink shared channel (DL-SCH) 703, an uplink shared channel (UL-SCH) 704, and a random access channel (RACH) 705. The one or more intermediate layers of the MCG 719 may comprise, e.g., one or more hybrid automatic repeat request (HARQ) processes 706, one or more random access control processes 707, multiplexing and/or de-multiplexing processes 709, logical channel prioritization on the uplink processes 710, and a control processes 708 providing control for the above processes in the one or more intermediate layers of the MCG 719. The upper layer of the MCG 718 may comprise, e.g., a paging control channel (PCCH) 711, a broadcast control channel (BCCH) 712, a common control channel (CCCH) 713, a dedicated control channel (DCCH) 714, a dedicated traffic channel (DTCH) 715, and a MAC control 716.

A second MAC entity may comprise a lower layer of an SCG 720, an upper layer of an SCG 738, and one or more intermediate layers of an SCG 739. The lower layer of the SCG 720 may comprise, e.g., a BCH 722, a DL-SCH 723, an UL-SCH 724, and a RACH 725. The one or more intermediate layers of the SCG 739 may comprise, e.g., one or more HARQ processes 726, one or more random access control processes 727, multiplexing and/or de-multiplexing processes 729, logical channel prioritization on the uplink processes 730, and a control processes 728 providing control for the above processes in the one or more intermediate layers of the SCG 739. The upper layer of the SCG 738 may comprise, e.g., a BCCH 732, a DCCH 714, a DTCH 735, and a MAC control 736.

Serving cells may be grouped in a TA group (TAG). Serving cells in one TAG may use the same timing reference. For a given TAG, a wireless device may use at least one downlink carrier as a timing reference. For a given TAG, a wireless device may synchronize uplink subframe and frame transmission timing of uplink carriers belonging to the same TAG. Serving cells having an uplink to which the same TA applies may correspond to serving cells hosted by the same receiver. A wireless device supporting multiple TAs may support two or more TA groups. One TA group may include the PCell and may be called a primary TAG (pTAG). In a multiple TAG configuration, at least one TA group may not include the PCell and may be called a secondary TAG (sTAG). Carriers within the same TA group may use the same TA value and/or the same timing reference. If DC is configured, cells belonging to a cell group (e.g., MCG or SCG) may be grouped into multiple TAGs including a pTAG and one or more sTAGs.

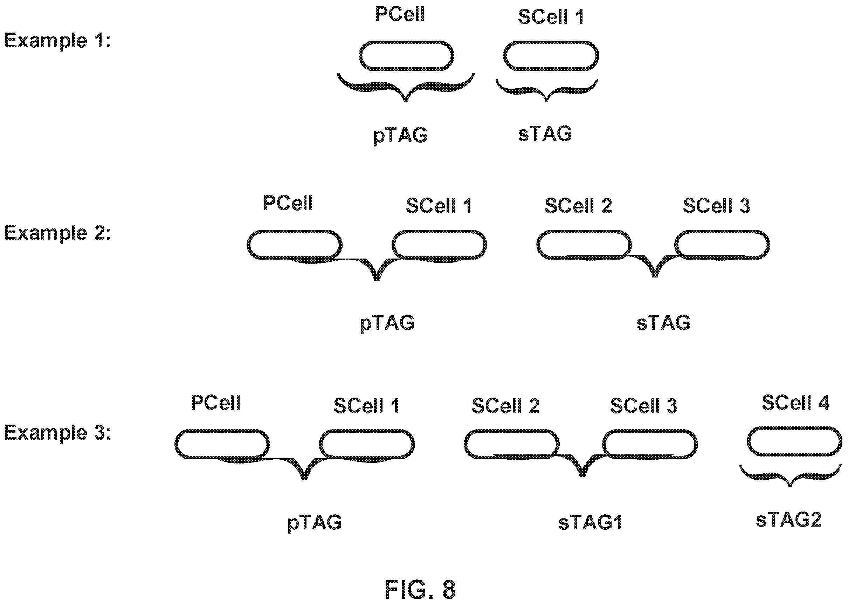

FIG. 8 shows example TAG configurations. In Example 1, a pTAG comprises a PCell, and an sTAG comprises an SCell1. In Example 2, a pTAG comprises a PCell and an SCell1, and an sTAG comprises an SCell2 and an SCell3. In Example 3, a pTAG comprises a PCell and an SCell1, and an sTAG1 comprises an SCell2 and an SCell3, and an sTAG2 comprises a SCell4. Up to four TAGs may be supported in a cell group (MCG or SCG), and other example TAG configurations may also be provided. In various examples, structures and operations are described for use with a pTAG and an sTAG. Some of the examples may be used for configurations with multiple sTAGs.

An eNB may initiate an RA procedure, via a PDCCH order, for an activated SCell. The PDCCH order may be sent on a scheduling cell of this SCell. If cross carrier scheduling is configured for a cell, the scheduling cell may be different than the cell that is employed for preamble transmission, and the PDCCH order may include an SCell index. At least a non-contention based RA procedure may be supported for SCell(s) assigned to sTAG(s).

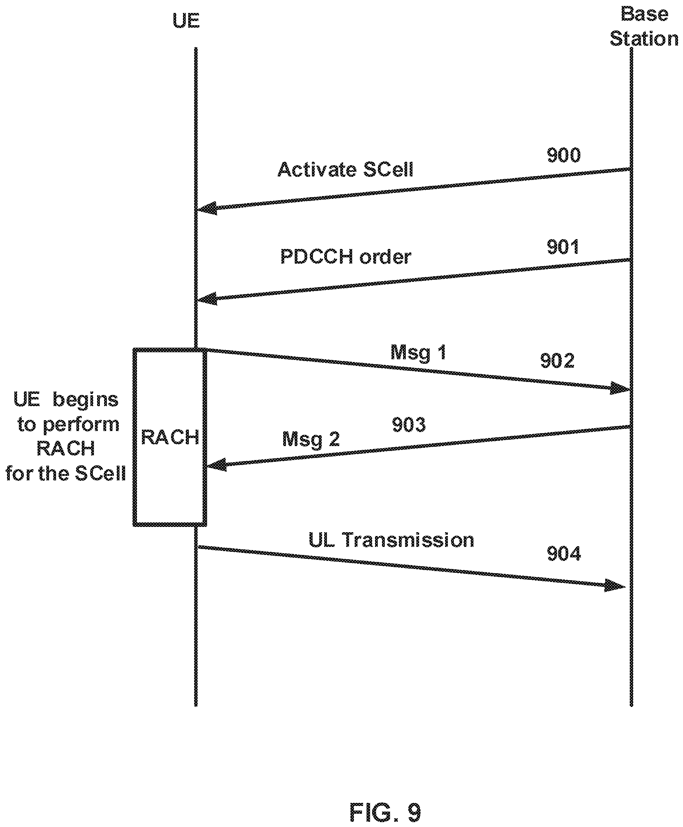

FIG. 9 shows an example of random access processes, and a corresponding message flow, in a secondary TAG. A base station, such as an eNB, may transmit an activation command 900 to a wireless device, such as a UE. The activation command 900 may be transmitted to activate an SCell. The base station may also transmit a PDDCH order 901 to the wireless device, which may be transmitted, e.g., after the activation command 900. The wireless device may begin to perform a RACH process for the SCell, which may be initiated, e.g., after receiving the PDDCH order 901. A wireless device may transmit to the base station (e.g., as part of a RACH process) a preamble 902 (e.g., Msg1), such as a random access preamble (RAP). The preamble 902 may be transmitted in response to the PDCCH order 901. The wireless device may transmit the preamble 902 via an SCell belonging to an sTAG. Preamble transmission for SCells may be controlled by a network using PDCCH format 1A. The base station may send a random access response (RAR) 903 (e.g., Msg2 message) to the wireless device. The RAR 903 may be in response to the preamble 902 transmission via the SCell. The RAR 903 may be addressed to a random access radio network temporary identifier (RA-RNTI) in a PCell common search space (CSS). If the wireless device receives the RAR 903, the RACH process may conclude. The RACH process may conclude, e.g., after or in response to the wireless device receiving the RAR 903 from the base station. After the RACH process, the wireless device may transmit an uplink transmission 904. The uplink transmission 904 may comprise uplink packets transmitted via the same SCell used for the preamble 902 transmission.

Initial timing alignment for communications between the wireless device and the base station may be performed through a random access procedure, such as described above regarding FIG. 9. The random access procedure may involve a wireless device, such as a UE, transmitting a random access preamble and a base station, such as an eNB, responding with an initial TA command NTA (amount of timing advance) within a random access response window. The start of the random access preamble may be aligned with the start of a corresponding uplink subframe at the wireless device assuming NTA=0. The eNB may estimate the uplink timing from the random access preamble transmitted by the wireless device. The TA command may be derived by the eNB based on the estimation of the difference between the desired UL timing and the actual UL timing. The wireless device may determine the initial uplink transmission timing relative to the corresponding downlink of the sTAG on which the preamble is transmitted.

The mapping of a serving cell to a TAG may be configured by a serving eNB with RRC signaling. The mechanism for TAG configuration and reconfiguration may be based on RRC signaling. If an eNB performs an SCell addition configuration, the related TAG configuration may be configured for the SCell. An eNB may modify the TAG configuration of an SCell by removing (e.g., releasing) the SCell and adding (e.g., configuring) a new SCell (with the same physical cell ID and frequency) with an updated TAG ID. The new SCell with the updated TAG ID may initially be inactive subsequent to being assigned the updated TAG ID. The eNB may activate the updated new SCell and start scheduling packets on the activated SCell. In some examples, it may not be possible to change the TAG associated with an SCell, but rather, the SCell may need to be removed and a new SCell may need to be added with another TAG. For example, if there is a need to move an SCell from an sTAG to a pTAG, at least one RRC message, such as at least one RRC reconfiguration message, may be sent to the wireless device. The at least one RRC message may be sent to the wireless device to reconfigure TAG configurations, e.g., by releasing the SCell and configuring the SCell as a part of the pTAG. If, e.g., an SCell is added or configured without a TAG index, the SCell may be explicitly assigned to the pTAG. The PCell may not change its TA group and may be a member of the pTAG.

In LTE Release-10 and Release-11 CA, a PUCCH transmission is only transmitted on a PCell (e.g., a PSCell) to an eNB. In LTE-Release 12 and earlier, a wireless device may transmit PUCCH information on one cell (e.g., a PCell or a PSCell) to a given eNB. As the number of CA capable wireless devices increase, and as the number of aggregated carriers increase, the number of PUCCHs and the PUCCH payload size may increase. Accommodating the PUCCH transmissions on the PCell may lead to a high PUCCH load on the PCell. A PUCCH on an SCell may be used to offload the PUCCH resource from the PCell. More than one PUCCH may be configured. For example, a PUCCH on a PCell may be configured and another PUCCH on an SCell may be configured. One, two, or more cells may be configured with PUCCH resources for transmitting CSI, acknowledgment (ACK), and/or non-acknowledgment (NACK) to a base station. Cells may be grouped into multiple PUCCH groups, and one or more cell within a group may be configured with a PUCCH. In some examples, one SCell may belong to one PUCCH group. SCells with a configured PUCCH transmitted to a base station may be called a PUCCH SCell, and a cell group with a common PUCCH resource transmitted to the same base station may be called a PUCCH group.

A MAC entity may have a configurable timer, e.g., timeAlignmentTimer, per TAG. The timeAlignmentTimer may be used to control how long the MAC entity considers the serving cells belonging to the associated TAG to be uplink time aligned. If a Timing Advance Command MAC control element is received, the MAC entity may apply the Timing Advance Command for the indicated TAG; and/or the MAC entity may start or restart the timeAlignmentTimer associated with a TAG that may be indicated by the Timing Advance Command MAC control element. If a Timing Advance Command is received in a Random Access Response message for a serving cell belonging to a TAG, the MAC entity may apply the Timing Advance Command for this TAG and/or start or restart the timeAlignmentTimer associated with this TAG. Additionally or alternatively, if the Random Access Preamble is not selected by the MAC entity, the MAC entity may apply the Timing Advance Command for this TAG and/or start or restart the timeAlignmentTimer associated with this TAG. If the timeAlignmentTimer associated with this TAG is not running, the Timing Advance Command for this TAG may be applied, and the timeAlignmentTimer associated with this TAG may be started. If the contention resolution is not successful, a timeAlignmentTimer associated with this TAG may be stopped. If the contention resolution is successful, the MAC entity may ignore the received Timing Advance Command. The MAC entity may determine whether the contention resolution is successful or whether the contention resolution is not successful.

FIG. 10A and FIG. 10B show examples for interfaces between a 5G core network (e.g., NGC) and base stations (e.g., gNB and eLTE eNB). A base station, such as a gNB 1020, may be interconnected to an NGC 1010 control plane employing an NG-C interface. The base station, e.g., the gNB 1020, may also be interconnected to an NGC 1010 user plane (e.g., UPGW) employing an NG-U interface. As another example, a base station, such as an eLTE eNB 1040, may be interconnected to an NGC 1030 control plane employing an NG-C interface. The base station, e.g., the eLTE eNB 1040, may also be interconnected to an NGC 1030 user plane (e.g., UPGW) employing an NG-U interface. An NG interface may support a many-to-many relation between 5G core networks and base stations.

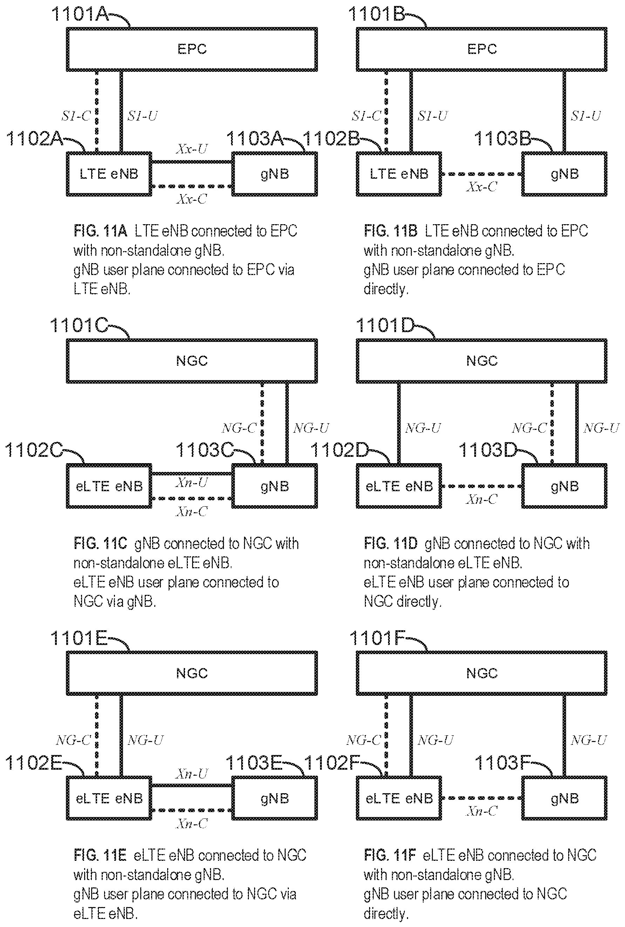

FIG. 11A, FIG. 11B, FIG. 11C, FIG. 11D, FIG. 11E, and FIG. 11F are examples for architectures of tight interworking between a 5G RAN and an LTE RAN. The tight interworking may enable a multiple receiver/transmitter (RX/TX) wireless device in an RRC_CONNECTED state to be configured to utilize radio resources provided by two schedulers located in two base stations (e.g., an eLTE eNB and a gNB). The two base stations may be connected via a non-ideal or ideal backhaul over the Xx interface between an LTE eNB and a gNB, or over the Xn interface between an eLTE eNB and a gNB. Base stations involved in tight interworking for a certain wireless device may assume different roles. For example, a base station may act as a master base station or a base station may act as a secondary base station. In tight interworking, a wireless device may be connected to both a master base station and a secondary base station. Mechanisms implemented in tight interworking may be extended to cover more than two base stations.

A master base station may be an LTE eNB 1102A or an LTE eNB 1102B, which may be connected to EPC nodes 1101A or 1101B, respectively. This connection to EPC nodes may be, e.g., to an MME via the S1-C interface and/or to an S-GW via the S1-U interface. A secondary base station may be a gNB 1103A or a gNB 1103B, either or both of which may be a non-standalone node having a control plane connection via an Xx-C interface to an LTE eNB (e.g., the LTE eNB 1102A or the LTE eNB 1102B). In the tight interworking architecture of FIG. 11A, a user plane for a gNB (e.g., the gNB 1103A) may be connected to an S-GW (e.g., the EPC 1101A) through an LTE eNB (e.g., the LTE eNB 1102A), via an Xx-U interface between the LTE eNB and the gNB, and via an S1-U interface between the LTE eNB and the S-GW. In the architecture of FIG. 11B, a user plane for a gNB (e.g., the gNB 1103B) may be connected directly to an S-GW (e.g., the EPC 1101B) via an S1-U interface between the gNB and the S-GW.

A master base station may be a gNB 1103C or a gNB 1103D, which may be connected to NGC nodes 1101C or 1101D, respectively. This connection to NGC nodes may be, e.g., to a control plane core node via the NG-C interface and/or to a user plane core node via the NG-U interface. A secondary base station may be an eLTE eNB 1102C or an eLTE eNB 1102D, either or both of which may be a non-standalone node having a control plane connection via an Xn-C interface to a gNB (e.g., the gNB 1103C or the gNB 1103D). In the tight interworking architecture of FIG. 11C, a user plane for an eLTE eNB (e.g., the eLTE eNB 1102C) may be connected to a user plane core node (e.g., the NGC 1101C) through a gNB (e.g., the gNB 1103C), via an Xn-U interface between the eLTE eNB and the gNB, and via an NG-U interface between the gNB and the user plane core node. In the architecture of FIG. 11D, a user plane for an eLTE eNB (e.g., the eLTE eNB 1102D) may be connected directly to a user plane core node (e.g., the NGC 1101D) via an NG-U interface between the eLTE eNB and the user plane core node.

A master base station may be an eLTE eNB 1102E or an eLTE eNB 1102F, which may be connected to NGC nodes 1101E or 1101F, respectively. This connection to NGC nodes may be, e.g., to a control plane core node via the NG-C interface and/or to a user plane core node via the NG-U interface. A secondary base station may be a gNB 1103E or a gNB 1103F, either or both of which may be a non-standalone node having a control plane connection via an Xn-C interface to an eLTE eNB (e.g., the eLTE eNB 1102E or the eLTE eNB 1102F). In the tight interworking architecture of FIG. 11E, a user plane for a gNB (e.g., the gNB 1103E) may be connected to a user plane core node (e.g., the NGC 1101E) through an eLTE eNB (e.g., the eLTE eNB 1102E), via an Xn-U interface between the eLTE eNB and the gNB, and via an NG-U interface between the eLTE eNB and the user plane core node. In the architecture of FIG. 11F, a user plane for a gNB (e.g., the gNB 1103F) may be connected directly to a user plane core node (e.g., the NGC 1101F) via an NG-U interface between the gNB and the user plane core node.

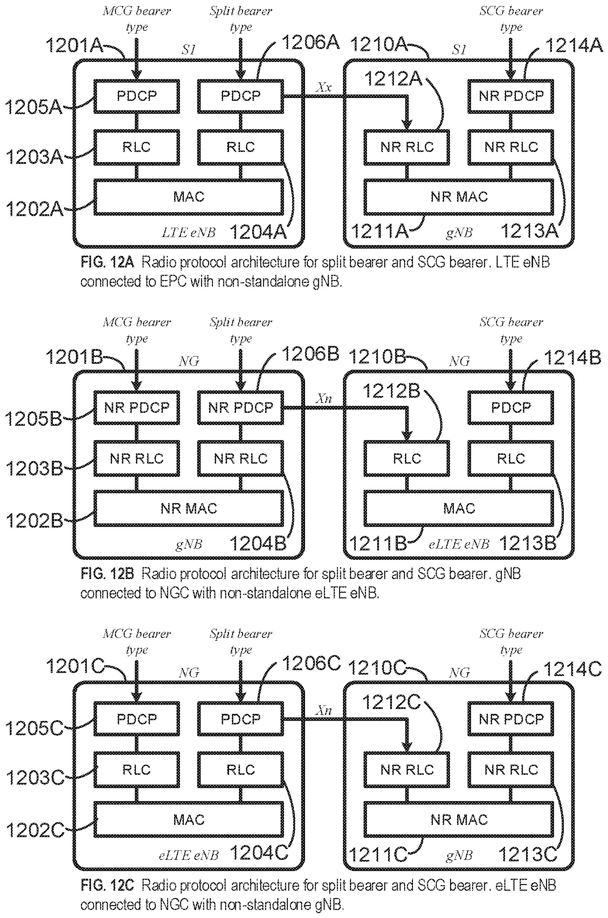

FIG. 12A, FIG. 12B, and FIG. 12C are examples for radio protocol structures of tight interworking bearers.

An LTE eNB 1201A may be an S1 master base station, and a gNB 1210A may be an S1 secondary base station. An example for a radio protocol architecture for a split bearer and an SCG bearer is shown. The LTE eNB 1201A may be connected to an EPC with a non-standalone gNB 1210A, via an Xx interface between the PDCP 1206A and an NR RLC 1212A. The LTE eNB 1201A may include protocol layers MAC 1202A, RLC 1203A and RLC 1204A, and PDCP 1205A and PDCP 1206A. An MCG bearer type may interface with the PDCP 1205A, and a split bearer type may interface with the PDCP 1206A. The gNB 1210A may include protocol layers NR MAC 1211A, NR RLC 1212A and NR RLC 1213A, and NR PDCP 1214A. An SCG bearer type may interface with the NR PDCP 1214A.

A gNB 1201B may be an NG master base station, and an eLTE eNB 1210B may be an NG secondary base station. An example for a radio protocol architecture for a split bearer and an SCG bearer is shown. The gNB 1201B may be connected to an NGC with a non-standalone eLTE eNB 1210B, via an Xn interface between the NR PDCP 1206B and an RLC 1212B. The gNB 1201B may include protocol layers NR MAC 1202B, NR RLC 1203B and NR RLC 1204B, and NR PDCP 1205B and NR PDCP 1206B. An MCG bearer type may interface with the NR PDCP 1205B, and a split bearer type may interface with the NR PDCP 1206B. The eLTE eNB 1210B may include protocol layers MAC 1211B, RLC 1212B and RLC 1213B, and PDCP 1214B. An SCG bearer type may interface with the PDCP 1214B.

An eLTE eNB 1201C may be an NG master base station, and a gNB 1210C may be an NG secondary base station. An example for a radio protocol architecture for a split bearer and an SCG bearer is shown. The eLTE eNB 1201C may be connected to an NGC with a non-standalone gNB 1210C, via an Xn interface between the PDCP 1206C and an NR RLC 1212C. The eLTE eNB 1201C may include protocol layers MAC 1202C, RLC 1203C and RLC 1204C, and PDCP 1205C and PDCP 1206C. An MCG bearer type may interface with the PDCP 1205C, and a split bearer type may interface with the PDCP 1206C. The gNB 1210C may include protocol layers NR MAC 1211C, NR RLC 1212C and NR RLC 1213C, and NR PDCP 1214C. An SCG bearer type may interface with the NR PDCP 1214C.

In a 5G network, the radio protocol architecture that a particular bearer uses may depend on how the bearer is setup. At least three alternatives may exist, e.g., an MCG bearer, an SCG bearer, and a split bearer, such as shown in FIG. 12A, FIG. 12B, and FIG. 12C. The NR RRC may be located in a master base station, and the SRBs may be configured as an MCG bearer type and may use the radio resources of the master base station. Tight interworking may have at least one bearer configured to use radio resources provided by the secondary base station. Tight interworking may or may not be configured or implemented.

The wireless device may be configured with two MAC entities: e.g., one MAC entity for a master base station, and one MAC entity for a secondary base station. In tight interworking, the configured set of serving cells for a wireless device may comprise of two subsets: e.g., the Master Cell Group (MCG) including the serving cells of the master base station, and the Secondary Cell Group (SCG) including the serving cells of the secondary base station.

At least one cell in a SCG may have a configured UL CC and one of them, e.g., a PSCell (or the PCell of the SCG, which may also be called a PCell), is configured with PUCCH resources. If the SCG is configured, there may be at least one SCG bearer or one split bearer. If one or more of a physical layer problem or a random access problem is detected on a PSCell, if the maximum number of (NR) RLC retransmissions associated with the SCG has been reached, and/or if an access problem on a PSCell during an SCG addition or during an SCG change is detected, then: an RRC connection re-establishment procedure may not be triggered, UL transmissions towards cells of the SCG may be stopped, a master base station may be informed by the wireless device of a SCG failure type, and/or for a split bearer the DL data transfer over the master base station may be maintained. The RLC AM bearer may be configured for the split bearer. Like the PCell, a PSCell may not be de-activated. A PSCell may be changed with an SCG change, e.g., with security key change and a RACH procedure. A direct bearer type change, between a split bearer and an SCG bearer, may not be supported. Simultaneous configuration of an SCG and a split bearer may not be supported.

A master base station and a secondary base station may interact. The master base station may maintain the RRM measurement configuration of the wireless device. The master base station may determine to ask a secondary base station to provide additional resources (e.g., serving cells) for a wireless device. This determination may be based on, e.g., received measurement reports, traffic conditions, and/or bearer types. If a request from the master base station is received, a secondary base station may create a container that may result in the configuration of additional serving cells for the wireless device, or the secondary base station may determine that it has no resource available to do so. The master base station may provide at least part of the AS configuration and the wireless device capabilities to the secondary base station, e.g., for wireless device capability coordination. The master base station and the secondary base station may exchange information about a wireless device configuration such as by using RRC containers (e.g., inter-node messages) carried in Xn or Xx messages. The secondary base station may initiate a reconfiguration of its existing serving cells (e.g., PUCCH towards the secondary base station). The secondary base station may determine which cell is the PSCell within the SCG. The master base station may not change the content of the RRC configuration provided by the secondary base station. If an SCG is added and/or an SCG SCell is added, the master base station may provide the latest measurement results for the SCG cell(s). Either or both of a master base station and a secondary base station may know the SFN and subframe offset of each other by OAM, (e.g., for the purpose of DRX alignment and identification of a measurement gap). If a new SCG SCell is added, dedicated RRC signaling may be used for sending required system information of the cell, such as for CA, except, e.g., for the SFN acquired from an MIB of the PSCell of an SCG.

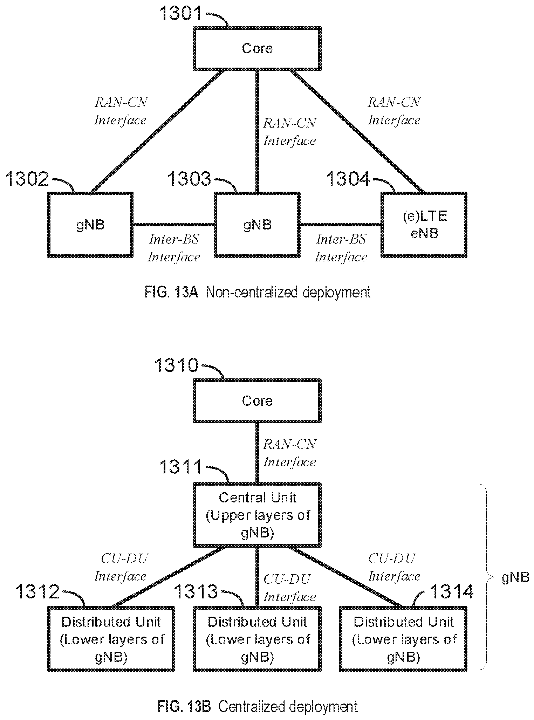

FIG. 13A and FIG.13B show examples for gNB deployment. A core 1301 and a core 1310 may interface with other nodes via RAN-CN interfaces. In a non-centralized deployment example, the full protocol stack (e.g., NR RRC, NR PDCP, NR RLC, NR MAC, and NR PHY) may be supported at one node, such as a gNB 1302, a gNB 1303, and/or an eLTE eNB or LTE eNB 1304. These nodes (e.g., the gNB 1302, the gNB 1303, and the eLTE eNB or LTE eNB 1304) may interface with one of more of each other via a respective inter-BS interface. In a centralized deployment example, upper layers of a gNB may be located in a Central Unit (CU) 1311, and lower layers of the gNB may be located in Distributed Units (DU) 1312, 1313, and 1314. The CU-DU interface (e.g., Fs interface) connecting CU 1311 and DUs 1312, 1312, and 1314 may be ideal or non-ideal. The Fs-C may provide a control plane connection over the Fs interface, and the Fs-U may provide a user plane connection over the Fs interface. In the centralized deployment, different functional split options between the CU 1311 and the DUs 1312, 1313, and 1314 may be possible by locating different protocol layers (e.g., RAN functions) in the CU 1311 and in the DU 1312, 1313, and 1314. The functional split may support flexibility to move the RAN functions between the CU 1311 and the DUs 1312, 1313, and 1314 depending on service requirements and/or network environments. The functional split option may change during operation (e.g., after the Fs interface setup procedure), or the functional split option may change only in the Fs setup procedure (e.g., the functional split option may be static during operation after Fs setup procedure).

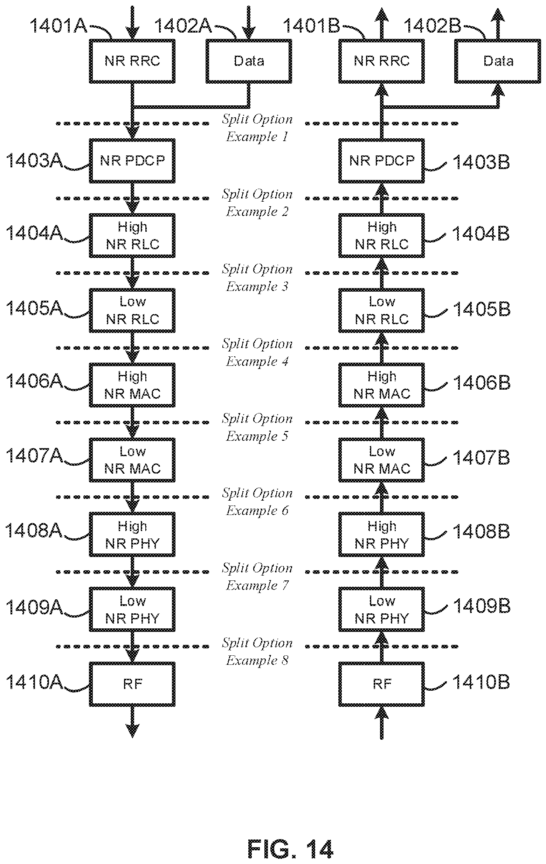

FIG. 14 shows examples for different functional split options of a centralized gNB deployment. Element numerals that are followed by "A" or "B" designations in FIG. 14 may represent the same elements in different traffic flows, e.g., either receiving data (e.g., data 1402A) or sending data (e.g., 1402B). In the split option example 1, an NR RRC 1401 may be in a CU, and an NR PDCP 1403, an NR RLC (e.g., comprising a High NR RLC 1404 and/or a Low NR RLC 1405), an NR MAC (e.g., comprising a High NR MAC 1406 and/or a Low NR MAC 1407), an NR PHY (e.g., comprising a High NR PHY 1408 and/or a LOW NR PHY 1409), and an RF 1410 may be in a DU. In the split option example 2, the NR RRC 1401 and the NR PDCP 1403 may be in a CU, and the NR RLC, the NR MAC, the NR PHY, and the RF 1410 may be in a DU. In the split option example 3, the NR RRC 1401, the NR PDCP 1403, and a partial function of the NR RLC (e.g., the High NR RLC 1404) may be in a CU, and the other partial function of the NR RLC (e.g., the Low NR RLC 1405), the NR MAC, the NR PHY, and the RF 1410 may be in a DU. In the split option example 4, the NR RRC 1401, the NR PDCP 1403, and the NR RLC may be in a CU, and the NR MAC, the NR PHY, and the RF 1410 may be in a DU. In the split option example 5, the NR RRC 1401, the NR PDCP 1403, the NR RLC, and a partial function of the NR MAC (e.g., the High NR MAC 1406) may be in a CU, and the other partial function of the NR MAC (e.g., the Low NR MAC 1407), the NR PHY, and the RF 1410 may be in a DU. In the split option example 6, the NR RRC 1401, the NR PDCP 1403, the NR RLC, and the NR MAC may be in CU, and the NR PHY and the RF 1410 may be in a DU. In the split option example 7, the NR RRC 1401, the NR PDCP 1403, the NR RLC, the NR MAC, and a partial function of the NR PHY (e.g., the High NR PHY 1408) may be in a CU, and the other partial function of the NR PHY (e.g., the Low NR PHY 1409) and the RF 1410 may be in a DU. In the split option example 8, the NR RRC 1401, the NR PDCP 1403, the NR RLC, the NR MAC, and the NR PHY may be in a CU, and the RF 1410 may be in a DU.

The functional split may be configured per CU, per DU, per wireless device, per bearer, per slice, and/or with other granularities. In a per CU split, a CU may have a fixed split, and DUs may be configured to match the split option of the CU. In a per DU split, each DU may be configured with a different split, and a CU may provide different split options for different DUs. In a per wireless device split, a gNB (e.g., a CU and a DU) may provide different split options for different wireless devices. In a per bearer split, different split options may be utilized for different bearer types. In a per slice splice, different split options may be applied for different slices.

A new radio access network (new RAN) may support different network slices, which may allow differentiated treatment customized to support different service requirements with end to end scope. The new RAN may provide a differentiated handling of traffic for different network slices that may be pre-configured, and the new RAN may allow a single RAN node to support multiple slices. The new RAN may support selection of a RAN part for a given network slice, e.g., by one or more slice ID(s) or NSSAI(s) provided by a wireless device or provided by an NGC (e.g., an NG CP). The slice ID(s) or NSSAI(s) may identify one or more of pre-configured network slices in a PLMN. For an initial attach, a wireless device may provide a slice ID and/or an NSSAI, and a RAN node (e.g., a gNB) may use the slice ID or the NSSAI for routing an initial NAS signaling to an NGC control plane function (e.g., an NG CP). If a wireless device does not provide any slice ID or NSSAI, a RAN node may send a NAS signaling to a default NGC control plane function. For subsequent accesses, the wireless device may provide a temporary ID for a slice identification, which may be assigned by the NGC control plane function, to enable a RAN node to route the NAS message to a relevant NGC control plane function. The new RAN may support resource isolation between slices. If the RAN resource isolation is implemented, shortage of shared resources in one slice does not cause a break in a service level agreement for another slice.

The amount of data traffic carried over networks is expected to increase for many years to come. The number of users and/or devices is increasing and each user/device accesses an increasing number and variety of services, e.g., video delivery, large files, and images. This requires not only high capacity in the network, but also provisioning very high data rates to meet customers' expectations on interactivity and responsiveness. More spectrum may be required for network operators to meet the increasing demand. Considering user expectations of high data rates along with seamless mobility, it is beneficial that more spectrum be made available for deploying macro cells as well as small cells for communication systems.

Striving to meet the market demands, there has been increasing interest from operators in deploying some complementary access utilizing unlicensed spectrum to meet the traffic growth. This is exemplified by the large number of operator-deployed Wi-Fi networks and the 3GPP standardization of LTE/WLAN interworking solutions. This interest indicates that unlicensed spectrum, if present, may be an effective complement to licensed spectrum for network operators, e.g., to help address the traffic explosion in some examples, such as hotspot areas. Licensed Assisted Access (LAA) offers an alternative for operators to make use of unlicensed spectrum, e.g., if managing one radio network, offering new possibilities for optimizing the network's efficiency.

Listen-before-talk (clear channel assessment) may be implemented for transmission in an LAA cell. In a listen-before-talk (LBT) procedure, equipment may apply a clear channel assessment (CCA) check before using the channel. For example, the CCA may utilize at least energy detection to determine the presence or absence of other signals on a channel to determine if a channel is occupied or clear, respectively. For example, European and Japanese regulations mandate the usage of LBT in the unlicensed bands. Apart from regulatory requirements, carrier sensing via LBT may be one way for fair sharing of the unlicensed spectrum.

Discontinuous transmission on an unlicensed carrier with limited maximum transmission duration may be enabled. Some of these functions may be supported by one or more signals to be transmitted from the beginning of a discontinuous LAA downlink transmission. Channel reservation may be enabled by the transmission of signals, by an LAA node, after gaining channel access, e.g., via a successful LBT operation, so that other nodes that receive the transmitted signal with energy above a certain threshold sense the channel to be occupied. Functions that may need to be supported by one or more signals for LAA operation with discontinuous downlink transmission may include one or more of the following: detection of the LAA downlink transmission (including cell identification) by wireless devices, time synchronization of wireless devices, and frequency synchronization of wireless devices.

DL LAA design may employ subframe boundary alignment according to LTE-A carrier aggregation timing relationships across serving cells aggregated by CA. This may not indicate that the eNB transmissions may start only at the subframe boundary. LAA may support transmitting PDSCH if not all OFDM symbols are available for transmission in a subframe according to LBT. Delivery of necessary control information for the PDSCH may also be supported.

LBT procedures may be employed for fair and friendly coexistence of LAA with other operators and technologies operating in unlicensed spectrum. LBT procedures on a node attempting to transmit on a carrier in unlicensed spectrum may require the node to perform a clear channel assessment to determine if the channel is free for use. An LBT procedure may involve at least energy detection to determine if the channel is being used. For example, regulatory requirements in some regions, e.g., in Europe, specify an energy detection threshold such that if a node receives energy greater than this threshold, the node assumes that the channel is not free. Nodes may follow such regulatory requirements. A node may optionally use a lower threshold for energy detection than that specified by regulatory requirements. LAA may employ a mechanism to adaptively change the energy detection threshold, e.g., LAA may employ a mechanism to adaptively lower the energy detection threshold from an upper bound. Adaptation mechanism may not preclude static or semi-static setting of the threshold. A Category 4 LBT mechanism or other type of LBT mechanisms may be implemented.

Various example LBT mechanisms may be implemented. For some signals, in some implementation scenarios, in some situations, and/or in some frequencies, no LBT procedure may performed by the transmitting entity. For example, Category 2 (e.g., LBT without random back-off) may be implemented. The duration of time that the channel is sensed to be idle before the transmitting entity transmits may be deterministic. For example, Category 3 (e.g., LBT with random back-off with a contention window of fixed size) may be implemented. The LBT procedure may have the following procedure as one of its components. The transmitting entity may draw a random number N within a contention window. The size of the contention window may be specified by the minimum and maximum value of N. The size of the contention window may be fixed. The random number N may be employed in the LBT procedure to determine the duration of time that the channel is sensed to be idle, e.g., before the transmitting entity transmits on the channel. For example, Category 4 (e.g., LBT with random back-off with a contention window of variable size) may be implemented. The transmitting entity may draw a random number N within a contention window. The size of contention window may be specified by the minimum and maximum value of N. The transmitting entity may vary the size of the contention window if drawing the random number N. The random number N may be used in the LBT procedure to determine the duration of time that the channel is sensed to be idle, e.g., before the transmitting entity transmits on the channel.

LAA may employ uplink LBT at the wireless device. The UL LBT scheme may be different from the DL LBT scheme, e.g., by using different LBT mechanisms or parameters. These differences in schemes may be due to the LAA UL being based on scheduled access, which may affect a wireless device's channel contention opportunities. Other considerations motivating a different UL LBT scheme may include, but are not limited to, multiplexing of multiple wireless devices in a single subframe.

A DL transmission burst may be a continuous transmission from a DL transmitting node, e.g., with no transmission immediately before or after from the same node on the same CC. An UL transmission burst from a wireless device perspective may be a continuous transmission from a wireless device, e.g., with no transmission immediately before or after from the same wireless device on the same CC. A UL transmission burst may be defined from a wireless device perspective or from an eNB perspective. If an eNB is operating DL and UL LAA over the same unlicensed carrier, DL transmission burst(s) and UL transmission burst(s) on LAA may be scheduled in a TDM manner over the same unlicensed carrier. An instant in time may be part of a DL transmission burst or part of an UL transmission burst.

A base station may transmit a plurality of beams to a wireless device. A serving beam may be determined, from the plurality of beams, for the wireless communications between the base station and the wireless device. One or more candidate beams may also be determined, from the plurality of beams, for providing the wireless communications if a beam failure event occurs, e.g., such that the serving beam becomes unable to provide the desired communications. One or more candidate beams may be determined by a wireless device and/or by a base station. By determining and configuring a candidate beam, the wireless device and base station may continue wireless communications if the serving beam experiences a beam failure event.

Single beam and multi-beam operations may be supported, e.g., in a NR (New Radio) system. In a multi-beam example, a base station (e.g., a gNB in NR) may perform a downlink beam sweep to provide coverage for DL synchronization signals (SSs) and common control channels. Wireless devices may perform uplink beam sweeps for UL direction to access a cell. In a single beam example, a base station may configure time-repetition within one synchronization signal (SS) block. This time-repetition may comprise, e.g., one or more of a primary synchronization signal (PSS), a secondary synchronization signal (SSS), and a physical broadcast channel (PBCH). These signals may be in a wide beam. In a multi-beam examples, a base station may configure one or more of these signals and physical channels, such as an SS Block, in multiple beams. A wireless device may identify, e.g., from an SS block, an OFDM symbol index, a slot index in a radio frame, and a radio frame number.

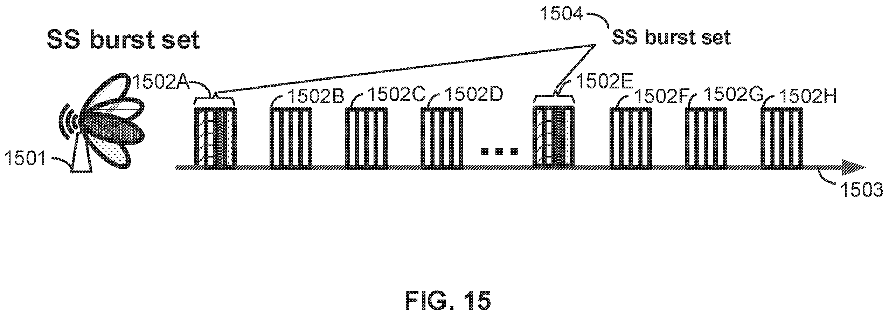

In an RRC_INACTIVE state or in an RRC_IDLE state, a wireless device may assume that SS blocks form an SS burst and an SS burst set. An SS burst set may have a given periodicity. SS blocks may be transmitted together in multiple beams (e.g., in multi-beam examples) to form an SS burst. One or more SS blocks may be transmitted via one beam. A beam may have a steering direction. If multiple SS bursts transmit beams, these SS bursts together may form an SS burst set, such as shown in FIG. 15. A base station 1501 (e.g., a gNB in NR) may transmit SS bursts 1502A to 1502H during time periods 1503. A plurality of these SS bursts may comprise an SS burst set, such as an SS burst set 1504 (e.g., SS bursts 1502A and 1502E). An SS burst set may comprise any number of a plurality of SS bursts 1502A to 1502H. Each SS burst within an SS burst set may transmitted at a fixed or variable periodicity during time periods 1503.

In a multi-beam example, one or more of PSS, SSS, or PBCH signals may be repeated for a cell, e.g., to support cell selection, cell reselection, and/or initial access procedures. For an SS burst, an associated PBCH or a physical downlink shared channel (PDSCH) scheduling system information may be broadcasted by a base station to multiple wireless devices. The PDSCH may be indicated by a physical downlink control channel (PDCCH) in a common search space. The system information may comprise system information block type 2 (SIB2). SIB2 may carry a physical random access channel (PRACH) configuration for a beam. For a beam, a base station (e.g., a gNB in NR) may have a RACH configuration which may include a PRACH preamble pool, time and/or frequency radio resources, and other power related parameters. A wireless device may use a PRACH preamble from a RACH configuration to initiate a contention-based RACH procedure or a contention-free RACH procedure. A wireless device may perform a 4-step RACH procedure, which may be a contention-based RACH procedure or a contention-free RACH procedure. The wireless device may select a beam associated with an SS block that may have the best receiving signal quality. The wireless device may successfully detect a cell identifier that may be associated with the cell and decode system information with a RACH configuration. The wireless device may use one PRACH preamble and select one PRACH resource from RACH resources indicated by the system information associated with the selected beam. A PRACH resource may comprise at least one of: a PRACH index indicating a PRACH preamble, a PRACH format, a PRACH numerology, time and/or frequency radio resource allocation, power setting of a PRACH transmission, and/or other radio resource parameters. For a contention-free RACH procedure, the PRACH preamble and resource may be indicated in a DCI or other high layer signaling.

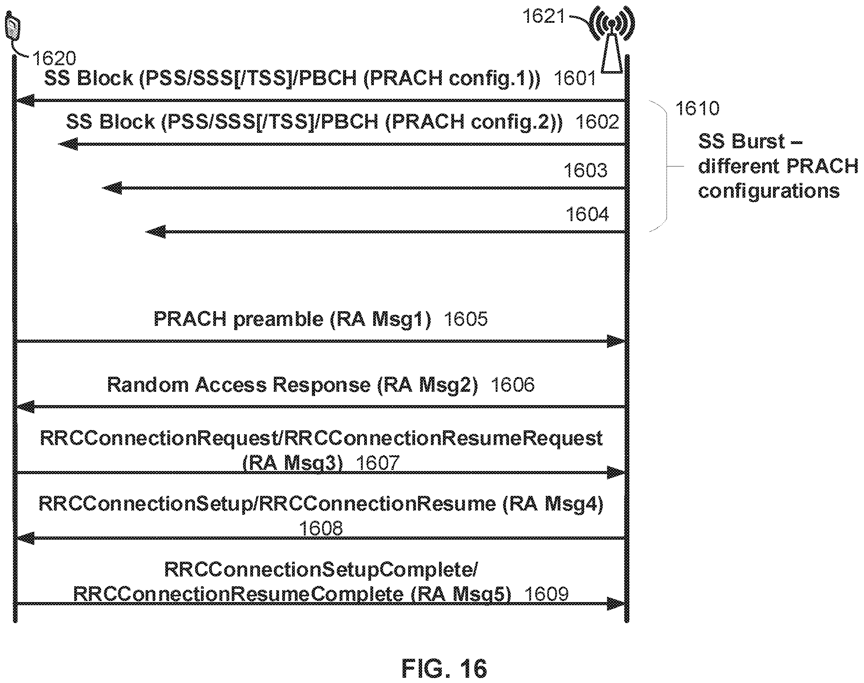

FIG. 16 shows an example of a random access procedure (e.g., via a RACH) that may include sending, by a base station, one or more SS blocks. A wireless device 1620 (e.g., a UE) may transmit one or more preambles to a base station 1621 (e.g., a gNB in NR). Each preamble transmission by the wireless device may be associated with a separate random access procedure, such as shown in FIG. 16. The random access procedure may begin at step 1601 with a base station 1621 (e.g., a gNB in NR) sending a first SS block to a wireless device 1621 (e.g., a UE). Any of the SS blocks may comprise one or more of a PSS, SSS, tertiary synchronization signal (TSS), or PBCH signal. The first SS block in step 1601 may be associated with a first PRACH configuration. At step 1602, the base station 1621 may send to the wireless device 1620 a second SS block that may be associated with a second PRACH configuration. At step 1603, the base station 1621 may send to the wireless device 1620 a third SS block that may be associated with a third PRACH configuration. At step 1604, the base station 1621 may send to the wireless device 1620 a fourth SS block that may be associated with a fourth PRACH configuration. Any number of SS blocks may be sent in the same manner in addition to, or replacing, steps 1603 and 1604. An SS burst may comprise any number of SS blocks. For example, SS burst 1610 comprises the three SS blocks sent during steps 1602-1604.

The wireless device 1620 may send to the base station 1621 a preamble, at step 1605, e.g., after or in response to receiving one or more SS blocks or SS bursts. The preamble may comprise a PRACH preamble, and may be referred to as RA Msg 1. The PRACH preamble may be transmitted in step 1605 according to or based on a PRACH configuration that may be received in an SS block (e.g., one of the SS blocks from steps 1601-1604) that may be determined to be the best SS block beam. The wireless device 1620 may determine a best SS block beam from among SS blocks it may receive prior to sending the PRACH preamble. The base station 1621 may send a random access response (RAR), which may be referred to as RA Msg2, at step 1606, e.g., after or in response to receiving the PRACH preamble. The RAR may be transmitted in step 1606 via a DL beam that corresponds to the SS block beam associated with the PRACH configuration. The base station 1621 may determine the best SS block beam from among SS blocks it previously sent prior to receiving the PRACH preamble. The base station 1621 may receive the PRACH preamble according to or based on the PRACH configuration associated with the best SS block beam.

The wireless device 1620 may send to the base station 1621 an RRCConnectionRequest and/or RRCConnectionResumeRequest message, which may be referred to as RA Msg3, at step 1607, e.g., after or in response to receiving the RAR The base station 1621 may send to the wireless device 1620 an RRCConnectionSetup and/or RRCConnectionResume message, which may be referred to as RA Msg4, at step 1608, e.g., after or in response to receiving the RRCConnectionRequest and/or RRCConnectionResumeRequest message. The wireless device 1620 may send to the base station 1621 an RRCConnectionSetupComplete and/or RRCConnectionResumeComplete message, which may be referred to as RA Msg5, at step 1609, e.g., after or in response to receiving the RRCConnectionSetup and/or RRCConnectionResume. An RRC connection may be established between the wireless device 1620 and the base station 1621, and the random access procedure may end, e.g., after or in response to receiving the RRCConnectionSetupComplete and/or RRCConnectionResumeComplete message.

A best beam, including but not limited to a best SS block beam, may be determined based on a channel state information reference signal (CSI-RS). A wireless device may use a CSI-RS in a multi-beam system for estimating the beam quality of the links between the wireless device and a base station. For example, based on a measurement of a CSI-RS, a wireless device may report CSI for downlink channel adaption. A CSI parameter may include a precoding matrix index (PMI), a channel quality index (CQI) value, and/or a rank indicator (RI). A wireless device may report a beam index based on a reference signal received power (RSRP) measurement on a CSI-RS. The wireless device may report the beam index in a CSI resource indication (CRI) for downlink beam selection. A base station may transmit a CSI-RS via a CSI-RS resource, such as via one or more antenna ports, or via one or more time and/or frequency radio resources. A beam may be associated with a CSI-RS. A CSI-RS may comprise an indication of a beam direction. Each of a plurality of beams may be associated with one of a plurality of CSI-RSs. A CSI-RS resource may be configured in a cell-specific way, e.g., via common RRC signaling. Additionally or alternatively, a CSI-RS resource may be configured in a wireless device-specific way, e.g., via dedicated RRC signaling and/or layer 1 and/or layer 2 (L1/L2) signaling. Multiple wireless devices in or served by a cell may measure a cell-specific CSI-RS resource. A dedicated subset of wireless devices in or served by a cell may measure a wireless device-specific CSI-RS resource. A base station may transmit a CSI-RS resource periodically, using aperiodic transmission, or using a multi-shot or semi-persistent transmission. In a periodic transmission, a base station may transmit the configured CSI-RS resource using a configured periodicity in the time domain. In an aperiodic transmission, a base station may transmit the configured CSI-RS resource in a dedicated time slot. In a multi-shot or semi-persistent transmission, a base station may transmit the configured CSI-RS resource in a configured period. A base station may configure different CSI-RS resources in different terms for different purposes. Different terms may include, e.g., cell-specific, device-specific, periodic, aperiodic, multi-shot, or other terms. Different purposes may include, e.g., beam management, CQI reporting, or other purposes.

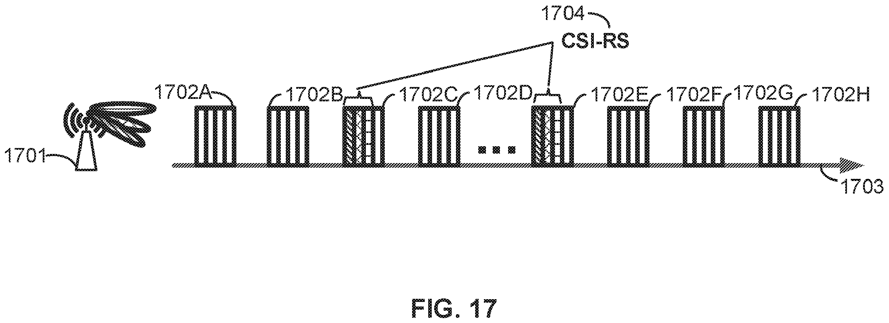

FIG. 17 shows an example of transmitting CSI-RSs periodically for a beam. A base station 1701 may transmit a beam in a predefined order in the time domain, such as during time periods 1703. Beams used for a CSI-RS transmission, such as for CSI-RS 1704 in transmissions 1702C and/or 1703E, may have a different beam width relative to a beam width for SS-blocks transmission, such as for SS blocks 1702A, 1702B, 1702D, and 1702F-1702H. Additionally or alternatively, a beam width of a beam used for a CSI-RS transmission may have the same value as a beam width for an SS block. Some or all of one or more CSI-RSs may be included in one or more beams. An SS block may occupy a number of OFDM symbols (e.g., 4), and a number of subcarriers (e.g., 240), carrying a synchronization sequence signal. The synchronization sequence signal may identify a cell.

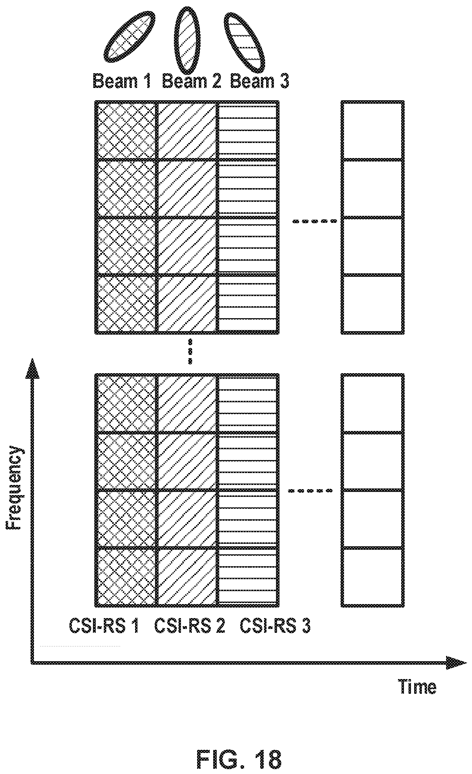

FIG. 18 shows an example of a CSI-RS that may be mapped in time and frequency domains. Each square shown in FIG. 18 may represent a resource block within a bandwidth of a cell. Each resource block may comprise a number of subcarriers. A cell may have a bandwidth comprising a number of resource blocks. A base station (e.g., a gNB in NR) may transmit one or more RRC messages comprising CSI-RS parameters for one or more CSI-RS. CSI-RS parameters for a CSI-RS may comprise, e.g., time and OFDM frequency parameters, port numbers, CSI-RS index, and/or CSI-RS sequence parameters. Time and frequency parameters may indicate, e.g., periodicity, subframes, symbol numbers, OFDM subcarriers, and/or other radio resource parameters. CSI-RS may be configured using common parameters, e.g., when a plurality of wireless devices receive the same CSI-RS signal. CSI-RS may be configured using wireless device dedicated parameters, e.g., when a CSI-RS is configured for a specific wireless device.

As shown in FIG. 18, three beams may be configured for a wireless device, e.g., in a wireless device-specific configuration. Any number of additional beams (e.g., represented by the column of blank squares) or fewer beams may be included. Beam 1 may be allocated with CSI-RS 1 that may be transmitted in some subcarriers in a resource block (RB) of a first symbol. Beam 2 may be allocated with CSI-RS 2 that may be transmitted in some subcarriers in a RB of a second symbol. Beam 3 may be allocated with CSI-RS 3 that may be transmitted in some subcarriers in a RB of a third symbol. All subcarriers in a RB may not necessarily be used for transmitting a particular CSI-RS (e.g., CSI-RS 1) on an associated beam (e.g., beam 1) for that CSI-RS. By using frequency division multiplexing (FDM), other subcarriers, not used for beam 1 for the wireless device in the same RB, may be used for other CSI-RS transmissions associated with a different beam for other wireless devices. Additionally or alternatively, by using time domain multiplexing (TDM), beams used for a wireless device may be configured such that different beams (e.g., beam 1, beam 2, and beam 3) for the wireless device may be transmitted using some symbols different from beams of other wireless devices.

Beam management may use a device-specific configured CSI-RS. In a beam management procedure, a wireless device may monitor a channel quality of a beam pair link comprising a transmitting beam by a base station (e.g., a gNB in NR) and a receiving beam by the wireless device (e.g., a UE). When multiple CSI-RSs associated with multiple beams are configured, a wireless device may monitor multiple beam pair links between the base station and the wireless device.

A wireless device may transmit one or more beam management reports to a base station. A beam management report may indicate one or more beam pair quality parameters, comprising, e.g., one or more beam identifications, RSRP, PMI, CQI, and/or RI, of a subset of configured beams.

A base station and/or a wireless device may perform a downlink L1/L2 beam management procedure. One or more downlink L1/L2 beam management procedures may be performed within one or multiple transmission and receiving points (TRPs). Procedure P-1 may be used to enable a wireless device measurement on different TRP transmit (Tx) beams, e.g., to support a selection of TRP Tx beams and/or wireless device receive (Rx) beam(s). Beamforming at a TRP may include, e.g., an intra-TRP and/or inter-TRP Tx beam sweep from a set of different beams. Beamforming at a wireless device, may include, e.g., a wireless device Rx beam sweep from a set of different beams. Procedure P-2 may be used to enable a wireless device measurement on different TRP Tx beams, e.g., which may change inter-TRP and/or intra-TRP Tx beam(s). Procedure P-2 may be performed, e.g., on a smaller set of beams for beam refinement than in procedure P-1. P-2 may be a particular example of P-1. P-3 may be used to enable a wireless device measurement on the same TRP Tx beam, e.g., to change a wireless device Rx beam if a wireless device uses beamforming.

Based on a wireless device's beam management report, a base station may transmit, to the wireless device, a signal indicating that one or more beam pair links are the one or more serving beams. The base station may transmit PDCCH and/or PDSCH for the wireless device using the one or more serving beams.

A wireless device (e.g., a UE) and/or a base station (e.g., a gNB) may trigger a beam failure recovery mechanism. A wireless device may trigger a beam failure recovery (BFR) request transmission, e.g., when a beam failure event occurs. A beam failure event may include, e.g., a determination that a quality of beam pair link(s) of an associated control channel is unsatisfactory. A determination of an unsatisfactory quality of beam pair link(s) of an associated channel may be based on the quality falling below a threshold and/or an expiration of a timer.

A wireless device may measure a quality of beam pair link(s) using one or more reference signals (RS). One or more SS blocks, one or more CSI-RS resources, and/or one or more demodulation reference signals (DM-RSs) of a PBCH may be used as a RS for measuring a quality of a beam pair link. A quality of a beam pair link may be based on one or more of an RSRP value, reference signal received quality (RSRQ) value, and/or CSI value measured on RS resources. A base station may indicate that an RS resource, e.g., that may be used for measuring a beam pair link quality, is quasi-co-located (QCLed) with one or more DM-RSs of a control channel. The RS resource and the DM-RSs of the control channel may be QCLed when the channel characteristics from a transmission via an RS to a wireless device, and the channel characteristics from a transmission via a control channel to the wireless device, are similar or the same under a configured criterion.

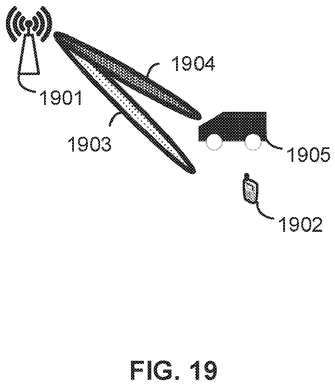

FIG. 19 shows an example of a beam failure event involving a single TRP. A single TRP such as at a base station 1901 may transmit, to a wireless device 1902, a first beam 1903 and a second beam 1904. A beam failure event may occur if, e.g., a serving beam, such as the second beam 1904, is blocked by a moving vehicle 1905 or other obstruction (e.g., building, tree, land, or any object) and configured beams (e.g., the first beam 1903 and the second beam 1904), including the serving beam, are received from the single TRP. The wireless device 1902 may trigger a mechanism to recover from beam failure when a beam failure occurs.

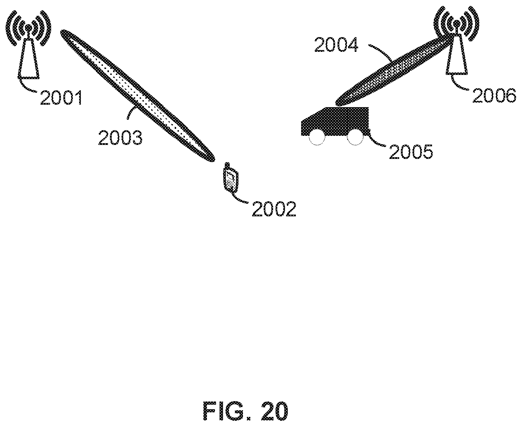

FIG. 20 shows an example of a beam failure event involving multiple TRPs. Multiple TRPs, such as at a first base station 2001 and at a second base station 2006, may transmit, to a wireless device 2002, a first beam 2003 (e.g., from the first base station 2001) and a second beam 2004 (e.g., from the second base station 2006). A beam failure event may occur when, e.g., a serving beam, such as the second beam 2004, is blocked by a moving vehicle 2005 or other obstruction (e.g., building, tree, land, or any object) and configured beams (e.g., the first beam 2003 and the second beam 2004) are received from multiple TRPs. The wireless device 2002 may trigger a mechanism to recover from beam failure when a beam failure occurs.

A wireless device may monitor a PDCCH, such as a New Radio PDCCH (NR-PDCCH), on M beam pair links simultaneously, where M≥1 and the maximum value of M may depend at least on the wireless device capability. Such monitoring may increase robustness against beam pair link blocking. A base station may transmit, and the wireless device may receive, one or more messages configured to cause the wireless device to monitor NR-PDCCH on different beam pair link(s) and/or in different NR-PDCCH OFDM symbols.

A base station may transmit higher layer signaling, and/or a MAC control element (MAC CE), that may comprise parameters related to a wireless device Rx beam setting for monitoring NR-PDCCH on multiple beam pair links. A base station may transmit one or more indications of a spatial QCL assumption between a first DL RS antenna port(s) and a second DL RS antenna port(s). The first DL RS antenna port(s) may be for one or more of a cell-specific CSI-RS, device-specific CSI-RS, SS block, PBCH with DM-RSs of PBCH, and/or PBCH without DM-RSs of PBCH. The second DL RS antenna port(s) may be for demodulation of a DL control channel. Signaling for a beam indication for a NR-PDCCH (e.g., configuration to monitor NR-PDCCH) may be via MAC CE signaling, RRC signaling, DCI signaling, or specification-transparent and/or an implicit method, and any combination thereof.

For reception of unicast DL data channel, a base station may indicate spatial QCL parameters between DL RS antenna port(s) and DM-RS antenna port(s) of DL data channel. A base station may transmit DCI (e.g., downlink grants) comprising information indicating the RS antenna port(s). The information may indicate the RS antenna port(s) which may be QCLed with DM-RS antenna port(s). A different set of DM-RS antenna port(s) for the DL data channel may be indicated as a QCL with a different set of RS antenna port(s).

If a base station transmits a signal indicating a spatial QCL parameters between CSI-RS and DM-RS for PDCCH, a wireless device may use CSI-RSs QCLed with DM-RS for a PDCCH to monitor beam pair link quality. If a beam failure event occurs, the wireless device may transmit a beam failure recovery request, such as by a determined configuration.

If a wireless device transmits a beam failure recovery request, e.g., via an uplink physical channel or signal, a base station may detect that there is a beam failure event, for the wireless device, by monitoring the uplink physical channel or signal. The base station may initiate a beam recovery mechanism to recover the beam pair link for transmitting PDCCH between the base station and the wireless device. The base station may transmit one or more control signals, to the wireless device, e.g., after or in response to receiving the beam failure recovery request. A beam recovery mechanism may be, e.g., an L1 scheme, or a higher layer scheme.

A base station may transmit one or more messages comprising, e.g., configuration parameters of an uplink physical channel and/or a signal for transmitting a beam failure recovery request. The uplink physical channel and/or signal may be based on at least one of the following: a non-contention based PRACH (e.g., a beam failure recovery PRACH or BFR-PRACH), which may use a resource orthogonal to resources of other PRACH transmissions; a PUCCH (e.g., beam failure recovery PUCCH or BFR-PUCCH); and/or a contention-based PRACH resource. Combinations of these candidate signal and/or channels may be configured by a base station.

A wireless device may transmit a preamble during a normal random access (RA) procedure or during a beam failure recovery (BFR) procedure. In the RA procedure, the wireless device may transmit the preamble to establish, or re-establish, synchronization with a base station, e.g., using a 4-step contention-based procedure, or a contention-free procedure. In the BFR procedure, the wireless device may transmit the preamble to recover a beam pair link between the base station and the wireless device. The BFR procedure (for example, using a 2-step and/or contention-free procedure) may be more urgent and/or important than the RA procedure. RA procedures may not provide a sufficient likelihood that beam failure is recovered timely, whereas the BFR procedure may provide a greater likelihood that beam failure is recovered in a timely and power-efficient manner.

A transmission power for a preamble in the RA procedure may differ from a transmission power for a preamble in the BFR procedure. For example, a preamble of the BFR procedure may be transmitted using a transmission power that may exceed the transmission power for a preamble of a RA procedure and that may increase the likelihood that the preamble of the BFR procedure is received by a base station. The base station may configure these different transmission powers, e.g., by sending a first target received power for the preamble of the RA procedure and a second target received power for the preamble of the BFR procedure.

A wireless device may receive, from a base station, one or more radio resource control messages comprising configuration parameters of a cell. The configuration parameters may comprise a first preamble received target power value of the cell for a first random access procedure of a beam failure recovery procedure, and a second preamble received target power value of the cell for a second random access procedure. The configuration parameters may further comprise at least one of: a channel state information reference signal, a synchronization signal block, or a demodulation reference signal for a physical broadcast channel. The wireless device may measure, based on one or more first reference signal resources, a beam link quality. The wireless device may determine, based on the measured beam link quality, at least one beam failure. Based on determining the at least one beam failure, the wireless device may: initiate the beam failure recovery procedure, and initiate the first random access procedure. Based on detecting a beam failure of the cell, the wireless device may transmit, using a first transmission power that is based on the first preamble received target power value of the cell, a first preamble for the first random access procedure of the cell. The wireless device may determine the first transmission power by adding the first preamble received target power value and a preamble format parameter. The preamble format parameter may indicate a power offset value. The wireless device may determine the first transmission power based on a first reference signal power value and a first path loss value. This first path loss value may be based on a layer 1 reference signal received power value. The layer 1 reference signal received power value may be obtained based on a first reference signal associated with a serving beam. The layer 1 reference signal received power value may be obtained based on a second reference signal associated with a candidate beam. The wireless device may transmit, using a second transmission power that is based on the second preamble received target power value of the cell, a second preamble for the second random access procedure of the cell. The wireless device may select at least one reference signal resource, e.g., after or in response to receiving a physical downlink control channel order. The wireless device may transmit the second preamble after or in response to receiving a physical downlink control channel order. The wireless device may transmit the second preamble after or in response to initiating the second random access procedure for uplink synchronization.

A base station may transmit, to a wireless device one or more radio resource control messages comprising configuration parameters of a cell. The configuration parameters may comprise a first preamble received target power value of the cell for a first random access procedure of a beam failure recovery procedure, and a second preamble received target power value of the cell for a second random access procedure. The configuration parameters may further comprise at least one of: a channel state information reference signal, a synchronization signal block, or a demodulation reference signal for a physical broadcast channel. The base station may receive, from the wireless device using a first transmission power based on the first preamble received target power value of the cell, a first preamble for the first random access procedure of the cell. The first transmission power may comprise a sum of the first preamble received target power value and a preamble format parameter. The preamble format parameter may indicate a power offset value. The first transmission power may be based on to a first reference signal power value and a first path loss value. The first path loss value may be calculated based on a layer 1 reference signal received power value. The base station may receive from the wireless device using a second transmission power based on to the second preamble received target power value of the cell, a second preamble for the second random access procedure of the cell. The base station may determine, based on receiving the first preamble for the first random access procedure of the cell, at least one beam failure. After determining the at least one beam failure, the base station may: proceed with a beam failure recovery procedure, and proceed with the first random access procedure (e.g., by transmitting a downlink control information in response to the first preamble). The base station may successfully complete the BFR procedure. The base station may transmit a physical downlink control channel order, e.g., after or before receiving the second preamble.

A wireless device may receive, from a base station, one or more radio resource control messages comprising configuration parameters that comprise a first target power value for a beam failure recovery procedure, and a second target power value for a second random access procedure. The configuration parameters may further comprise at least one of: a channel state information reference signal, a synchronization signal block, or a demodulation reference signal for a physical broadcast channel. The wireless device may detect a failure of a first beam. The wireless device may transmit, using a first transmission power that is based on the first target power value, a first preamble for the beam failure recovery procedure. The wireless device may determine the first transmission power by adding the first target power value and a preamble format parameter. The preamble format parameter may indicate a power offset value. The wireless device may determine the first transmission power further based on a first reference signal power value and a first path loss value. The first path loss value may be based on a layer 1 reference signal received power value. The wireless device may receive a physical downlink control channel order. The wireless device may select at least one reference signal resource, e.g., after or in response to the receiving the physical downlink control channel order. The wireless device may transmit, using a second transmission power that is based on the second target power value, a second preamble for the second random access procedure. A system may comprise a wireless device and a base station.

A base station may transmit to a wireless device, and the wireless device may receive from the base station, at least one message, e.g., a radio resource control (RRC) message, comprising configuration parameters of one or more cells. The configuration parameters may comprise, e.g., one or more RS resources and/or one or more resource parameters. The RS resources may be for one or more reference signal received power (RSRP) measurements. The RS resources may comprise, e.g., channel state information reference signals (CSI-RSs), SS blocks, and/or DM-RSs of a PBCH. Each of the plurality of CSI-RSs may be associated with a beam. The resource parameters may comprise at least one of: a power offset value, one or more PRACH preambles, a PRACH format, a PRACH numerology, a time resource allocation, and/or a frequency resource allocation. The wireless device may receive a system information block comprising a preamble initial received target power value. The wireless device may detect that a beam, of at least one first beam associated with at least one first CSI-RS of a first CSI-RS group, satisfies at least a first criterion or a plurality of criteria. The wireless device may determine a preamble power for a first preamble. The preamble power may be determined employing at least one of: the offset value; the preamble initial received target power value; a power parameter based on one or more power control commands received from a base station; and/or a path loss measurement value obtained based on a beam associated with a RACH employed for preamble transmission.

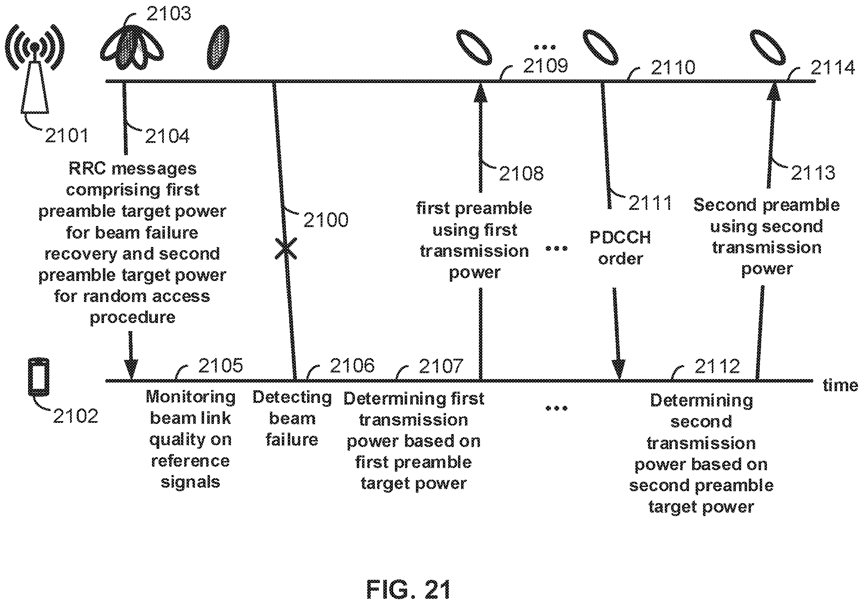

FIG. 21 shows example procedures for BFR using a BFR preamble transmission power that may differ from an RA preamble transmission power. At step 2103, a base station 2101 may determine configuration parameters for one or more wireless devices, such as a wireless device 2102. The configuration parameters may comprise a plurality of target power values for a corresponding plurality of preambles. The plurality of target power values may comprise a first target power value for a BFR preamble and a second target power value for a RA preamble.

The base station 2101 may determine, at step 2103, an initial target power value (e.g., an initial target received power) for an RA preamble transmission and/or for a BFR-PRACH preamble transmission, based on, e.g., one or more of at least: a preamble format, a measured uplink interference and noise level in the time/frequency resource allocated to one or more RA preambles and/or one or more BFR-PRACH preambles, power control commands, a desired received signal to interference plus noise ratio (SINR) for detecting an RA preamble and/or a BFR-PRACH preamble, a transmit power difference between SS blocks and CSI-RSs, and/or a transmit power difference between SS blocks and DM-RSs of a PBCH.

The base station 2101 may determine, at step 2103, a value of an additional power offset. The base station may determine, at step 2103, the BFR-PRACH preamble transmission power based on the determined initial target power value for an RA preamble transmission. For example, the BFR-PRACH transmission power may correspond to an RA preamble transmission power. Additionally or alternatively, the base station may determine, at step 2103, the BFR-PRACH preamble transmission power based on the determined initial target power value for an RA preamble transmission and the additional power offset. For example, the BFR-PRACH transmission power may correspond to the RA preamble transmission power plus the additional power offset. The configuration parameters of the BFR-PRACH may comprise an additional power offset by device-specific (e.g., wireless device-specific) or cell-specific RRC signaling. The additional power offset may indicate a power offset for a BFR-PRACH transmission above an amount of power for a normal PRACH transmission. The power offset may be based on, e.g., one or more of at least: a preamble format, a preamble numerology, a measured uplink interference and noise level in the time/frequency resource allocated to one or more RA preambles and/or one or more BFR-PRACH preambles, power control commands, a desired received signal to interference plus noise ratio (SINR) for detecting an RA preamble and/or a BFR-PRACH preamble, a transmit power difference between SS blocks and CSI-RSs, or between SS blocks and DM-RSs of a PBCH.

The base station may determine, e.g., at step 2103, a first type of RSs for channel quality measurement of initial access, and a second type of RSs for channel quality measurement of BFR request. For example, the wireless device 2102 may employ initial access based on channel quality measurement on SS blocks, and/or the wireless device may employ a BFR request transmission based on channel quality measurement on CSI-RSs.

At step 2104, the base station 2101 may transmit, to the wireless device 2102, one or more messages comprising configuration parameters of an RA (e.g., RACH) procedure, e.g., via RRC signaling. The configuration parameters of the RA procedure may comprise, e.g., an initial received target power of a PRACH preamble. Additionally or alternatively, at step 2104, the base station 2101 may transmit, to the wireless device 2101, one or more messages comprising configuration parameters of a BFR procedure, e.g., via RRC signaling. The configuration parameters of the BFR procedure may comprise, e.g., an initial received target power of a BFR-PRACH preamble. The configuration parameters of an RA procedure and/or the configuration parameters of a BFR procedure may comprise configuration parameters of at least one of the following: CSI-RS resources, QCL parameters between CSI-RS and DM-RS of a control channel (e.g., PBCH), transmission power values for CSI-RS resources, transmission powers of DM-RSs of a control channel (e.g., PBCH), SS blocks, transmission power of SS blocks, BFR-PRACH resources, initial received target power value of a BFR-PRACH, and/or an additional BFR-PRACH power offset. The base station 2101 may transmit the one or more messages, comprising the configuration parameters, via RRC signaling, MAC signaling, an L1 downlink control channel, wireless-device specific signaling, and/or other signaling. The configuration parameters of the normal RA procedure and the configuration parameters of the BFR procedure may be transmitted, by the base station 2101, in the same transmission or in separate transmissions.

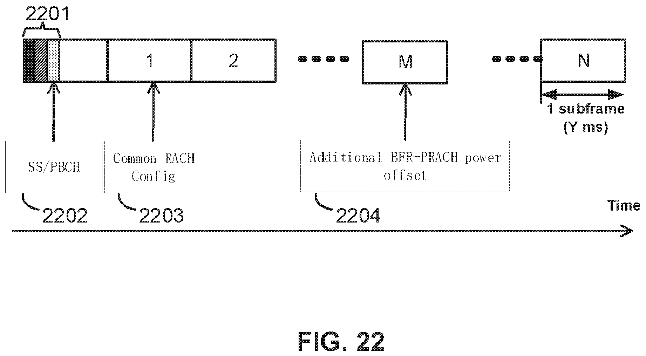

FIG. 22 shows an example transmission, from the base station 2101 to the wireless device 2102, which may comprise the configuration parameters of an RA procedure and/or the configuration parameters of a BFR procedure. The transmission shown in FIG. 22 may be performed at step 2104 described above regarding FIG. 21. The transmission may comprise signals 2201 and a plurality (e.g., N number) of subframes. The signals 2201 may comprise one or more synchronization signals 2202. The one or more synchronization signals may be associated with a PBCH. The N number of subframes may comprise one or more RACH configuration parameters 2203 and/or one or more indications of additional BFR-BRACH power offset 2204. The transmission may comprise an RRC message.

At step 2105 of FIG. 21, the wireless device 2102 may monitor beam link quality on RSs. The wireless device 2102 may select one or more RS of which to monitor channel quality. The wireless device 2102 may perform RSRP measurements for one or more CSI-RSs associated with a beam, and/or the wireless device 2102 may perform RSRP measurements for multiple sets of one or more CSI-RSs with each set being associated with one of a plurality of beams.

At step 2106, the wireless device 2102 may detect a beam failure 2100. A beam failure may occur, e.g., when a quality of beam pair links, e.g., transmitting via a PDCCH, is determined to be below a threshold. The threshold may be predefined or configured, e.g., via an RRC message. .The quality of beams may be based on the monitoring performed by the wireless device 2102 at step 2105.

At step 2107, the wireless device 2102 may determine a transmission power for a beam failure recovery (BFR) preamble, e.g., for a BFR-PRACH. The transmission power for the BFR preamble may be based on a preamble received target power that may be included in the configuration parameters from step 2104.

A preamble transmission power for an RA procedure (e.g., a PRACH) may be determined as follows:

$$P_{PRACH} = \min\{ P_{CMAX,c}(i), \quad PREAMBLE\_RECEIVED\_TARGET\_POWER + PL_c \},$$

where $P_{CMAX,c}(i)$ is a configured wireless device transmit power for subframe i of serving cell c, and $PL_c$ is a downlink path loss estimation calculated by the wireless device for serving cell c. Similarly, preamble transmission for a BFR procedure (e.g., a BFR-PRACH) may be determined as follows:

PBFR-PRACH = min{ $P_{CMAX}$ , initial received target power + $PL_c$ }, where $P_{CMAX}$ is a configured wireless device transmit power.

A wireless device may determine a path loss based on a high layer filtered RSRP. The wireless device may determine the high layer filtered RSRP based on one or more measurements of CRS and a filtering configuration by higher layers. As an example, the wireless device 2102 may determine $PL_c$ as follows:

$$PL_c = referenceSignalPower - higher\ layer\ filtered\ RSRP,$$

where referenceSignalPower may be provided by higher layers, and where RSRP may comprise the linear average over the power contributions of the resource elements that carry cell-specific reference signals (CRS) within a considered measurement frequency bandwidth. The considered measurement frequency bandwidth may be for the reference serving cell, and the higher layer filter configuration may determine high layer filtered RSRP for the reference serving cell. If a wireless device transmits a PRACH preamble, the wireless device may determine the PRACH preamble transmit power based on the initial target power and a power offset. The power offset may be a value (e.g., configured, or predefined) related to at least one of: a PRACH format, or a PRACH numerology.

The wireless device may determine PREAMBLE_RECEIVED_TARGET POWER using, e.g., preambleInitialReceivedTargetPower and DELTA_PREAMBLE, for an initial preamble transmission, as follows:

$$PREAMBLE\_RECEIVED\_TARGET\_POWER = preambleInitialReceivedTargetPower + $$
$$DELTA\_PREAMBLE$$

The value preambleInitialReceivedTargetPower, may be provided by a high layer signaling (e.g., RRC), and may be represented as follows:

preambleInitialReceivedTargetPower     ENUMERATED { dBm-120, dBm-118, dBm-116, dBm-114, dBm-112, dBm-110, dBm-108, dBm-106, dBm-104, dBm-102, dBm-100, dBm-98, dBm-96, dBm-94, dBm-92, dBm-90}

DELTA_PREAMBLE may comprise a parameter related to a preamble format, such as shown in Table 1. DELTA_PREAMBLE may be predefined. A preamble format may be configured by a RRC signaling.

Table 1: DELTA PREAMBLE values.

| Preamble Format | DELTA_PREAMBLE value |
| --- | --- |
| 0 | 0 dB |
| 1 | 0 dB |
| 2 | -3 dB |
| 3 | -3 dB |
| 4 | 8 dB |

A wireless device may determine a path loss based on a layer 1 RSRP value. The wireless device may determine the layer 1 RSRP value based on one or more measurements of CSI-RSs. As an example, the wireless device 2102 may determine $PL_c$ as follows:

$$PL_c = \text{referenceSignalPower} - \text{layer 1 RSRP},$$

 where referenceSignalPower may be provided by higher layers, and where layer 1 RSRP may comprise the linear average over the power contributions of the resource elements that carry CSI-RS within a considered measurement frequency bandwidth. The considered measurement frequency bandwidth may be for the reference serving cell. If a wireless device transmits a PRACH preamble, the wireless device may determine the PRACH preamble transmit power based on the initial target power and a power offset. The power offset may be a value (e.g., configured, or predefined) related to at least one of: a PRACH format, or a PRACH numerology.

The wireless device 2102 may determine a transmission power for a random access preamble (e.g., a PRACH) as described above, during step 2112. At step 2107, the wireless device 2102 may determine a transmission power for a BFR preamble based on a target received of a BFR-PRACH. The target received power of a BFR-PRACH transmission may be based on at least one of: the initial received target power of the RA preamble (e.g., PRACH), the power offset of the RA preamble, and/or the additional power offset of the BRE preamble (e.g., BFR-PRACH).

Additionally or alternatively, at step 2107, the wireless device 2102 may determine an additional power offset of a BFR-PRACH transmission based on one or more of: transmission power difference of RSs, received power difference of RSs, or power control commands. The wireless device 2102 may determine a transmitted or received power difference at least between a first CSI-RS resource and a second CSI-RS resource, between CSI-RSs and SS blocks, between SS blocks and DM-RSs of PBCH, or between CSI-RSs and DM-RSs of PBCH. For example, if the wireless device 2102 is configured with an RSRP measurement based on a CSI-RS, the wireless device 2102 may determine a power offset based on power difference between the CSI-RS and SS blocks.

Additionally or alternatively, the wireless device 2102 may determine a Layer 1 RSRP based on RS resources. The RS resources may be at least one of: CSI-RS resources, SS blocks, and/or DM-RSs of PBCH.

At step 2108, the wireless device 2102 may transmit a BFR preamble using the BFR preamble transmission power determined from step 2107. The BFR transmission power may be determined so as to increase the likelihood that the base station 2101 receives the BFR preamble at step 2109.

At step 2109, the base station 2101 may receive the BFR preamble and proceed with a BFR procedure. At step 2110, the base station 2101 may determine to initiate a random access procedure. At step 2111, the base station 2101 may transmit, and the wireless device 2102 may receive, a PDCCH order to initiate the random access procedure. For example, the base station 2101 may transmit a downlink control information in response the BFR preamble. The base station 2101 may successfully finish the BFR procedure.

At step 2112, the wireless device 2102 may determine a transmission power for the random access procedure. The wireless device may determine the transmission power as described above for an RA preamble (e.g., PRACH). For example, the preamble transmission power for an RA procedure (e.g., a PRACH) may be determined as follows:

$$P_{\text{PRACH}} = \min\{\, P_{\text{CMAX,c}}(i), \ \text{PREAMBLE\_RECEIVED\_TARGET\_POWER} + PL_c \,\},$$

where $P_{\text{CMAX,c}}(i)$ is a configured wireless device transmit power for subframe i of serving cell $c$, and $PL_c$ is a downlink path loss estimation calculated by the wireless device for serving cell $c$. The wireless device 2102 may determine a path loss based on a high layer filtered RSRP. The wireless device may determine the high layer filtered RSRP based on one or more measurements of CRS and a filtering configuration by higher layers. As an example, the wireless device 2102 may determine $PL_c$ as follows:

$$PL_c = \text{referenceSignalPower} - \text{higher layer filtered RSRP},$$

where referenceSignalPower may be provided by higher layers, and where RSRP may comprise the linear average over the power contributions of the resource elements that carry cell-specific reference signals (CRS) within a considered measurement frequency bandwidth. The considered measurement frequency bandwidth may be for the reference serving cell, and the higher layer filter configuration may determine high layer filtered RSRP for the reference serving cell. If a wireless device transmits a PRACH preamble, the wireless device may determine the PRACH preamble transmit power based on the initial target power and a power offset. The power offset may be a value (e.g., configured, or predefined) related to at least one of: a PRACH format, or a PRACH numerology.

The wireless device may determine PREAMBLE_RECEIVED_TARGET_POWER using, e.g., preambleInitial-ReceivedTargetPower and DELTA_PREAMBLE, for an initial preamble transmission, as follows:

$$\text{PREAMBLE\_RECEIVED\_TARGET\_POWER=preambleInitialReceivedTargetPower} \ +$$

$$\text{DELTA\_PREAMBLE}$$

The value preambleInitialReceivedTargetPower, may be provided by a high layer signaling (e.g., RRC), and may be represented as follows:

preambleInitialReceivedTargetPower     ENUMERATED{ dBm-120, dBm-118, dBm-116, dBm-114, dBm-112, dBm-110, dBm-108, dBm-106, dBm-104, dBm-102, dBm-100, dBm-98, dBm-96, dBm-94, dBm-92, dBm-90}

DELTA_PREAMBLE may comprise a parameter related to a preamble format, such as shown in Table 1 above. DELTA_PREAMBLE may be predefined. A preamble format may be configured by a RRC signaling.

Additionally or alternatively, the wireless device 2102 may determine a Layer 1 RSRP based on RS resources. The RS resources may be at least one of: CSI-RS resources, SS blocks, and/or DM-RSs of PBCH.

At step 2113, the wireless device 2102 may transmit a random access preamble procedure (e.g., PRACH) for achieving uplink synchronization. The wireless device 2102 may transmit the random access preamble, e.g., via an uplink signal or channel, using the random access preamble transmission power determined in step 2112. The uplink signal or channel may comprise, e.g., a PRACH, a scheduling request, or a PUCCH transmission. In an RRC-CONNECTED state, the wireless device 2102 may maintain downlink and uplink synchronization with the base station 2101. The wireless deice 2102 transmit an initial PRACH preamble using an initial preamble transmission power. The wireless device 2102 may employ an open loop control with full compensation for the path loss for the preamble transmission.

At step 2114, the base station 2101 may proceed with a random access procedure, e.g., after or in response to receiving the random access preamble. The base station 2101 and the wireless device 2102 may perform the random access procedure described above regarding steps 1605 to 1609 in FIG. 16.

Any base station or wireless device may perform any combination of one or more of the above steps of FIG. 21. A core network device, or any other device, may perform any combination of a step, or a complementary step, of one or more of the above steps. Some or all of these steps may be performed, and the order of these steps may be adjusted. For example, one or more of steps 2105-2109 or one or more of steps 2110-2114 may not be performed. As other examples, steps 2110-2114 may be performed before, in parallel, or after steps 2105-2109; and/or step 2105 may be performed before step 2111 and step 2114 may be performed before step 2109 (e.g., the time duration of steps 2105-2109 may exceed the time duration of steps 2110-2114). Additional steps may also be performed.

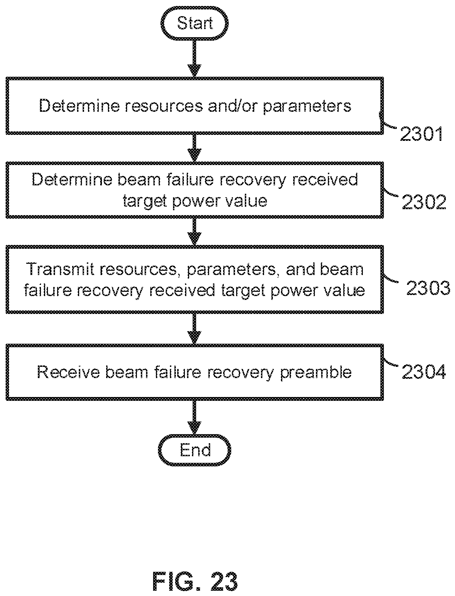

FIG. 23 shows an example of a beam failure recovery procedure that may be performed by a base station. This beam failure recovery procedure may be used to determine a BFR transmission power based on a received target power value for a BFR transmission. At step 2301, a base station may determine resources and/or parameters for a BFR preamble (e.g., BFR-PRACH). The resources may comprise reference signals, and the parameters may comprise received target power values. For example, the resources and/or parameters may comprise one or more of the following: CSI-RS resources, QCL parameters between CSI-RS and DM-RS of a control channel, transmission power of CSI-RS resources, BFR-PRACH resources, or initial received target power of BFR-PRACH.

At step 2302, the base station may determine a BFR received target power value, e.g., an indication of an initial target received power of the BFR preamble transmission. The BFR received target power value may be based on one or more of: a preamble format, a measured uplink interference and noise level in the time/frequency resource allocated to BFR-PRACH preambles, power control commands, a desired received signal to interference plus noise ratio (SINR), transmit power difference between SS blocks and CSI-RSs, or transmit power difference between SS blocks and DM-RSs of PBCH.

At step 2303, the base station may transmit resources, parameters, and/or the BFR received target value. For example, the base station may transmit one or more messages comprising configuration parameters that may comprise one or more of: CSI-RS resources, QCL parameters between CSI-RS and DM-RS of a control channel, transmission power of CSI-RS resources, BFR-PRACH resources, or initial received target power of a BFR-PRACH. The base station may transmit the one or more messages, e.g., via RRC signaling, via MAC signaling, via an L1 downlink control channel, via device-specific (e.g., wireless device-specific) signaling (e.g., RRC), or via cell-specific signaling (e.g., RRC).

At step 2304, the base station may receive a BFR preamble. The BFR preamble may be received via resources identified in a transmission from step 2303. The BFR preamble may be transmitted using a transmission power based on the initial received target power of a BFR-PRACH from step 2303. By receiving the BFR preamble, the base station may determine that a beam failure has occurred. After or in response to receiving the BFR preamble, the base station may proceed with a BFR procedure.

Any base station may perform any combination of one or more of the above steps of FIG. 23. A wireless device, core network device, or any other device, may perform any combination of a step, or a complementary step, of one or more of the above steps. Some or all of these steps may be performed, and the order of these steps may be adjusted. For example, one or more of step 2302 or step 2304 may not be performed. As another example, step 2302 may be performed before step 2301, or step 2303 may be performed before step 2302. Additional steps may also be performed.

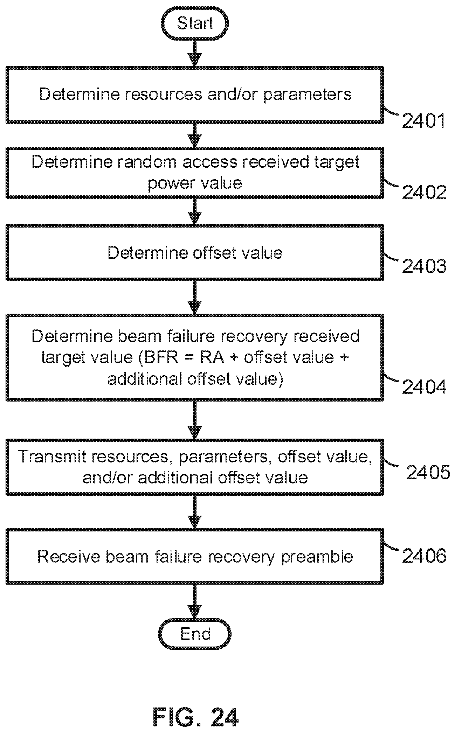

FIG. 24 shows an example of a beam failure recovery preamble procedure using offsets (e.g., power offsets) that may be performed by a base station. The power offsets may be determined by a base station and used by a wireless device to determine an amount of power for a BFR transmission above a power for an RA transmission (e.g., a non-BFR PRACH transmission). At step 2401, a base station may determine resources and/or parameters for a random access (RA) procedure and/or for a BFR procedure. The resources may comprise reference signals.

At step 2402, the base station may determine a received target power value for a random access procedure, e.g., an initial received target power of a PRACH preamble. The random access received target power value may be used by a wireless device if, e.g., the wireless device transmits an RA preamble (e.g., PRACH preamble). The first RA preamble may be for uplink synchronization. At step 2403, the base station may determine an offset. The offset may comprise an offset value to be added to the random access received target power value for determining a transmission power of an RA preamble. The offset may be a value (e.g., configured, or predefined) related to at least one of: a PRACH format, or a PRACH numerology.

At step 2404, the base station may determine a BFR received target value. The BFR received target value may be determined by, e.g., adding the offset value to the random access received target power value, and adding an additional offset value. The additional offset value may correspond to a power value for a BFR preamble transmission power that is above an RA preamble transmission power value. By determining a BFR received target value comprising an additional offset, the base station can increase the likelihood that a BFR preamble is transmitted by a wireless device with sufficient transmission power to be received by the base station. The base station may determine a value of the additional offset based on one or more of at least: a preamble format, a preamble numerology, a measured uplink interference and noise level in the time/frequency resource allocated to BFR-PRACH or RA (e.g., PRACH) preambles, power control commands, a desired received signal to interference plus noise ratio (SINR) for detecting a BFR-PRACH preamble, a transmit power difference between SS blocks and CSI-RSs, or a transmit power difference between SS blocks and DM-RSs of a PBCH.

At step 2405, the base station may transmit, e.g., to a wireless device, the resources, parameters, offset value, and/or additional offset value. For example, the base station may transmit one or more messages comprising configuration parameters of a BFR-PRACH. The configuration parameters of the BFR-PRACH may comprise an additional offset. The additional offset may indicate a power offset for a BFR-PRACH transmission power above a random access preamble (e.g., PRACH) transmission power. The base station may transmit the one or more messages, e.g., via device-specific (e.g., wireless device-specific) RRC signaling, or via cell-specific RRC signaling. A wireless device may determine a target received power of a BFR-PRACH transmission by at least one of: the initial received target power of an RA preamble (e.g., PRACH), the power offset of the RA preamble, and/or the additional power offset of the BFR-PRACH.

As shown in FIG. 22, described above, a base station may transmit a configuration of an additional BFR-PRACH power offset 2204 after the base station transmits a RACH configuration 2203.

The base station may transmit, e.g., at step 2405, one or more messages comprising configuration parameters that may comprise one or more of: CSI-RS resources, QCL parameters between CSI-RS and DM-RS of a control channel, transmission power of CSI-RS resources, BFR-PRACH resources or an additional BFR-PRACH power offset. The base station may transmit the one or more messages via RRC signaling, via MAC signaling, and/or via an L1 downlink control channel.

Any base station may perform any combination of one or more of the above steps of FIG. 24. A wireless device, core network device, or any other device, may perform any combination of a step, or a complementary step, of one or more of the above steps. Some or all of these steps may be performed, and the order of these steps may be adjusted. For example, one or more of step 2402 or step 2406 may not be performed. As another example, one or more of steps 2401-2404 may be performed in parallel. Additional steps may also be performed.

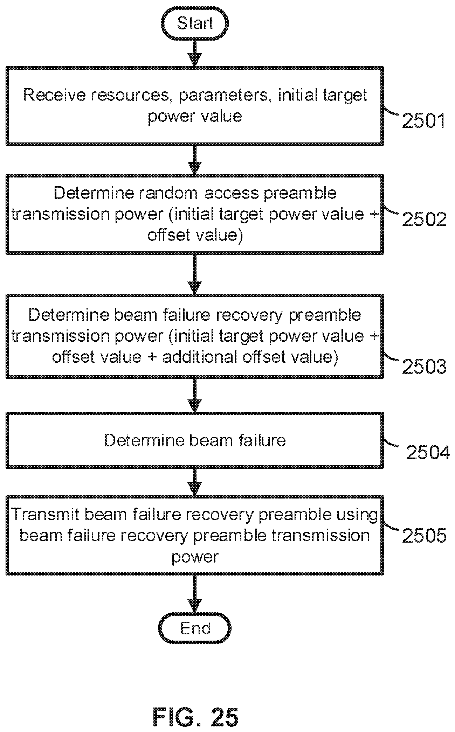

FIG. 25 shows an example of a beam failure recovery preamble procedure using offsets (e.g., power offsets) that may be performed by a wireless device. The power offsets may be determined by a wireless device, and the wireless device may use the power offsets to determine an amount of power for a BFR transmission above a power for an RA transmission (e.g., a non-BFR PRACH transmission). At step 2501, a wireless device may receive, from a base station, resources, parameters, and/or an initial target power value. For example, the wireless device may receive one or more messages comprising configuration parameters of a RA (e.g., RACH) procedure via RRC signaling. The configuration parameters of the RA procedure may comprise an initial received target power of an RA preamble. The resources may comprise, and/or the parameters may indicate, RS resources for one or more RSRP measurements. The RS resources may comprise at least one of: CSI-RSs, SS blocks and/or DM-RSs of a PBCH. The parameters may comprise a first type of RSs for channel quality measurement of initial access, and a second type of RSs for channel quality measurement of a BFR request. The wireless device may employ initial access based on channel quality measurement on SS blocks, and/or the wireless device may employ a BFR request transmission based on channel quality measurement on CSI-RSs.

At step 2502, the wireless device may determine a random access preamble transmission power. For example, if a wireless device is to transmit an RA preamble (e.g., a PRACH preamble), the wireless device may determine the RA preamble transmission power based on the initial target power and a power offset. For example, the wireless device may determine an offset value (e.g., power offset) and the wireless device may determine the RA preamble transmission power by adding the offset value to the initial target power value. The offset value may be a configured or predefined value related to at least one of: a PRACH format, or a PRACH numerology.

At step 2503, the wireless device may determine a beam failure recovery preamble transmission power. The BFR preamble transmission power may be based on an additional offset value (e.g., additional power offset). For example, the wireless device may determine the BFR preamble transmission power by adding the RA preamble transmission power (e.g., a sum of the initial target power and an offset value) with an additional offset. The additional offset value for a BFR preamble (e.g., BFR-PRACH) transmission may be based on one or more of: transmission power difference of RSs, received power difference of RSs, or power control commands. For example, the wireless device may determine a transmitted or received power difference at least between a first CSI-RS resource and a second CSI-RS resource, or between CSI-RSs and SS blocks, or between SS blocks and DM-RSs of a PBCH, or between CSI-RSs and DM-RSs of a PBCH. For example, if a wireless device is configured with an RSRP measurement based on a CSI-RS, the wireless device may determine the additional power offset based on power difference between the CSI-RS and SS blocks. The wireless device may determine a target received power of a BFR preamble (e.g., BFR-PRACH) transmission by at least one of: the initial received target power of the RA preamble (e.g., PRACH), the power offset of the RA preamble, and/or the additional power offset of the BFR preamble (e.g., BFR-PRACH).

At step 2504, the wireless device may determine a beam failure. The wireless device may determine the beam failure as described above regarding step 2106 shown in FIG. 21. At step 2505, the wireless device may transmit, to a base station, a BFR preamble using the beam failure recovery preamble transmission power determined at step 2503.

Any wireless device may perform any combination of one or more of the above steps of FIG. 25. A base station, core network device, or any other device, may perform any combination of a step, or a complementary step, of one or more of the above steps. Some or all of these steps may be performed, and the order of these steps may be adjusted. For example, step 2502 may not be performed. As another example, one or more of step 2502 or step 2503 may be performed after step 2504. As another example, step 2502 and step 2503 may be performed in parallel. Additional steps may also be performed.

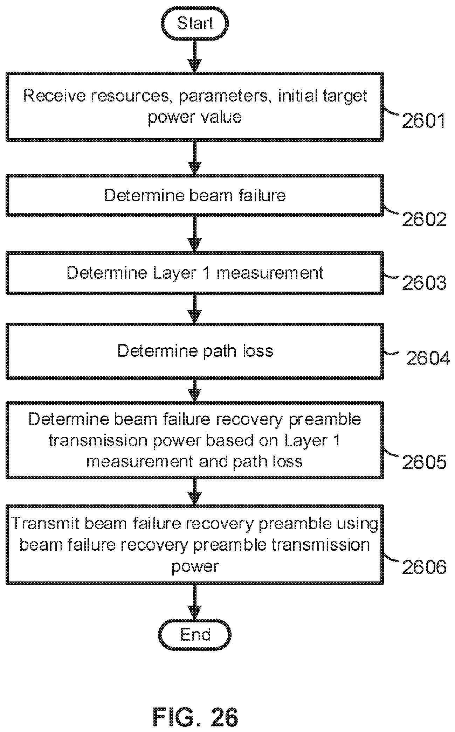

FIG. 26 shows an example of a beam failure recovery preamble procedure by a wireless device using Layer 1 measurement and path loss. In contrast to a high layer filtered RSRP, a Layer 1 RSRP based on RS resources may be performed more quickly with less processing. At step 2601, the wireless device may receive resources, parameters, and/or an initial target power value. Step 2601 may correspond to the same step as step 2501 described above. For example, the wireless device may receive one or more messages comprising configuration parameters that may comprise one or more of: SS blocks, transmission power of SS blocks, CSI-RS resources, transmission power of CSI-RS resources, DM-RSs resources of a PBCH, or transmission power of DM-RSs of a PBCH.

At step 2602, the wireless device may determine a beam failure. Step 2602 may correspond to the same step as step 2504 described above.

The wireless device may determine a BFR preamble (e.g., BFR request) transmission power by steps 2603-2605. At step 2603, the wireless device may determine a Layer 1 RSRP based on RS resources received at step 2601. The RS resources may comprise one or more of: CSI-RS resources, SS blocks, or DM-RSs of a PBCH. The wireless device may be configured (e.g., by a base station) with a layer 1 RSRP measurement employed on CSI-RS resources, or SS blocks, or DM-RSs of a PBCH, or any combination thereof. The wireless device may determine a Layer 1 RSRP measurement, e.g., by averaging multiple measurements on multiple beams. Additionally or alternatively, the wireless device may determine a Layer 1 RSRP measurement by selecting from multiple measurements on multiple beams, e.g., based on a selection criterion. For example, a selection criterion may be that a specific beam indicated by a base station to the wireless device is selected, that an RSRP measurement with the best beam link quality of a beam (e.g., the beam having the highest RSRP value among multiple beams) is selected, and/or that an RSRP measurement with the worst beam link quality of a beam (e.g., the beam having the lowest RSRP value among multiple beams) is selected. The wireless device may determine a Layer 1 CSI-RS RSRP value for a beam, and/or determine a Layer 1 CSI-RS RSRP value for a beam set, e.g., if the wireless device is configured with multiple CSI-RS resource sets, and/or with a CSI-RS resource set with multiple CSI-RS resources. A Layer 1 CSI-RS RSRP value may comprise a linear average over the power contributions of the resource elements that carry CSI-RSs, associated with a beam, within the considered measurement frequency location, for a reference serving cell.

At step 2604, the wireless device may determine a path loss. The wireless device may determine a path loss, e.g., by using a reference signal power value obtained and a Layer 1 RSRP measured, as follows:

$$PL_c = \text{ReferenceSignalPower} - \text{RSRP}$$

At step 2605, the wireless device may determine a BFR preamble transmission power based on Layer 1 measurement and/or path loss. For example, the wireless device may transmit a BFR request via a BFR-PRACH with a transmit power determined by a path loss. Additionally or alternatively, the wireless device may determine a path loss based on a Layer 1 RSRP measurement of RS resources associated with one or multiple serving beams, or one or more candidate beams. The wireless device may determine the BFR preamble (e.g., BFR-PRACH) transmission power as follows:

$$P_{\text{BFR-PRACH}} = \min\{ P_{\text{CMAX}}, \text{ initial received target power} + PL_c \},$$

where $P_{\text{CMAX}}$ is a configured wireless device transmit power.

At step 2606, the wireless device may transmit a BFR preamble using the BFR preamble transmission power determined at step 2606. The wireless device may transmit the BFR preamble as described above regarding step 2112 shown in FIG. 21.

Any wireless device may perform any combination of one or more of the above steps of FIG. 26. A base station, core network device, or any other device, may perform any combination of a step, or a complementary step, of one or more of the above steps. Some or all of these steps may be performed, and the order of these steps may be adjusted. For example, one or more of steps 2603-2605 may be performed before step 2602. As another example, one or more of step 2603, step 2604, or step 2605 may be performed in parallel. Additional steps may also be performed.

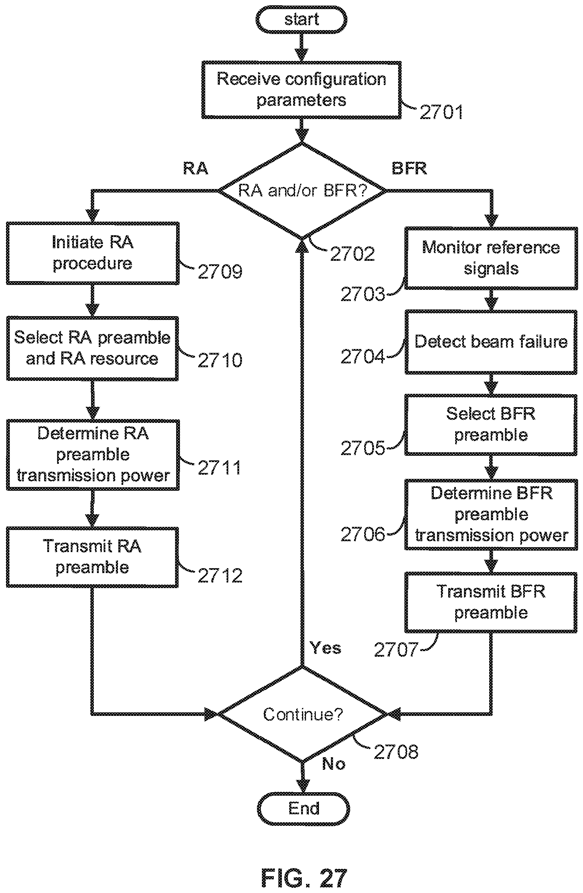

FIG. 27 shows an example of procedures for random access preamble transmission and beam failure recovery preamble transmission by a wireless device. At step 2701, the wireless device may receive configuration parameters. Step 2701 may correspond to the same step as step 2104 (FIG. 21), step 2501 (FIG. 25), or step 2601 (FIG. 26) described above. At step 2702, the wireless device may determine whether to perform an RA procedure and/or a BFR procedure. For example, if the configuration parameters comprise PRACH resource and BFR-PRACH resources, the wireless device may determine to perform both an RA procedure and a BFR procedure. If the configuration parameters do not comprise BFR-PRACH resources, the wireless device may determine to perform an RA procedure but not a BFR procedure. If the configuration parameters comprise BFR-PRACH resources but not RA resources, the wireless device may determine to perform a BFR procedure but not an RA procedure. As another example, a wireless device may monitor an RS (e.g., at step 2703) and, at the same, overlapping, or similar time, the wireless device may receive a PDCCH order (e.g., to initiate an RA procedure at step 2709).

If the wireless device determines to perform a BFR procedure, the wireless device may monitor reference signals at step 2703. Step 2703 may correspond to the same step as step 2105 (FIG. 21) described above. For example, the wireless device may monitor RSs for beam failure detection and recovery based on a first threshold and/or a second threshold. The wireless device may detect a beam failure at step 2704, which may correspond to the same step as step 2106 (FIG. 21) described above. For example, detecting a beam failure may be based on a channel quality of one or more first RSs (e.g., for a serving beam) being below the first threshold and/or one or more second RSs (e.g., for a candidate beam) being above the second threshold (e.g., to identify a potential candidate beam). At step 2705, the wireless device may select a BFR preamble, e.g., after or in response to detecting the beam failure. The BFR preamble may be selected based on its association with BFR resources corresponding to RSs identified in step 2703. At step 2706, the wireless device may determine a BFR preamble transmission power, which may correspond to the same step as step 2107 (FIG. 21), step 2503 (FIG. 25), or step 2605 (FIG. 26) described above. At step 2707, the wireless device may transmit the BFR preamble, which may correspond to the same step as step 2108 (FIG. 21), step 2505 (FIG. 25), or step 2606 (FIG. 26) described above. At step 2708, the wireless device may determine whether to continue or end the procedures. If the wireless device determines to continue the procedures, e.g., to proceed with an RA procedure or an additional BFR procedure, the wireless device may return to step 2702.

If the wireless device determines to perform an RA procedure, at step 2702, the wireless device may proceed to initiate an RA procedure at step 2709. The wireless device may receive a PDCCH order and the wireless device may initiate the RA procedure after or in response to receiving the PDCCH order. The wireless device may initiate the RA procedure, without receiving a PDCCH order, e.g., for uplink synchronization. At step 2710, the wireless device may select an RA preamble and/or an RA resource. The wireless device may have received the RA preamble and/or the RA resource at step 2701. Step 2710 may correspond to the same step as step 2107 (FIG. 21) described above. At step 2711, the wireless device may determine the RA preamble transmission power, which may correspond to the same step as step 2112 (FIG. 21) or step 2502 (FIG. 25) described above. At step 2712, the wireless device may transmit the RA preamble, which may correspond to the same step as step 1605 (FIG. 16) or step 2113 (FIG. 21) described above. At step 2708, the wireless device may determine whether to continue or end the procedures. If the wireless device determines to continue the procedures, e.g., to proceed with an additional RA procedure or a BFR procedure, the wireless device may return to step 2702.

Any wireless device may perform any combination of one or more of the above steps of FIG. 27. A base station, a core network device, or any other device, may perform any combination of a step, or a complementary step, of one or more of the above steps. Some or all of these steps may be performed, and the order of these steps may be adjusted. For example, one or more of steps 2709-2712 or one or more of steps 2703-2707 may not be performed. As other examples, steps 2709-2712 may be performed before, in parallel, or after steps 2703-2707; and/or step 2703 may be performed before step 2709 and step 2712 may be performed before step 2707 (e.g., the time duration of steps 2703-2707 may exceed the time duration of steps 2709-2712). Additional steps may also be performed.

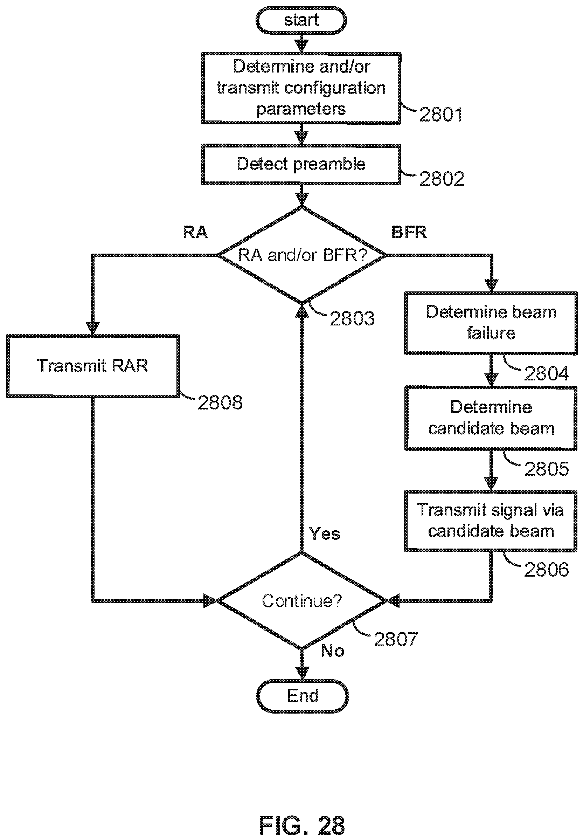

FIG. 28 shows an example of random access and beam failure recovery procedures by a base station. At step 2801, the base station may determine and/or transmit configuration parameters. Step 2801 may correspond to the same step as step 2103 (FIG. 21), step 2301 (FIG. 23), or step 2401 (FIG. 24) described above. At step 2802, the base station may detect one or more preambles, which may correspond to the same step as step 2109 or step 2114 (FIG. 21). For example, the base station may monitor PRACH resources determined in step 2801. Each PRACH resource may be associated with a preamble. By determining a PRACH resource includes a signal, the base station may determine that a preamble associated with that PRACH resource has been detected. At step 2803, the base station may determine whether to perform an RA procedure and/or a BFR procedure. For example, if the one or more preambles detected in step 2802 are associated with PRACH resource and BFR-PRACH resources, the base station may determine to perform both an RA procedure and a BFR procedure. If the one or more preambles detected in step 2802 are not associated with BFR-PRACH resources, the base station may determine to perform an RA procedure but not a BFR procedure. If the one or more preambles are associated with BFR-PRACH resources but not RA resources, the base station may determine to perform a BFR procedure but not an RA procedure.

If the base station determines to perform a BFR procedure, the base station may determine a beam failure at step 2804, which may correspond to the same step as step 2109 (FIG. 21) described above. For example, determining a beam failure may comprise determining that a BFR-PRACH preamble received in step 2802 was associated with a candidate beam, and/or determining that a BFR-PRACH preamble was received using resources and/or parameters that are not associated with a serving beam via which the base station transmitted the configuration parameters in step 2801. At step 2805, the base station may determine a candidate beam. The candidate beam may be determined based on one or more measurements of RSs. For example, the base station may determine a candidate beam associated with a highest signal quality measurement. At step 2806, the base station may transmit a signal via a candidate beam determined at step 2805. For example, the base station may transmit a control signal (e.g., PDCCH DCI) using the candidate beam, and/or the base station may transmit a data packet using the candidate beam. At step 2807, the base station may determine whether to continue or end the procedures. If the base station determines to continue the procedures, e.g., to proceed with an RA procedure or an additional BFR procedure, the base station may return to step 2803.

If the base station determines to perform an RA procedure, at step 2803, the base station may proceed with an RA procedure by transmitting a random access response (RAR) at step 2808. Step 2808 may correspond to the same step as step 1606 (FIG. 16) described above. The base station may proceed with remaining steps for an RA procedure that may correspond to steps 1607-1609 (FIG. 16) described above. At step 2807, the base station may determine whether to continue or end the procedures. If the base station determines to continue the procedures, e.g., to proceed with an additional RA procedure or a BFR procedure, the wireless device may return to step 2803.

Any base station may perform any combination of one or more of the above steps of FIG. 28. A wireless device, a core network device, or any other device, may perform any combination of a step, or a complementary step, of one or more of the above steps. Some or all of these steps may be performed, and the order of these steps may be adjusted. For example, step 2808 or one or more of steps 2804-2806 may not be performed. As another example, step 2808 may be performed before, in parallel, or after steps 2804-2806. Additional steps may also be performed.

If a beam failure occurs, a beam failure recovery procedure may be performed. A wireless device may send, to a base station, a beam failure recovery (BFR) request. The wireless device may send the BFR request via, e.g., a PRACH resource. Different types of BFR requests may be sent based on a type of beam failure. As an example, a wireless device may transmit a type 1 BFR request or a type 2 BFR request. Examples for type 1 and type 2 BFR requests are provided, however, any number of different types of BFR requests may be used, e.g., to indicate any number of different conditions. A base station may send, to the wireless device, a BFR type indicator. The BFR type indicator may provide an indication to the wireless device, e.g., prior to the wireless device experiencing a beam failure event, what type of BFR request to send after detecting a beam failure. The BFR type indicator may indicate whether the wireless device must determine one or more candidate beams, and/or whether the wireless device should not determine any candidate beams.

By determining and using a BFR type indicator, a BFR request may indicate an occurrence of the beam failure detected at the wireless device (e.g., a wireless device may transmit a BFR request to a base station in response to identifying a beam failure). A BFR request may indicate the occurrence of the beam failure that may be detected by a wireless device, and/or a BFR request may indicate a candidate beam that may be selected by a wireless device. By determining whether a base station or a device should determine one or candidate beams, advantages may be provided. For example, detecting a beam failure may take less power of the wireless device than both detecting the beam failure and identifying a candidate beam. Additionally or alternatively, detecting a beam failure may take less time for a wireless device than both detecting a beam failure and identifying a candidate beam. A base station may take less time to recover the beam pair link if, e.g., a wireless device provides the candidate beam in a BFR request, than the time that may take the base station to recover the beam pair link if, e.g., the wireless device does not provide candidate beam information. As another example, a wireless device may not be capable of identifying a candidate beam, e.g., due to lack of beam correspondence between a transmitting beam and a receiving beam. Or, a wireless device may be capable of identifying a candidate beam. By enabling a base station and/or a wireless device to decide a type of BFR request that will be transmitted if a beam failure occurs improvements may include, e.g., reduced battery or power consumption by a wireless device, and/or reduced time spent by a base station and/or by a wireless device for a BFR procedure.

A type 1 BFR request may correspond to a BFR request that lacks candidate beam identifier information. A base station may indicate in a message to a wireless device that the wireless device is not to provide a candidate beam identifier information in a BFR request. A wireless device may use a PRACH, associated with a CSI-RS resource, to transmit a type 1 BFR request corresponding to the CSI-RS resource, if a triggering condition is met. A triggering condition for a type 1 BFR request may comprise a determination that the RSRP of the CSI-RS is lower than a first threshold. Additionally or alternatively, the triggering condition for a type 1 BFR request may comprise an expiration of a first timer associated with a condition, such as a duration of the RSRP of the CSI-RS being lower than the first threshold. The first threshold and/or the first timer may be associated with a predefined value. Additionally or alternatively, the first threshold and/or the first timer may be configured by one or more messages. A type 1 BFR request may be triggered by each of a plurality of conditions or by the occurrence of all or some combination of a plurality of conditions. A plurality of thresholds may be used, and/or a plurality of timers may be used, to determine whether a triggering condition for a type 1 BFR request has occurred.

A type 2 BFR request may correspond to a BFR request that includes candidate beam identifier information. A base station may indicate in a message to a wireless device that the wireless device is to provide candidate beam identifier information in a BFR request. A type 2 BFR request may be indicated by a base station if, e.g., a wireless device has indicated a capability to make a candidate beam selection and/or if the base station determines that the wireless device may have better information or capability to make a candidate beam selection for itself than the base station may be able to do for the wireless device. A wireless device may use a PRACH, associated with a CSI-RS resource, to transmit a type 2 BFR request corresponding to the CSI-RS resource, if a triggering condition is met. The type 2 BFR request may indicate a candidate beam associated with the CSI-RS and the PRACH resource. A triggering condition for a type 2 BFR request may comprise a determination that the RSRP of the one or multiple serving beams is lower than a second threshold. Additionally or alternatively, the triggering condition for a type 2 BFR request may comprise an expiration of a second timer associated with a condition, such as a duration of the RSRP of the one or multiple serving beams being lower than the second threshold. The second threshold and/or the second timer may be associated with a predefined value. Additionally or alternatively, the second threshold and/or the second timer may be configured by one or more messages. A type 2 BFR request may be triggered by each of a plurality of conditions or by the occurrence of all or some combination of a plurality of conditions. A plurality of thresholds may be used, and/or a plurality of timers may be used, to determine whether a triggering condition for a type 2 BFR request has occurred. As an example, a triggering condition for a type 2 BFR request may comprise a determination that the RSRP of a candidate beam is higher than a third threshold, and/or upon the expiration of a third timer. As another example, a triggering condition for a type 2 BFR request may comprise a combination of both the RSRP of one or multiple serving beams being lower than a second threshold and the RSRP of a candidate beam being higher than a third threshold. Any of the above conditions may be further based on an expiration of one or more timers, such that the condition must be present for a duration of time until a triggering condition is satisfied. The second threshold may be the same or different from (e.g., greater or less than) the third threshold, and the second and/or third threshold referenced above for type 2 BFR requests may be the same or different from (e.g., greater or less than) the first threshold referenced above for type 1 BFR requests.

To determine a beam failure event and/or to determine a candidate beam, a wireless device may measure RSRP based on CSI-RS RSRP or other RSs. A wireless device may measure RSRP, e.g., on one or multiple SS blocks, and/or on one or multiple DM-RSs on a PBCH. A base station may transmit, to the wireless device, one or more messages indicating an RS resource to be used for the measurement, and/or indicating an RS resource to be used for the measurement is QCLed with DM-RSs of a downlink control channel. A wireless device may measure a RSRQ value, or a CSI value based on RS resources, e.g., to determine a quality of a candidate beam and/or a beam pair link.

A base station may configure a wireless device with a type of BFR request by using a RRC signaling. A base station may send one or more RRC messages comprising configuration parameters of a cell. The configuration parameters may comprise one or more first reference signal resource parameters of a first plurality of reference signals, one or more second reference signal resource parameters of a second plurality of reference signals, one or more random access preambles, and/or a beam failure recovery type indicator (e.g., indicating a type 1 BFR request or a type 2 BFR request).

A wireless device may receive at least one radio resource control (RRC) message comprising configuration parameters of a cell. The configuration parameters may comprise, e.g., one or more channel state information reference signal (CSI-RS) resource parameters of a plurality of CSI-RSs; and/or one or more parameters indicating that a first type beam failure recovery request, and/or a second type beam failure recovery request, is configured for the cell. Each CSI-RS may be associated with a beam. The wireless device may detect beam failure and/or whether the one or more beams associated with the one or more CSI-RSs meet a criterion. The wireless device may transmit a first preamble via a RACH resources of a first beam associated with a serving beam. Additionally or alternatively, the wireless may transmit a first preamble on multiple RACH resources associated with multiple beams.

A wireless device may receive, from a base station, one or more radio resource control messages comprising configuration parameters of a cell. The configuration parameters may comprise one or more first reference signal resource parameters of a first plurality of reference signals, one or more second reference signal resource parameters of a second plurality of reference signals, one or more random access preambles, and a beam failure recovery type indicator. The second plurality of reference signals may comprise at least one or more synchronization signal blocks, demodulation reference signals of a physical broadcast channel, or channel state information reference signals. The wireless device may detect, based on at least one of the first plurality of reference signals, at least one beam failure. The wireless device may detect at least one beam failure by determining that a first channel quality of at least one first reference signal of the first plurality of reference signals is below a first threshold, and/or by determining that a second channel quality of at least one second reference signal of the second plurality of reference signals is above a second threshold. The wireless device may select, e.g., after detecting at least one beam failure, a preamble of the one or more random access preambles. The wireless device may base its selection of a preamble on the beam failure recovery type indicator and a channel quality of the second plurality of reference signals. The wireless device may base its selection of a preamble on whether the wireless device detects at least one candidate reference signal of the second plurality of reference signals. The wireless device may transmit, via the cell, the selected preamble. The wireless device may transmit, based on the beam failure recovery type indicator indicating a beam failure recovery type other than a first beam failure recovery type (e.g., a type 2 BFR type or another BFR type other than a type 1 BFR type), an indication of a candidate beam.

A wireless device may receive, from a base station one or more radio resource control messages comprising configuration parameters of a cell, wherein the configuration parameters may comprise one or more resource parameters of a plurality of reference signals, and a beam failure recovery type indicator. The plurality of reference signals may comprise at least one of synchronization signal blocks, demodulation reference signals of a physical broadcast channel, or channel state information reference signals. The wireless device may detect, based on one or more of the plurality of reference signals, at least one beam failure. The wireless device may detect the at least one beam failure by, e.g., determining that a first channel quality of at least one first reference signal of the plurality of reference signals is below a first threshold, and/or determining that a second channel quality of at least one second reference signal of the plurality of reference signals is above a second threshold. The wireless device may determine, based on the beam failure recovery type indicator, a type of a beam failure recovery request for the at least one beam failure. Based on the type of the beam failure recovery request, the wireless device may select a first available random access channel resource for a transmission of the beam failure recovery request, or select a second random access channel resource, different from the first available random access channel resource, for the transmission of the beam failure recovery request. The wireless device may transmit, via the selected random access channel resource, the beam failure recovery request. The wireless device may search, based on the plurality of reference signals, for a candidate beam, select the second random access channel resource for the transmission of the beam failure recovery request, and transmit, via the second random access channel resource, the beam failure recovery request. Based on the searching, the wireless device may determine the candidate beam, and the wireless device may select the second random access channel resource by selecting a random access channel resource associated with the candidate beam. The wireless device may determine, prior to selecting the second random access channel resource for the transmission of the beam failure recovery request, that the searching for the candidate beam is unsuccessful.

A base station may determine, based on at least one of a first plurality of reference signals, at least one beam failure associated with a wireless device. The base station may determine, based on the at least one beam failure, a beam failure recovery type. The base station may determine the at least one beam failure by determining that a first channel quality of at least one first reference signal of the first plurality of reference signals is below a first threshold, and/or by determining that a second channel quality of at least one second reference signal of the second plurality of reference signals is above a second threshold. The base station may transmit, to the wireless device, one or more radio resource control messages comprising configuration parameters of a cell. The configuration parameters may comprise one or more first reference signal resource parameters of the first plurality of reference signals, one or more second reference signal resource parameters of a second plurality of reference signals, one or more random access preambles, and a beam failure recovery type indicator. The first plurality of reference signals and/or the second plurality of reference signals may comprise at least one or synchronization signal blocks, demodulation reference signals of a physical broadcast channel, or channel state information reference signals. The base station may receive, from the wireless device via the cell, the preamble. The preamble may be based on the beam failure recovery type indicator, and a channel quality of the second plurality of reference signals. By receiving the preamble, the base station may receive an indication of a candidate beam. The base station may make a determination, based on receiving the preamble, whether the wireless device received the beam failure recovery type indicator. A system may comprise a wireless device and a base station.

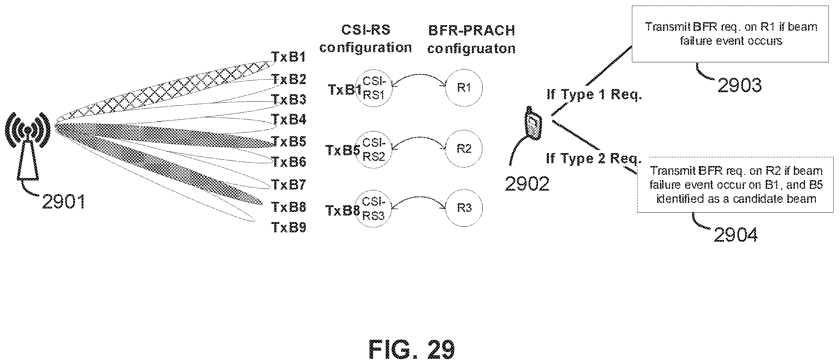

FIG. 29 shows an example of BFR request transmissions for different request types. A base station 2901 may transmit a plurality of transmit beams, e.g., TxB1 to TxB9. Nine transmit beams are shown, however, the base station 2901 may transmit any number of transmit beams. The transmit beams may comprise a serving beam, such as TxB1, as well as one or more configured and/or activated beams, such as TxB5 and TxB8. Each beam may have an associated CSI-RS configuration, such as CSI-RS1 to CSI-RS3, and/or an associated BFR-PRACH configuration (or RACH resource), such as R1 to R3. The base station 2901 may transmit one or more messages comprising configuration parameters indicating one of multiple types of BFR requests that a wireless device 2102 ay transmit. The wireless device 2902 may transmit a BFR request with information that may differ depending on a type (e.g., type 1 or type 2) of the BFR request. In the example 2903, if a type 1 BFR request is configured, the wireless device 2902 may transmit a BFR request on a RACH resource R1 if a beam failure occurs on a beam pair link between a serving beam TxB1 of the base station 2901 and a receiving beam of the wireless device. In the example 2904, if a type 2 BFR request is configured, the wireless device 2902 may transmit a BFR request on a RACH resource R2 indicating a beam B5 as a candidate beam, if the wireless device 2902 determines that a beam failure event has occurred on beam B1 and the wireless device 2902 determines that beam 5 is a candidate beam.

The base station 2901 may transmit to the wireless device 2902 one or more messages comprising configuration parameters indicating a first type BFR request or a second type BFR request. The wireless device 2902 may determine a beam failure on one or multiple serving beams, such as TxB1. The wireless device 2901 may determine a beam failure based on, e.g., measurement on RSs associated with the one or multiple serving beams. If the wireless device 2902 receives the one or more messages comprises configuration parameters that indicate a first type of BFR request, e.g., after or in response to determining a beam failure, the wireless device 2902 may transmit a first type BFR request on the BFR-PRACH resource associated with the one or multiple serving beams. If the wireless device 2902 receives the one or more messages comprises configuration parameters that indicate a second type of BFR request, e.g., after or in response to determining a beam failure, the wireless device 2902 may identify a candidate beam, e.g., from configured or activated multiple beams. The wireless device 2902 may also use the BFR-PRACH resource associated with the candidate beam to indicate the identified candidate beam associated with the BFR-PRACH. If the wireless device 2902 does not identify a candidate beam from configured or activated multiple beams, the wireless device 2902 may use the BFR-PRACH resource associated with the one or multiple serving beams to transmit a BFR request, indicating that there is no candidate beam.

The wireless device 2902 may determine a beam failure based one or more beam measurements. A beam failure may be determined for one or multiple serving beams. A beam failure may be determined based on one or more measurements on RSs associated with the one or multiple serving beams. A beam failure may be determined if, e.g., measurement on one or multiple beams are below a first threshold. Additionally or alternatively, a beam failure determination may be based on an expiration of a first timer associated with a condition. The wireless device 2902 may measure RSRP, e.g., based on CSI-RS RSRP or other RSs, for determining a beam failure event. For example, the wireless device 2902 may measure RSRP on one or multiple SS blocks, and/or one or multiple DM-RSs on PBCH. A beam failure determination may be based on any or more of the triggering conditions described herein.

The wireless device 2902 may identify a candidate beam based on one or more beam measurements. A candidate beam may be determined if, e.g., measurement on one or multiple beams are above a second threshold. Additionally or alternatively, a candidate beam determination may be based on an expiration of a second timer associated with a condition. The wireless device 2902 may measure RSRP, e.g., based on CSI-RS RSRP or other RSs, for determining a candidate beam. For example, the wireless device 2902 may measure RSRP on one or multiple SS blocks and/or one or multiple DM-RSs on PBCH. A candidate beam determination may be based on any or more of the triggering conditions described herein.

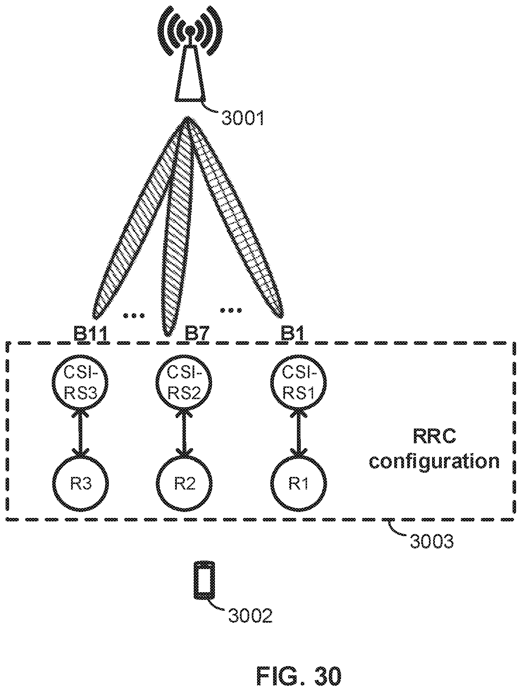

FIG. 30 shows an example of radio resource control (RRC) configurations for multiple beams. A base station 3001 may send, to a wireless device 3002, RRC configuration parameters 3003 of a plurality of beams B1 to B11. Each beam may have an associated set of RRC configuration parameters. Beam B1 may be associated with CSI-RS 1 and R1, beam B7 may be associated with CSI-RS2 and R2, and beam B11 may be associated with CSI-RS3 and R3. Beam B1 may be a serving beam and beam B7 and beam B8 may be candidate beams. If the wireless device 3002 receives RRC configuration parameters of beam B1, corresponding to R1, and if the wireless device 3002 detects a beam failure, the wireless device 3002 may send a preamble that corresponds to those parameters and, the wireless device 3002 may send the preamble via CSI-RS1 resources specified by those parameters. If the wireless device 3002 receives RRC configuration parameters of beam B7, corresponding to R2, and if the wireless device 3002 detects a beam failure, the wireless device 3002 may send a preamble that corresponds to those parameters and, the wireless device 3002 may send the preamble via CSI-RS2 resources specified by those parameters. If the wireless device 3002 receives RRC configuration parameters of beam B11, corresponding to R3, and if the wireless device 3002 detects a beam failure, the wireless device 3002 may send a preamble that corresponds to those parameters and, the wireless device 3002 may send the preamble via CSI-RS3 resources specified by those parameters. Any number of additional beams, or fewer beams, may be included, each having an associated CSI-RS and R parameters.

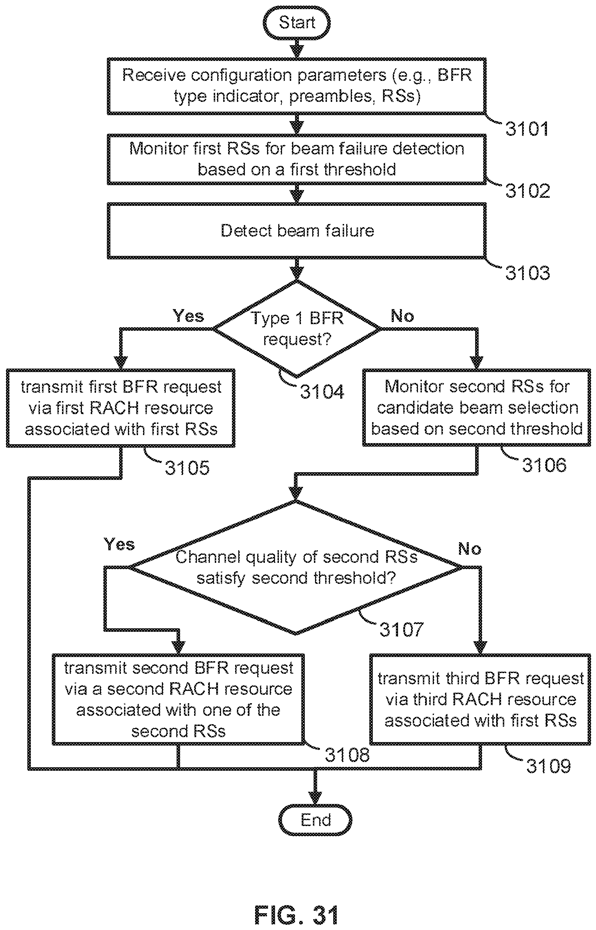

FIG. 31 shows example wireless device procedures for beam failure recovery. A base station may transmit one or more messages comprising configuration parameters indicating one or more PRACH resources to a wireless device. The base station may transmit the one or more messages via RRC messaging. The configuration parameters may indicate a type of a BFR request (e.g., type 1 or type 2). The configuration parameters may indicate a number of multiple BFR requests transmissions. The configuration parameters may comprise one or more preambles and/or RSs. The configuration parameters may comprise one or more first preambles and/or PRACHs associated with first RSs, one or more second preambles and/or PRACHs associated with second RSs, and one or more third (or other number) preambles and/or PRACHs associated with third (or other number) RSs. At step 3101, a wireless device may receive from the base station the configuration parameters. The configuration parameters may be used to configure the wireless device with a transmit beam (such as TxB1 in FIG. 21) as a serving beam. The configuration parameters may configure the wireless device with configured and/or activated transmit beams (such as TxB5 and TxB8 in FIG. 21). The base station may use the serving beam to transmit, and the wireless device may use the serving beam to receive, PDCCH signals and associated PDSCH signals for the wireless device.

The wireless device may monitor reference signals for a potential beam failure, at step 3102, e.g., after or in response to receiving configuration parameters. The wireless device may monitor a first set of RSs based on a first threshold. The first set of RSs may correspond to CSI-RSs of a serving beam. The first threshold may be determined based on measurements from one or more previous beam failure events. The first threshold may be set to a value at or near an average of previous beam failure events, or to a value above some or all previous beam failure events. The wireless device may monitor periodically for a duration of time (e.g., until an expiration of a timer) or until the first RSs fall below the first threshold.

At step 3103, the wireless device may detect a beam failure event. A detection of a beam failure event may comprise the wireless device determining that a channel quality of the first RSs fall below the first threshold. Additionally or alternatively, a detection of a beam failure event may comprise one or more measurements of a channel quality falling below the first threshold. The beam failure event may be on a serving beam (e.g., on TxB1 in FIG. 21). If a beam failure event occurs on the serving beam (e.g., TxB1 in FIG. 21), the wireless device may monitor configured and/or activated beams.

The wireless device may determine, at step 3104, whether a type 1 BFR request is configured, e.g., after or in response to detecting a beam failure event. Additionally or alternatively, the wireless device may determine, at step 2304, whether a type 2 BFR request, or another type BFR request, is configured.

If a type 1 BFR request is configured, the wireless device may transmit, at step 3105, one or more BFR requests. The wireless device may transmit, via a first RACH resource associated with first RSs, a first BFR request. The first RACH resource may comprise the resource associated with a serving beam on which a beam failure event was detected. The first RACH resource may comprise a first available RACH resource. The wireless device may transmit BFR requests, each with a configured number, via multiple BFR-PRACH resources. The wireless device may transmit the BFR requests via BFR-PRACH resources selected based on RSRP or other criteria (e.g., RSRQ, CQI, and/or waiting time). The wireless device may transmit the BFR request via a PRACH resource to indicate a beam failure event occurs on one or multiple serving beams and the wireless device does not find a candidate beam. The BFR request may indicate that no candidate beam may be found. For example, the wireless device may use a PRACH associated with a serving beam (e.g., TxB1) to transmit the BFR request. By transmitting the BFR request via the serving beam, the wireless device may indicate that a beam failure event has occurred on the serving beam. The wireless device may transmit a BFR request on a BFR-PRACH (e.g., R1 in FIG. 21). The BFR-PRACH may be based on a CSI-RS configuration (e.g., CSI-RS1 in FIG. 21). The wireless device may receive the CSI-RS configuration via a serving beam (e.g., TxB1 in FIG. 21). The base station may configure the wireless device with a PRACH preamble in the one or more PRACH resources, and/or the base station may configure the wireless device with a new set of reference signals, e.g., after or in response to receiving one or more BFR requests.

If, however, a type 1 BFR request is not configured, beginning with step 3106, the wireless device may determine one or more candidate beams. The wireless device may determine, e.g., at step 3106, whether a type 2 BFR request is configured. If the wireless device is configured with a second type BFR request transmission, the wireless device may determine one or more candidate beams. The wireless device may monitor second RSs for a candidate beam selection based on a second threshold. The second set of RSs may correspond to CSI-RSs of a candidate beam. The second threshold may be determined based on measurements from one or more previous serving beams or candidate beams. The second threshold may be set to a value at or near an average of previous serving beams or candidate beams, or to a value above some or all previous serving beams or candidate beams. The second threshold may be greater than the first threshold. The wireless device may monitor periodically for a duration of time (e.g., until an expiration of a timer) or until the second RSs exceed the second threshold.

At step 3107, the wireless device may determine whether a channel quality of the second RSs satisfies the second threshold. For example, if the channel quality of the second RSs is above the second threshold, the wireless device may transmit, at step 3108, a second BFR request. The wireless device may transmit the second BFR request via a second RACH resource that may be associated with one or more of the second RSs. If the channel quality of the second RSs is not above the second threshold, the wireless device may transmit, at step 3109, a third BFR request. The wireless device may transmit the third BFR request via a third RACH resource that may be associated with the first RSs. The third RACH resource may comprise the resource associated with a serving beam on which a beam failure event was detected. After transmission of a BFR request, e.g., at step 2305, step 2308, and/or step 3109, the wireless device may end the process or repeat one or more steps of FIG. 23. For example, the wireless device may receive new configuration parameters, or updated parameters, at step 3101, and repeat one or more of steps 3102-3109 thereafter.

If the wireless device determines a candidate beam (e.g., TxB5 or TxB8 in FIG. 21), the wireless device may transmit, e.g., after step 3106, a BFR request via a BFR-PRACH (e.g., R2 or R3) associated with the candidate beam (e.g., TxB5 or TxB8). If the wireless device determines a candidate beam from configured or activated multiple beams (e.g., TxB5 or TxB8), the wireless device may use the BFR-PRACH resource (e.g., CSI-RS2 or CSI-RS3, respectively) associated with the candidate beam to indicate the determined candidate beam associated with the BFR-PRACH. The wireless device may transmit (e.g., at step 3108) the BFR request via a PRACH resource that may be associated with a CSI-RS resource, or via a PRACH resource that may be associated with one or more groups of CSI-RS resources. If the wireless device is unable to determine a candidate beam, the wireless device may transmit (e.g., at step 3109) a BFR request via a PRACH resource (e.g., R1) associated with a serving beam (e.g., TxB1). By transmitting a BFR request via a PRACH resource associated with a serving beam, the wireless device may indicate that the serving beam has failed and that no candidate beam has been identified. Additionally or alternatively, if the wireless device does not identify a candidate beam from configured or activated multiple beams the wireless device may transmit multiple BFR requests via multiple BFR-PRACH resources (e.g., R1, R2, and R3), e.g., using the PRACH preamble in R1 to indicate that TxB1 fails and no candidate beam has been determined or identified. Any number of BFR requests may be transmitted by the wireless device. One or more BFR requests may be transmitted, via a BFR-PRACH resource associated with a CSI-RS resource of a beam, to indicate that there is no candidate beam. One or more BFR requests may be transmitted, by the wireless device, with the PRACH preamble associated with the BFR-PRACH resource of the one or multiple serving beams indicating that there is no candidate beam.

Any wireless device may perform any combination of one or more of the above steps of FIG. 31. A base station, a core network device, or any other device, may perform any combination of a step, or a complementary step, of one or more of the above steps. Some or all of these steps may be performed, and the order of these steps may be adjusted. For example, one or more of steps 3106 to 3109 may not be performed for a type 2 BFR request. As another example, step 3102 may be performed before step 3101. Additional steps may also be performed.

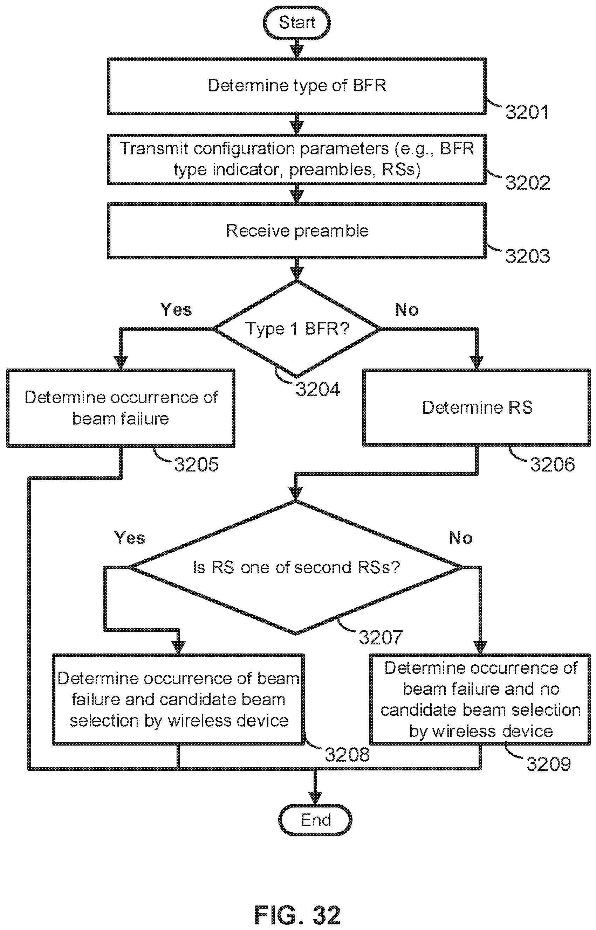

FIG. 32 shows example base station procedures for beam failure recovery. At step 3201, a base station may determine a type of BFR request, such as a type 1 BFR request or a type 2 BFR request. The base station may determine the type of BFR request based on one or more parameters associated with the base station, a wireless device, another base station, or any other device, e.g., that may communicate in a network comprising the base station. At step 3201, the base station may determine a list comprising CSI-RS configurations and BFR-PRACH configurations. Each CSI-RS configuration may be associated with a BFR-PRACH configuration in the list.

At step 3202, the base station may transmit, to the wireless device, configuration parameters, e.g., after or in response to determining the type of BFR request. These configuration parameters may comprise, e.g., a BFR type indicator, preambles, RSs, the list comprising the CSI-RS configurations and BFR-PRACH configurations, and/or an update for the list. The base station may transmit an update for the list in an RRC message. The BFR indicator may comprise an indication of one or more binary values, which may indicate, e.g., a type 1 BFR request or a type 2 BFR request. The base station may transmit these configuration parameters to a wireless device via RRC messaging. The base station may transmit, to a wireless device, a BFR type indicator at any time, including, e.g., in some or all RRC messages. After a BFR type indicator is transmitted, the BFR type may be changed by the base station via an updated BFR type indicator, e.g., in an RRC message.

At step 3203, the base station may receive, from the wireless device via a PRACH resource, a preamble. The preamble and PRACH resource may be associated with one or more of the configuration parameters transmitted by the base station in step 3202.

The base station may determine, at step 3204, whether a type of BFR request was type 1 (or type 2), e.g., after or in response to receiving the preamble. The base station may determine the type of BFR request by the BFR type determined at step 3201 and/or the BFR type indicator transmitted at step 3202. For a type 1 BFR request (e.g., the "Yes" path from step 3204), the base station may determine an occurrence of a beam failure, at step 3205. The base station may make such a determination based on the preamble transmitted by the wireless device, which may include, e.g., the received power of the preamble and/or one or more indications of signal quality. For a type 2 BFR request (e.g., the "No" path from step 3204), the base station may determine one or more RSs associated with the preamble and/or PRACH resource from step 3203.

The base station may determine, at step 3207, whether the one or more RSs is one of a second RSs, e.g., after or in response to determining one or more RSs. The second RSs may comprise RSs associated with a candidate beam from the base station. If the one or more RSs is one of a second RSs (e.g., the "Yes" path from step 3207), the base station may determine, at step 3208, an occurrence of beam failure and candidate beam selection by the wireless device. For example, a determination that an RS is received from the wireless device that corresponds to a second RS associated with a second candidate beam transmitted by the base station may indicate that the wireless device detected a beam failure and selected the second candidate beam. If the one or more RSs is not one of a second RSs (e.g., the "No" path from step 3207), the base station may determine, at step 3209, an occurrence of beam failure without a candidate beam selection by the wireless device. For example, a determination that an RS is received from the wireless device that does not correspond to a second RS associated with a second candidate beam transmitted by the base station may indicate that the wireless device detected a beam failure but did not select the second candidate beam.

After steps 3205, 3208, and/or 3209, the base station may reconfigure the first RSs and/or the second RSs (or other RSs), the base station may repeat one or more steps of FIG. 24, and/or the process may end. The base station may perform one or more steps of FIG. 24 for some or all transmissions of configuration parameters (e.g., for some or all RRC messages), and/or after receiving new or updated information.

Any base station may perform any combination of one or more of the above steps of FIG. 32. A wireless device, a core network device, or any other device, may perform any combination of a step, or a complementary step, of one or more of the above steps. Some or all of these steps may be performed, and the order of these steps may be adjusted. For example, one or more of steps 3206 to 3209 may not be performed for a type 2 BFR request. As another example, step 3204 may be performed before step 3203. Additional steps may also be performed.

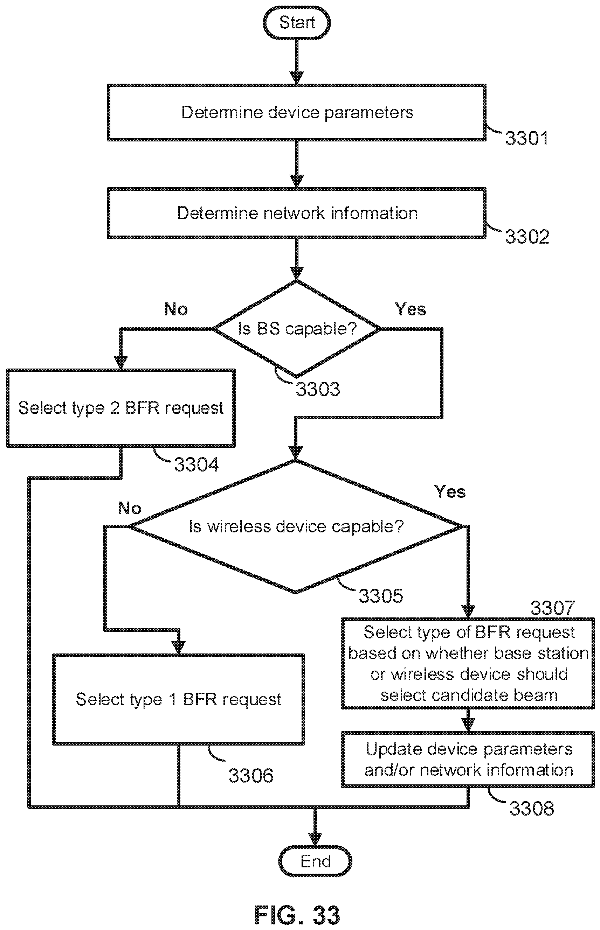

FIG. 33 shows example procedures for determining a type of a BFR request, such as a type 1 BFR request or a type 2 BFR request. Some or all of the example procedures shown and described with respect to FIG. 25 may be performed, e.g., as part of step 3301 described above with respect to FIG. 33, to determine a type of BFR request. At step 3301, a base station may determine one or more parameters that may be associated with a device capability. The base station may determine, for a wireless device, a type of BFR request based on the one or more parameters. The one or more parameters may be stored in the base station and/or the base station may receive the one or more parameters, e.g., from one or more other devices. The one or more parameters may include parameters associated with the wireless device, the base station, a target base station, neighboring base stations, or any other device(s). Parameters associated with the wireless device may include wireless device capability parameters, such as whether the wireless device is capable of determining a candidate beam within a threshold time period and/or within a threshold amount of available power. For example, a wireless device that performs monitoring with low periodicity may not have sufficient capability to determine a candidate beam and may be best suited for a type 1 BFR request, whereas a wireless device that performs monitoring at a high periodicity may have sufficient capability to determine a candidate beam (e.g., for a type 2 BFR request). For example, a wireless device that supports beam correspondence between a transmitting beam and a receiving beam may have sufficient capability to determine a candidate beam (e.g., for a type 2 BFR request). A wireless device that does not support beam correspondence between a transmitting beam and a receiving beam may not have sufficient capability to determine a candidate beam, and as a result, the wireless device may be better suited for a type 1 BFR request. A beam correspondence between a transmitting beam and a receiving beam may correspond to a capability such that a wireless device may determine a transmitting beam based on a receiving beam. Parameters associated with a base station may include base station capability parameters, such as whether the base station is capable of determining a candidate beam within a threshold time period or within a threshold amount of available power. For example, a base station serving more than a threshold number of wireless devices may not have the availability to determine a candidate beam for a particular wireless device, e.g., and the base station may select a type 2 BFR request to indicate the wireless device should determine a candidate beam. A base station serving a threshold number or fewer wireless devices may have the availability to determine a candidate beam, e.g., and the base station may select a type 1 BFR request to indicate the wireless device should not determine candidate beam.

At step 3302, the base station may determine network information. The base station may determine the network information from stored information and/or the base station may receive the network information, e.g., from one or more other devices. Network information may include, e.g., signal quality information, indication of prior beam failure, or any information related to a network in which the base station communicates. Network information may include information known to a base station that may not be known to a wireless device. For example, if a wireless device is communicating with a plurality of base stations and experiences a beam failure in a first direction with a first base station (e.g., if an obstruction blocks a beam between the first base station and the wireless device) but the wireless device maintains communications on a beam in a second direction with a second base station, the first base station and the second base station may determine information about the beam failure (e.g., via sharing information among base stations) and based on that information the first base station and/or the second base station may have better information from which to determine a candidate beam for the wireless device than the wireless device itself. In such an example, a type 1 BFR request may be selected by a base station to enable the base station to determine a candidate beam for the wireless device.

At step 3303, the base station may determine whether it is capable of determining one or more candidate beams for a wireless device. The base station may determine such capability, or lack thereof, based on the one or more parameters determined at step 3301 and/or the network information determined at step 3302. If the base station determines that it is not capable of determining one or more candidate beams for the wireless device (e.g., the "No" path from step 3303), the base station may select a type 2 BFR request, at step 3304. A BFR type indicator that indicates a type 2 BFR request may indicate that the wireless device should determine one or more candidate beams for a BFR request. The wireless device may determine a candidate beam and send a BFR request via resources associated with the candidate beam. If the base station determines that it is capable of determining one or more candidate beams for the wireless device (e.g., the "Yes" path from step 3303), the process may continue to step 3305.

At step 3305, the base station may determine whether a wireless device is capable of determining one or more candidate beams. The base station may determine such capability, or lack thereof, based on the one or more parameters determined at step 3301 and/or the network information determined at step 3302. If the base station determines that the wireless device is not capable of determining one or more candidate beams (e.g., the "No" path from step 3305), the base station may select a type 1 BFR request, at step 3306. A BFR type indicator that indicates a type 1 BFR request may indicate that the wireless device should not determine one or more candidate beams for a BFR request. The wireless device may send a BFR request via resources associated with a serving beam on which the wireless device detected a beam failure event. If the base station determines that the wireless device is capable of determining one or more candidate beams (e.g., the "Yes" path from step 3305), the base station may analyze the one or more parameters from step 3301, and/or the base station may analyze the network information from step 3302, to determine whether the base station or the wireless device is better suited to determine one or more candidate beams. Based on the analysis and determination in step 3307, the base station may select a type of BFR request (e.g., type 1 or type 2). For example, if the wireless device is better suited than the base station to determine one or more candidate beams, the base station may select a type 2 BFR request. If the wireless device is not better suited than the base station to determine one or more candidate beams, the base station may select a type 1 BFR request. At step 3308, the base station may update the one or more parameters and/or the network information with information from the analysis and determination in step 3307. After step 3308, the base station may station may end the process, or repeat one or more of the above steps. The base station may perform one or more steps of FIG. 33 for some or all transmissions of configuration parameters (e.g., for some or all RRC messages), and/or after receiving new or updated parameters or network information.

Any base station may perform any combination of one or more of the above steps of FIG. 33. A wireless device, a core network device, or any other device, may perform any combination of a step, or a complementary step, of one or more of the above steps. Some or all of these steps may be performed, and the order of these steps may be adjusted. For example, one or more of steps 3301 or 3302 may not be performed. As other examples, step 3303 may be performed before step 3305. Results of step 3301 may be weighted differently from results of step 3302 for the selection of a type of a BFR request at step 3307.

A wireless device may receive, and a base station may transmit, one or more radio resource control messages comprising configuration parameters of a cell. The configuration parameters may comprise one or more: parameters of a plurality of reference signals (RSs); parameters of a plurality of random access channel (RACH) resources, or thresholds. The one or more parameters of the plurality of RSs may comprise a channel state information reference signal resource. The wireless device may receive, and the base station may transmit, one or more medium access control (MAC) control elements (CEs). The one or more MAC CEs may comprise one or more of a first RS of the plurality of RSs, or a first RACH resource of the plurality of RACH resources. The wireless device and/or the base station may monitor a plurality of second RSs, and the first RACH resource may be associated with one or more of the plurality of second RSs. The plurality of second RSs may be indicated by the at least one MAC CE. The first RACH resource may be associated with a first candidate beam in a first set of the plurality of sets of second RSs. The base station may determine the plurality of second RSs. The base station may transmit, and the wireless device may receive, tone or more indications of the plurality of sets of second RSs. The wireless device and/or the base station may detect one or more beam failures. A beam failure may be detected, e.g., by measuring a channel state information reference signal resource associated with the plurality of RSs, and/or by determining that a channel quality of the first RS is below a first threshold of the one or more thresholds. The wireless device and/or the base station may select a preamble associated with the first RACH resources, e.g., after or in response to detecting the at least one beam failure. The wireless device may transmit, and the base station may receive, via the first RACH resource, the selected preamble. The selected preamble may be based on a channel quality of the first RS. A beam failure recovery request may be transmitted with the selected preamble. A system may comprise the wireless device and the base station.

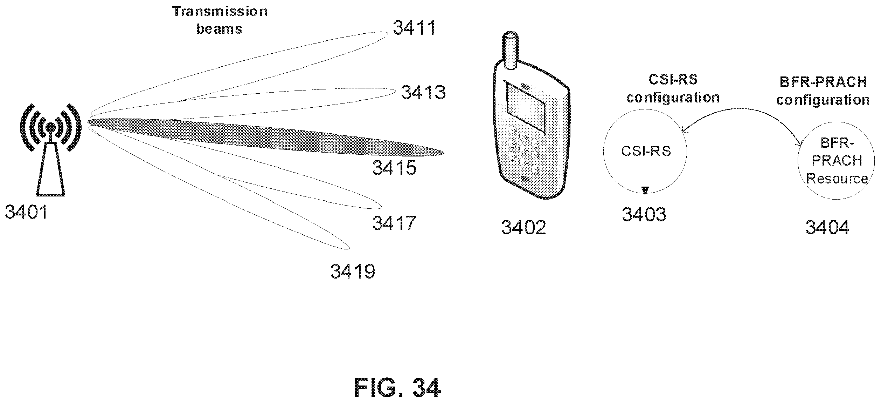

FIG. 34 shows an example of a beam failure recovery request utilizing a PRACH channel. A wireless device 3402 may transmit a BFR request on a non-contention based channel, e.g., based on PRACH (e.g., BFR-PRACH). The wireless device 3402 may detect a beam failure based on measurements on a specific CSI-RS resource. A base station 3401 may provide a wireless device with a BFR-PRACH resource for a BFR request transmission. A BFR-PRACH resource may comprise one or more of: a PRACH preamble, a PRACH numerology, a PRACH format, a time allocation relative to a RS associated to a beam, or a frequency allocation.

The base station 3401 may configure the wireless device 3402 with a single beam (e.g., beam 3415), associated with one or both of a CSI-RS resource 3403 and a BFR-PRACH resource 3404. If a wireless device 3402 detects a beam failure event on the beam 3415, the wireless device 3402 may transmit a BFR request on the BFR-PRACH resource (e.g., the resource 3404), associated with CSI-RS1.

The base station 3401 may transmit, e.g., via RRC signaling, one or more messages comprising configuration parameters for periodic CSI-RS resources. The base station 3401 may transmit, e.g., via RRC signaling, one or more messages comprising configuration parameters for resources (e.g., multi-shot or aperiodic CSI-RS resources). The base station 3401 may transmit, via a medium access control (MAC) control element (CE) one or more messages comprising activation or deactivation of resources (e.g., multi-shot or aperiodic CSI-RS resources). The base station 3401 may transmit, via system information block type 2 (SIB2), one or more messages comprising configuration parameters of a PRACH resource used for initial access. The base station 3401 may transmit messages for configuring CSI-RS resources and/or for configuring PRACH resources independent from one another. The base station 3401 may transmit, via RRC signaling, one or more messages comprising configuration parameters for CSI-RS resources, configuration parameters for BFR-PRACH resources, and/or configuration resources for a mapping from CSI-RS resources to BFR-PRACH resources.

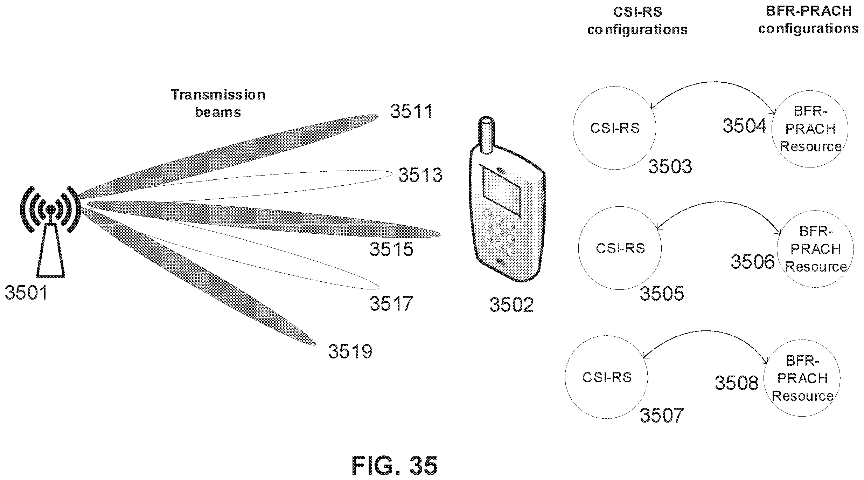

FIG. 35 shows an example of a multi-beam BFR-PRACH configuration. A wireless device 3502 may monitor multiple transmission beams (e.g., a beam 3511, a beam 3513, a beam 3515, a beam 3517, and/or a beam 3519). A base station 3501 may configure multiple beams (e.g., the beam 3511, the beam 3515, and/or the beam 3519) for the wireless device 3502. One or more of the beams configured for the wireless device 3502 may be associated with a specific CSI-RS (e.g., the beam 3511 may be associated with a CSI-RS 3503, the beam 3515 may be associated with a CSI-RS 3505, and/or the beam 3519 may be associated with a CSI-RS 3507). The base station 3501 may configure the wireless device 3502 with the beam 3511 associated with a CSI-RS 3503, the beam 3515 associated with a CSI-RS 3505, and/or the beam 3519 associated with a CSI-RS 3507. The wireless device 3502 may monitor multiple beams, with a serving beam on one or more beams (e.g., on the beam 3511). If the wireless device 3502 detects a beam failure event on a serving beam (e.g., the beam 3511), and if a new candidate beam (e.g., the beam 3515) is identified, the wireless device 3502 may use the BFR-PRACH on a second CSI-RS (e.g., the CSI-RS 3505), to transmit a BFR request, indicating the new candidate beam (e.g., the beam 3515) as a candidate beam. The wireless device 3502 may determine a beam failure event based on a measurement regarding one or more of a CSI-RS, SS blocks, or DM-RSs of a PBCH.

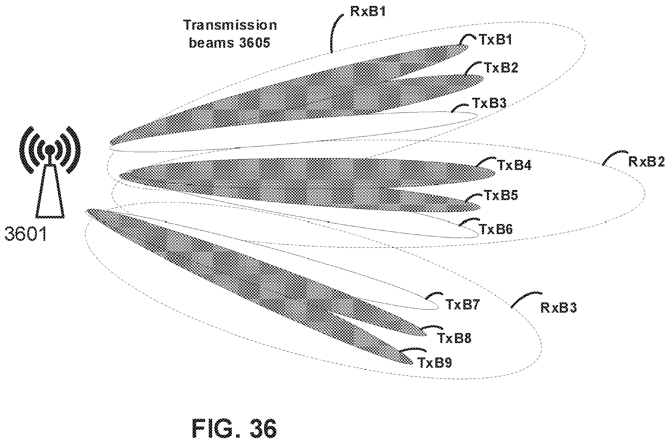

FIG. 36 shows an example of a multi-beam BFR-PRACH configuration. A base station 3601 may transmit, via multiple beams 3605, one or more messages comprising configuration parameters for at least one of multiple CSI-RSs associated with multiple beams. The base station 3601 may associate, via RRC signaling, BFR-PRACH resources with the multiple CSI-RSs. The base station 3601 may transmit one or more messages comprising configuration parameters of uplink signals and/or channels (e.g., a scheduling request (SR) signal, a PUCCH signal, or a PUSCH signal) for a BFR request transmission. The base station 3601 may transmit one or more messages comprising configuration parameters for BFR PRACH resources shared by multiple wireless devices for BFR request transmissions. The base station 3601 may transmit messages to one or more wireless devices using narrow transmission beams of the transmission beams 3605 (e.g., beams TxB1, TxB2, TxB3, TxB4, TxB5, TxB6, TxB7, TxB8, and/or TxB9). The base station 3601 may receive messages from one or more wireless devices using wide receiving beams of the transmission beams 3605 (e.g., the beams RxB1, RxB2, and/or RxB3). The base station may steer a receiving beam (e.g., the beam RxB1) to receive an uplink transmission corresponding to one or more transmission beams (e.g., the beams TxB1, TxB2, and/or TxB3). The base station may steer a receiving beam (e.g., the beam RxB2) to receive an uplink transmission corresponding to one or more transmission beams (e.g., the beams TxB4, TxB5, and/or TxB6). The base station may steer a receiving beam (e.g., the beam RxB3) to receive an uplink transmission corresponding to one or more transmission beams (e.g., the beams TxB7, TxB8, and/or TxB9).

A beam failure recovery mechanism may utilize a one-to-one association of a RACH resource and a CSI-RS resource (such as may be shown in FIG. 35 and as described above). This may enable selection of a candidate beam for a beam failure recovery procedure. The one-to-one association may associate a RACH resource with a CSI-RS resource (e.g., for a candidate beam). If there are multiple CSI-RS resources configured for candidate beam selection, a base station may allocate multiple RACH resources for one or more of the multiple CSI-RS resources. Multiple wireless devices may be served by a base station. If configured with RACH resources for beam failure recovery, a beam failure recovery mechanism may lead a to large number of RACH resources reserved for beam failure recovery, which may result in a capacity issue for other random access procedures utilizing the RACH resources. If a base station has different beam widths for a transmission beam and a receiving beam, a beam failure recovery mechanism may result in an excess allocation of RACH resources for beam failure recovery (such as may be shown in FIG. 36 and as described above). Methods and systems described herein may resolve the issue of RACH resource excess allocation and may solve the problem of capacity issue of RACH resources for other random access procedures. A base station may transmit (e.g., via RRC signaling) one or more messages comprising configuration parameters for CSI-RS resources associated with PRACH resources. The configuration parameters may comprise a CSI-RS resource set comprising one or more CSI-RS resources, and/or a CSI-RS resource set (which may be associated with a PRACH resource).

A CSI-RS resource set may be associated with a resource set index. A CSI-RS resource (e.g., of a CSI-RS resource set) may be associated with a CSI-RS resource index or a CSI-RS resource index indicating a CSI-RS resource. A PRACH resource associated with the CSI-RS resource set may be associated with a PRACH resource index indicating a PRACH resource. A CSI-RS resource, which may be associated with a beam, may comprise one or more CSI-RS ports. A CSI-RS resource may comprise one or more time or frequency radio resources. A PRACH resource may comprise one or more of: a PRACH preamble, a PRACH format, a PRACH numerology, a time resource allocation, or a frequency resource allocation.

A base station may transmit, via device-specific RRC signaling, one or more messages comprising configuration parameters for a CSI-RS resource set and/or an associated PRACH. Additionally or alternatively, a base station may transmit, by cell-specific RRC signaling, one or more messages comprising configuration parameters for a CSI-RS and/or an associated PRACH. A base station may transmit (e.g., by RRC signaling) one or more messages comprising configuration parameters for a CSI-RS resource set and/or an associated PRACH, wherein the configuration parameters may indicate one or more of: a periodic transmission of a CSI-RS, an aperiodic transmission of a CSI-RS, a multiple-shot transmission of a CSI-RS, or a semi-persistent transmission of a CSI-RS. In a periodic transmission, a configured CSI-RS resource may be transmitted using a configured periodicity in the time domain. In an aperiodic transmission, a configured CSI-RS resource may be transmitted in a dedicated time slot. In a multi-shot or semi-persistent transmission, a configured CSI-RS resource may be transmitted in a configured period. A wireless device may transmit, based on one or more received messages comprising configuration parameters of CSI-RS resources associated with PRACH resources, a BFR request on a PRACH resource.

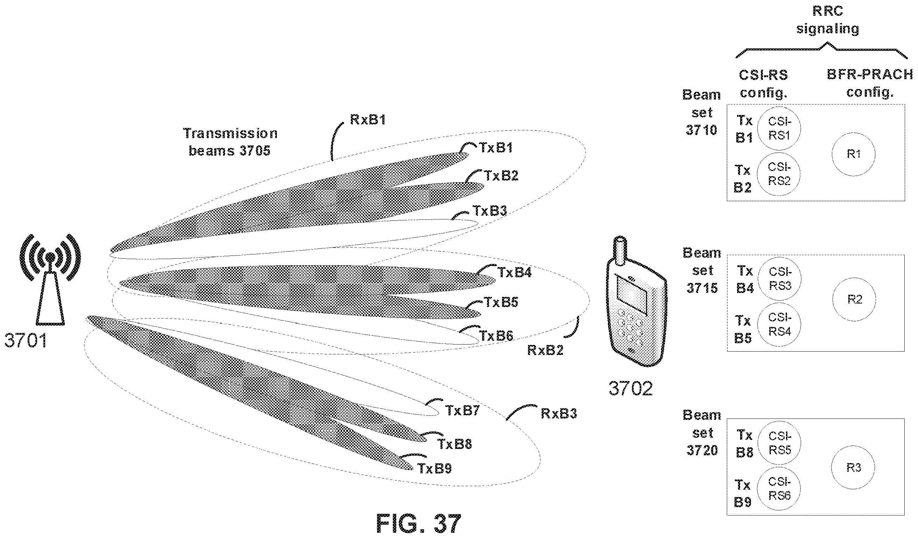

FIG. 37 shows an example of a PRACH configuration for beam failure recovery request transmission. A base station 3701 may configure a wireless device 3702 with one or more beam sets. A beam set 3710 may comprise beams TxB1 and TxB2. The beam TxB1 may be associated with a CSI-RS1, and the beam TxB2 may be associated with a CSI-RS2. A PRACH resource R1 may be associated with the beam set 3710. A beam set 3715 may comprise beams TxB4 and TxB5. The beam TxB4 may be associated with a CSI-RS3, and the beam TxB5 may be associated with a CSI-RS4. A PRACH resource R2 may be associated with the beam set 3715. A beam set 3720 may comprise the beams TxB8 and TxB9. The beam TxB8 may be associated with a CSI-RS5, and the beam TxB9 may be associated with a CSI-RS6. A PRACH resource R3 may be associated with the beam set 3720.

The wireless device 3702 may be configured with a CSI-RS configuration associated with a BFR-PRACH configuration. The wireless device 3702 may trigger a BFR request (e.g., based on the CSI-RS configuration and/or the BFR-PRACH configuration). The wireless device 3702 may monitor one or more beams of a set (e.g., the beams TxB1 and TxB2 of the beam set 3710). A beam failure event may be triggered, e.g., based on a threshold beam link quality associated with one or more beams (e.g., the beams TxB1 and TxB2). If a beam failure event is triggered, the wireless device 3702 may transmit a BFR request on the BFR-PRACH resource R1.

If the wireless device 3702 discovers a beam failure event on a beam set (e.g., the beam set 3710), and if the wireless device 3702 identifies a candidate beam from a different beam set (e.g., the beam set 3715 or the beam set 3720), the wireless device 3702 may transmit a BFR request on a BFR-PRACH resource corresponding to the candidate beam (e.g., the resource R2 for the beam set 3715 or the resource R3 for the beam set 3720). A PRACH resource used for a BFR request transmission may be different from other PRACH resources, e.g., by having a different PRACH preamble, time or frequency location, PRACH format, and/or PRACH numerology.

The base station 3701 may transmit, e.g., via RRC signaling, one or more messages comprising configuration parameters for CSI-RS resources associated with PRACH resources. The configuration parameters may comprise one or more sets of CSI-RS resources, a CSI-RS resource set comprising one or more CSI-RS resources, and/or a CSI-RS resource set associated with a PRACH resource.

The base station 3701 may transmit, e.g., via MAC signaling, one or more messages comprising activation or deactivation parameters for CSI-RS resources. The base station 3701 may activate or deactivate one or more sets of CSI-RS resources for a wireless device. The base station 3701 may activate or deactivate, e.g., via MAC signaling, a CSI-RS set with a PRACH resource. Activation or deactivation, e.g., by MAC signaling, of one or more sets of CSI-RS resources (e.g., for beam failure recovery) may enable the base station 3701 to dynamically or adaptively configure CSI-RS resources based on one or more channels associated with a wireless device.

The base station 3701 may transmit, e.g., using L1 downlink control information, one or more messages comprising activation or deactivation parameters for CSI-RS resources. The base station 3701 may activate or deactivate one or more sets of CSI-RS resources for a wireless device. The base station 3701 may activate or deactivate, e.g., using L1 downlink control information, a CSI-RS set with a PRACH resource. Activation or deactivation, e.g., using L1 downlink control information, of one or more sets of CSI-RS resources (e.g., for beam failure recovery) may enable the base station 3701 to dynamically or adaptively configure CSI-RS resources based on one or more channels associated with a wireless device.

A wireless device 3702 may transmit a BFR request using a PRACH resource. The wireless device 3702 may transmit the BFR request, e.g., based on one or more received messages comprising activation or deactivation configuration parameters of CSI-RS resources associated with the PRACH resource.

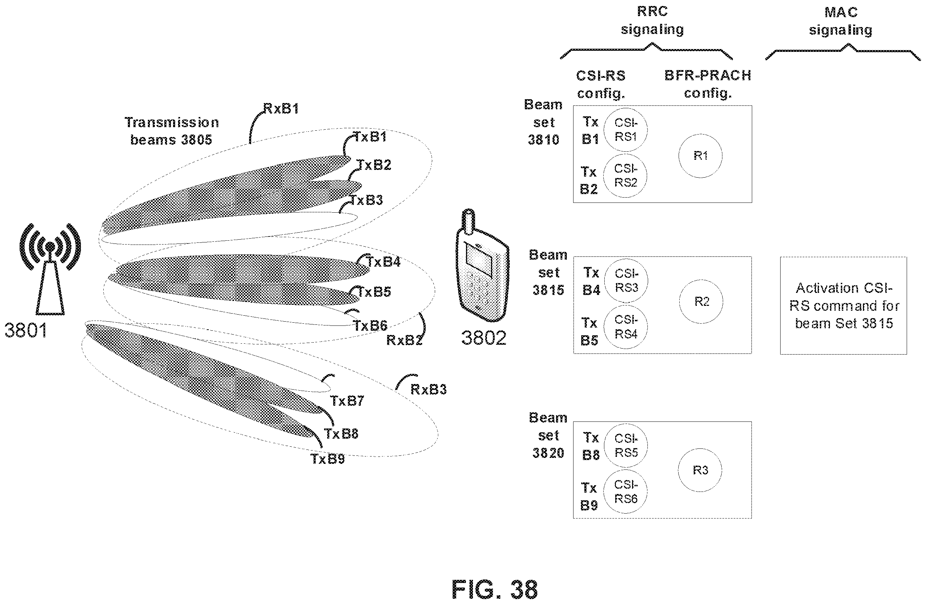

FIG. 38 is an example of MAC signaling activating a subset of a configured CSI-RS resource associated with a BFR-PRACH resource. A base station 3801 may transmit configuration parameters to configure a wireless device 3802. A beam set 3810 may comprise beams TxB1 and TxB2. The beam TxB1 may be associated with a CSI-RS 1, and the beam TxB2 may be associated with a CSI-RS2. A PRACH resource R1 may be associated with the beam set 3810. A beam set 2515 may comprise beams TxB4 and TxB5. The beam TxB4 may be associated with a CSI-RS3, and the beam TxB5 may be associated with a CSI-RS4. A PRACH resource R2 may be associated with the beam set 3815. A beam set 3820 may comprise beams TxB8 and TxB9. The beam TxB8 may be associated with a CSI-RS5, and the beam TxB9 may be associated with a CSI-RS6. A PRACH resource R3 may be associated with the beam set 3820.

The base station 3801 may activate, e.g., via MAC signaling, the beam set 3815. For example, the base station 3801 may instruct the wireless device 3802 to monitor the beams TxB4 and TxB5. Based on the instructions, the wireless device 3802 may detect a beam failure event, trigger a BFR request, and transmit a BFR request using the PRACH resource R2.

The base station 3801 may transmit, e.g., via RRC signaling, one or more messages comprising configuration parameters of CSI-RS resources associated with PRACH resources. The parameters may comprise one or more sets of CSI-RS resources, a CSI-RS resource set comprising one or more CSI-RS resources, and/or a CSI-RS resource set associated with one or more PRACH resources.

The base station 3801 may transmit, e.g., via MAC signaling, one or more messages comprising activation parameters and/or deactivation parameters for CSI-RS resources and associated PRACH resources. The base station 3801 may activate or deactivate, e.g., via the MAC signaling, one or more sets of CSI-RS resources for the wireless device 3802. The base station 3801 may activate or deactivate, e.g., via the MAC signaling, a CSI-RS set activated or deactivated with a PRACH resource.

The base station 3801 may transmit, e.g., via L1 downlink control information, one or more messages comprising activation parameters and/or deactivation parameters for CSI-RS resources and associated PRACH resources. The base station 3801 may activate or deactivate, e.g., via L1 downlink control information, one or more sets of CSI-RS resources for the wireless device 3802. The base station 3801 may activate or deactivate a CSI-RS set activated or deactivated with a PRACH resource (e.g., by using L1 downlink control information). A BFR-PRACH resource may be different from other PRACH resources regarding radio resources for a cell. For example, the radio resources for the cell may comprise a PRACH resource for a contention-based RACH procedure or a contention-free RACH procedure.

The wireless device 3802 may transmit, based on one or more received messages comprising activation parameters and/or deactivation parameters of CSI-RS resources associated with PRACH resources, a BFR request on a PRACH resource.

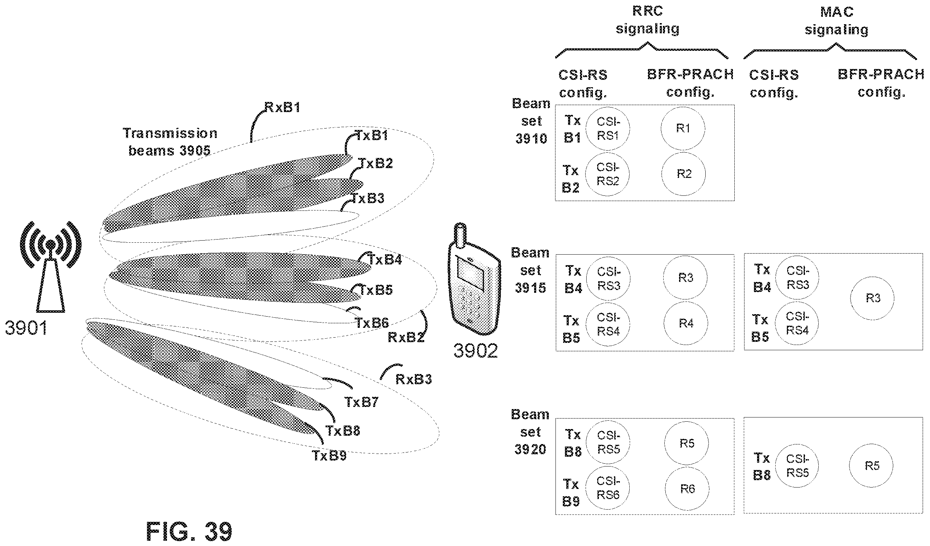

FIG. 39 shows an example of PRACH configuration and activation for a beam failure recovery request transmission. A base station 3901 may transmit configuration parameters to configure a wireless device 3902. A beam set 3910 may comprise beams TxB1 and TxB2. The beam TxB1 may be associated with a CSI-RS 1 and a BFR-PRACH resource R1. The beam TxB2 may be associated with a CSI-RS2 and a BFR-PRACH resource R2. A beam set 3915 may comprise beams TxB4 and TxB5. The beam TxB4 may be associated with a CSI-RS3 and a BFR-PRACH resource R3. The beam TxB5 may be associated with a CSI-RS4 and a BFR-PRACH resource R4. A beam set 3920 may comprise beams TxB8 and TxB9. A beam TxB8 may be associated with a CSI-RS5 and a BFR-PRACH resource R5. The beam TxB9 may be associated with a CSI-RS6 and a BFR-PRACH resource R6.

The base station 3901 may activate, e.g., via MAC signaling, one or more beam sets. For example, the base station 3901 may activate the beam sets 3915 and 3920 by transmitting a MAC CE. The MAC CE may indicate an association between CSI-RS resources and/or RACH resources. For example, a MAC CE may indicate that the beams TxB4 and TxB5 are associated with the CSI-RS3 and the CSI-RS4, and/or that the beams TxB4 and TxB5 are associated with the BFR-PRACH resource R3. The MAC CE may indicate that the beam TxB8 is associated with the CSI-RS5 and the BFR-PRACH resource R5

The base station 3901 may transmit a MAC CE to a wireless device 3902 to activate and/or deactivate CSI-RS resources and associated PRACH resources. The MAC CE may be associated with a logic channel ID (LCID) in a corresponding MAC header. The LCID may indicate that the MAC CE is to activate or deactivate CSI-RS resources and associated PRACH resources.

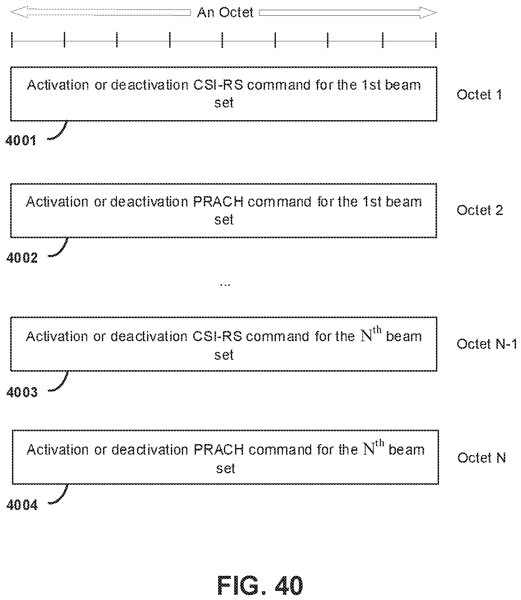

FIG. 40 shows an example MAC CE structure for CSI-RS and/or BFR-PRACH activation and/or deactivation. A MAC CE may comprise activation and/or deactivation CSI-RS commands, and/or PRACH commands, for a configured beam set. A bit in the first octet 4001, associated with the first beam set, may indicate an activating or deactivating command for a CSI-RS resource (e.g., "1" as activating, "0" as deactivating). A bit in the second octet 4002 may indicate an activating or deactivating command for a BFR-PRACH resource (e.g., "1" as activating, "0" as deactivating). The number of bits used for an activation or deactivation command for a beam set may be a number x (e.g., where $1<=x<=8$). If the number of bits for a CSI-RS command is equal to or less than 4, and the number of bits for a PRACH command is equal to or less than 4, the command bits for CSI-RS activation or deactivation, and/or PRACH activation or deactivation, may be put in an octet. Commands for PRACH activation or deactivation in an octet may be followed by commands for a CSI-RS activation or deactivation for a configured beam set. Additional commands may be sent for additional beam sets. For example, regarding an Nth configured beam set, an additional activation or deactivation CSI-RS command at octet N-1 (e.g., the octet 4003) may be followed by an additional activation or deactivation PRACH command at octet N (e.g., the octet 4004).

The wireless device 4002 may be configured with CSI-RS configuration associated with PRACH configuration. The wireless device 4002 may transmit a BFR request based on receiving a MAC CE activating a subset of CSI-RS resources associated with a subset of BFR-PRACH resources.

The wireless device 4002 may monitor the beams TxB4 and TxB5 of the beam set 4015, as well as the beam TxB8 of the beam set 4020. If a beam failure event is detected (e.g., based on beam link quality regarding the beams TxB4 and TxB5), the wireless device may use the BFR-PRACH resource R3 to transmit a BFR request. If the wireless device 4002 discovers a beam failure event on the beam set 4015, it may identify a candidate beam from a different beam set (e.g., the beam TxB8 from the beam set 4020). The wireless device 4002 may transmit a BFR request on the BFR-PRACH resource R5 associated with the beam TxB8.

The base station 4001 may transmit, e.g., via RRC signaling, one or more messages comprising configuration parameters for CSI-RS resources. The parameters may comprise one or more sets of CSI-RS resources or a CSI-RS resource set comprising one or more CSI-RS resources.

The base station 4001 may transmit MAC signaling for CSI-RS activation or deactivation, and/or PRACH configuration, to the wireless device 4002. The MAC signaling may provide activating commands and/or deactivating commands for one or more CSI-RS resource sets. The MAC signaling may provide a PRACH resource associated with a CSI-RS resource set.

The base station 4001 may transmit L1 downlink control information for CSI-RS activation or deactivation, and/or PRACH configuration, to the wireless device 4002. The L1 downlink control information may comprise activating commands and/or deactivating commands for one or more CSI-RS resource sets. The L1 downlink control information may comprise a PRACH resource associated to a CSI-RS resource set.

The wireless device 4002 may transmit a BFR request on a PRACH resource. The PRACH resource may comprise one or more of: a PRACH preamble, a PRACH format, a PRACH numerology, a time resource allocation, and/or a frequency resource allocation.

A PRACH resource for a BFR request transmission may be different from other PRACH resources (e.g., a PRACH resource for contention-based RACH procedure, or contention-free RACH procedure).

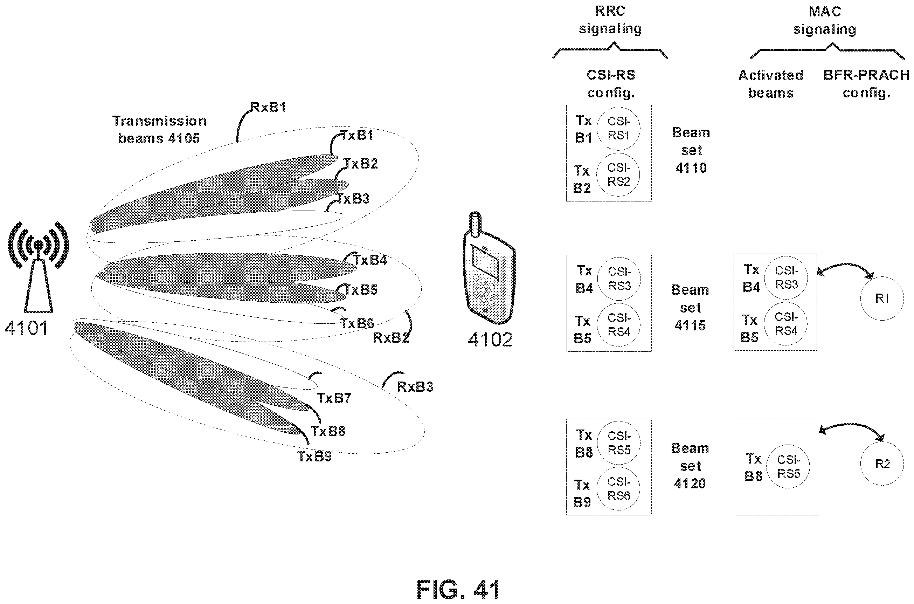

FIG. 41 shows an example of PRACH configuration and activation for a BFR request transmission. A base station 4101 may transmit configuration parameters to configure a wireless device 4102. A beam set 4110 may comprise beams TxB1 and TxB2. The beam TxB1 may be associated with a CSI-RS 1. The beam TxB2 may be associated with a CSI-RS2. A beam set 4115 may comprise beams TxB4 and TxB5. The beam TxB4 may be associated with a CSI-RS3. The beam TxB5 may be associated with a CSI-RS4. A beam set 4120 may comprise beams TxB8 and TxB9. The beam TxB8 may be associated with a CSI-RS5. The beam TxB9 may be associated with a CSI-RS6.

The base station 4101 may activate one or more beam sets, e.g., by transmitting MAC signaling to the wireless device 4102. For example, the base station 4101 may activate the beam set 4115 and/or the beam set 4120 by transmitting a MAC CE. The MAC CE may indicate an association between CSI-RS resources and RACH resources. For example, a MAC CE may indicate that the beam set 4115 is associated with the PRACH resource R1, and/or that the beam set 4120 is associated with the BFR-PRACH resource R2.

The base station 4101 may transmit, to the wireless device 4102, a MAC CE indicating an activation and/or deactivation of CSI-RS resources, and/or a configuration of PRACH resources. The MAC CE may be associated with an LCID in a corresponding MAC header. The LCID may indicate the MAC CE is to activate or deactivate CSI-RS resources and/or configure PRACH resources.

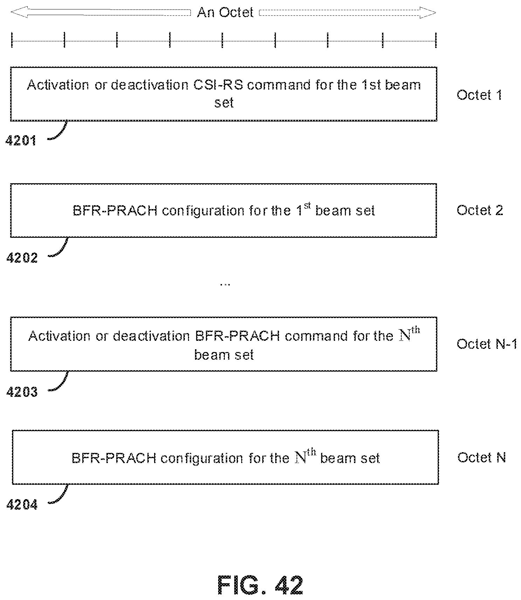

FIG. 42 shows an example MAC CE for activation and/or deactivation, and/or BFR-PRACH configuration. A MAC CE may comprise activation or deactivation CSI-RS commands, and/or a BFR-PRACH configuration, for beam sets. A bit in the first octet 4201, associated with the first CSI-RS resource set, may indicate an activating or deactivating command for a CSI-RS resource (e.g., "1" as activating, "0" as deactivating). Multiple bits in the second octet 4202 may correspond to configuration information for a BFR-PRACH resource. Additional commands may be sent for additional beam sets. For example, regarding an Nth configured beam set, an additional activation or deactivation CSI-RS command at octet N-1 (e.g., the octet 4203) may be followed by an additional activation or deactivation PRACH command at octet N (e.g., the octet 4204).

The number of bits used for activation or deactivation CSI-RS command for a CSI-RS resource set may be any number x (e.g., $1<=x<=8$). The number of bits used for a PRACH configuration may be any number y (e.g., $1<=y<=8$).

The wireless device 4202 may receive an RRC message comprising configuration parameters of a cell. The configuration parameters may comprise one or more CSI-RS resource parameters of a plurality of CSI-RSs. The configuration parameters may comprise one or more RACH resource parameters. The plurality of CSI-RS may be grouped into a plurality of CSI-RS groups (e.g., sets). The one or more RACH resource parameters of a RACH may be associated with a CSI-RS group in the plurality of CSI-RS groups. The one or more RACH resource parameters may comprise one or more: PRACH preambles, a PRACH format, a PRACH numerology, a time resource allocation, and/or a frequency resource allocation. The wireless device 4202 may receive a MAC command indicating activation of a first preamble associated with a first RACH. The wireless device 4202 may receive L1 downlink control information indicating activation of a first preamble associated with a first RACH.

The wireless device 4202 may detect that a beam, of at least one first beam associated with at least one CSI-RS of a CSI-RS group, meets one or more first criteria based on the one or more first criteria being met. The criteria may comprise an indication that a beam failure is detected. The criteria may comprise an indication that a signal measurement associated with the beam is below a threshold, above a threshold, or satisfies a threshold. The wireless device 4202 may transmit a first preamble associated with a RACH of the CSI-RS group based on detecting a beam failure.

A MAC command may comprise an index of the first preamble. The MAC command may comprise an index of the CSI-RS group. For example, at least one RRC message may comprise a CSI group index for a CSI group of the plurality of CSI groups.

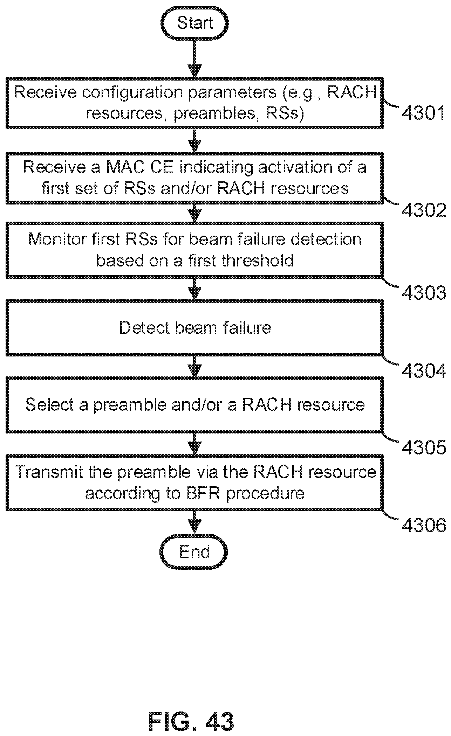

FIG. 43 shows an example of processes for a wireless device for beam failure recovery requests. A base station may transmit one or more messages comprising configuration parameters indicating one or more PRACH resources to a wireless device. The base station may transmit one or more messages via RRC messaging. The configuration parameters may indicate one or more serving cells. The configuration parameters may indicate one or more RACH resources and/or one or more PRACH resources for BFR requests. The configuration parameters may comprise one or more preambles and/or RSs. RS resources may comprise one or more of: CSI-RSs, SS blocks, and/or DMRSs of a PBCH. The configuration parameters may comprise one or more TRPs. The configuration parameters may comprise one or more first preambles and/or PRACHs associated with first RSs, one or more second preambles and/or PRACHs associated with second RSs, and/or one or more third (or other number) preambles and/or PRACHs associated with third (or other number) RSs.

At step 4301, a wireless device may receive, from the base station, the configuration parameters. The configuration parameters may be used to configure the wireless device with parameters of multiple beams. The configuration parameters may configure the wireless device with configured and/or activated transmit beams. The configuration parameters may indicate a first threshold for RSs, which may be used to detect a beam failure such as in step 4304. The base station may use the serving beam to transmit, and the wireless device may use a receiving beam corresponding to the serving beam to receive, PDCCH signals and associated PDSCH signals for the wireless device.

At step 4302, the wireless device may receive, from the base station, a MAC CE indicating activation of a first set of one or more: RSs, preambles, or RACH resources. A MAC CE may have the advantage of being a faster transmission than other types of transmissions, such as an RRC message. The MAC CE may indicate RSs and or RACH resources that may be used in the event of that beam failure recovery is triggered. For example, the MAC CE may indicate CSI-RSs and BFR-PRACH resources, such as described above regarding FIG. 39. Resources may be associated with one or more beams in a variety of ways. One or more examples described herein (e.g., FIGS. 39, 40, and/or 41) may show different resource assignments for transmission beams that may be assigned using a MAC CE.

The wireless device may monitor reference signals for a potential beam failure at step 4303, e.g., after receiving configuration parameters and/or a MAC CE. The wireless device may monitor a first set of RSs based on the first threshold. The first set of RSs may correspond to CSI-RSs of a serving beam. The first threshold may be determined and/or modified based on measurements from one or more previous beam failure events. The first threshold may be set to a value at or near an average of previous beam failure events, or to a value above some or all previous beam failure events. The wireless device may monitor periodically for a duration of time (e.g., until an expiration of a timer) or until the first RSs fall below the first threshold.

At step 4304, the wireless device may detect a beam failure event. A detection of a beam failure event may comprise the wireless device determining that a channel quality of the first RSs fall below the first threshold. Additionally or alternatively, a detection of a beam failure event may comprise one or more measurements of a channel quality falling below the first threshold. The beam failure event may be on a serving beam. If a beam failure event occurs on the serving beam, the wireless device may monitor configured and/or activated beams.

At step 4305, the wireless device may select a preamble and/or a RACH resource. The preamble and/or a RACH resource may correspond to the one or more: RSs, preambles, or RACH resources indicated by the MAC CE command received at step 4302. The preamble and/or RACH resource may be selected for use in beam failure recovery, e.g., after detection of the beam failure event.

At step 4306, the wireless device may transmit the selected preamble via the selected RACH resource for the BFR procedure. The wireless device may use the RSs and/or RACH resources indicated by the MAC CE in performing BFR procedures, according to one or more methods as described herein.

A wireless device and/or a base station may, after the wireless device and/or the base station successfully finish the beam failure recovery procedure, automatically deactivate the one or more RSs and/or the one or more RACH resources activated by the MAC CE. The base station may deactivate the one or more RSs and/or the one or more RACH resources by transmitting a second MAC CE indicating the one or more RSs and/or the one or more RACH resources. The second MAC CE may indicate a deactivation of the one or more RSs and/or the one or more RACH resources. The wireless device may deactivate the one or more RS and/or the one or more RACH resources based on receiving the second MAC CE.

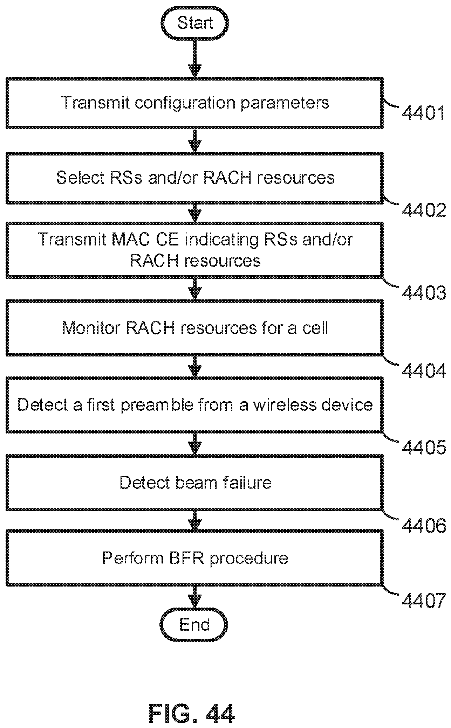

FIG. 44 shows an example of processes for a base station for beam failure recovery requests. These processes may be complementary of the processes for a wireless device for beam failure recovery requests depicted in FIG. 43. A base station may, at step 4401, transmit a message comprising one or more configuration parameters. For example, the base station may transmit configuration parameters such as those received by a wireless device in FIG. 43. The configuration parameters may indicate a first threshold for RSs, which may be used to detect a beam failure. After transmitting the configuration parameters, the base station may select one or more RSs and/or one or more RACH resources at step 4402.

At step 4402, the base station may select one or more RSs and/or one or more RACH resources for use in a beam failure recovery procedure. The RSs and/or one or more RACH resources may be transmitted via a MAC CE. For example, the MAC CE may indicate CSI-RSs and BFR-PRACH resources, such as described above regarding FIG. 39 or FIG. 43. Resources may be associated with one or more beams in a variety of ways. One or more examples described herein (e.g., FIG. 39, FIG. 40, and/or FIG. 41) may show different resource assignments for transmission beams that may be assigned using a MAC CE.

The base station may determine the best RSs and RACH resources for use by the wireless device based on various factors (e.g., the base station's understanding of the network topography, wireless environment, and/or RACH resources in use by wireless devices connected to the base station). This may have the advantage of reducing power consumption (e.g., by reducing the number of RSs to be monitored), as well as allowing the wireless device to transmit beam-forming requests faster (e.g., because fewer resources are being monitored).

RSs and/or RACH resources may be selected according to multiple factors. A first factor may be the cell state for a RACH resource. A second factor may be the physical location of a wireless device relative to a base station. A third factor may be the relative transmission quality for a RACH resource. The cell state may be prioritized above the location, and the location may be prioritized above the relative transmission quality. The cell state and the location may be specific to a given wireless device.

At step 4403, the base station may transmit, to the wireless device, a MAC CE indicating activation of a first set of one or more: RSs, preambles, or RACH resources. A MAC CE may have the advantage of being a faster transmission than other types of transmissions, such as an RRC message. The MAC CE may indicate RSs and or RACH resources that may be used in the event of that beam failure recovery is triggered. After transmitting the MAC CE, the base station may begin monitoring RACH resources at step 4404.

At step 4404, the base station may monitor RACH resources associated with a cell. The base station may monitor the first RACH resources, as well as the second RACH resources.

At step 4405, the base station may detect a first preamble (e.g., a RAP) transmitted from a wireless device via the first RACH resources. The base station may detect, at step 4406, a beam failure related to the first RACH resources.

At step 4407, the base station may continue to perform a BFR procedure according to the systems and methods described above. The BFR procedure performed in step 4407 may comprise, or be in addition to, BFR procedures that may have been performed in step 4401 to step 4406, or as otherwise described herein.

Any wireless device and/or base station may perform any combination of one or more of the above steps of FIG. 43 and/or FIG. 44. A wireless device, a base station, a core network device, or any other device, may perform any combination of a step, or a complementary step, of one or more of the above steps. Some or all of these steps may be performed, and the order of these steps may be adjusted. For example, step 4402 and/or step 4403 may be performed before step 4401, and/or step 4405 may be performed before step 4404. As another example, step 4404 and/or step 4405 may be performed before step 4402 and/or step 4403. Any base station described herein may be a current base station, a serving base station, a source base station, a target base station, or any other base station.

If a beam failure occurs, a beam failure recovery procedure may be performed. A wireless device may send, to a base station, a beam failure recovery (BFR) request or one or more messages associated with a BFR request. The base station may send one or more transmissions associated with a BFR request. The wireless device may have one or more BFR requests for a transmission, overlapping in time with a transmission of one or more other messages. An amount of transmission power required by the wireless device for such overlapping transmissions may exceed a maximum allowable transmission power. Restrictions on total transmission power may be determined to set a threshold maximum allowable transmission power that can be utilized by the wireless device or base station at a given point in time. For example, a regulatory group, such as Underwriters Laboratories, or a group such as 3GPPP, may specify restrictions associated with one or more regulatory certifications, standards, recommendations, etc. The threshold maximum allowable power may apply to a total transmission power for a limited set of frequencies or antennas, or the threshold may apply to a plurality of frequencies or antennas. It may be advantageous to perform methods to control power transmission such that multiple requests do not exceed the threshold. The methods may reduce the total transmission power for one or more overlapping transmissions by reducing power for one or more overlapping transmission, e.g., according to a prioritization scheme, such that the total transmission power of the overlapping transmissions does not exceed the threshold maximum allowable transmission power. This may have the advantage of reducing power to one or more transmissions that are less important (e.g., one or more messages with an indicated lower priority), so that more important transmissions (e.g., one or more BFR requests having an indicated higher priority) have less or no reduction in transmission power.

A wireless device may receive, and a base station may transmit, one or more radio resource control messages. The one or more radio resource control message may comprise first configuration parameters of at least one cell, and second configuration parameters of a random access (RA) procedure for a beam failure recovery (BFR). The at least one cell may be grouped into multiple cell groups. The wireless device may initiate the RA procedure for a BFR, e.g., after at least one beam failure on a first cell of the at least one cell. The first cell may be a primary cell of a first cell group of the multiple cell groups. The wireless device may detect the at least one beam failure, e.g., based on determining that a measured mean link quality is below a threshold. The measured beam link quality may be based on one or more of: a reference signal received power, or a reference signal received quality. The wireless device may determine, e.g., based on the second configuration parameters, a first transmission power of a first preamble. The wireless device may select the first preamble from a plurality of preambles, e.g., based on initiating the RA procedure for the BFR. The wireless device may determine that a first configured transmission, of the first preamble via the first cell, overlaps in time with a second configured transmission of a second preamble. The wireless device may adjust a second transmission power of the second preamble so that a total power, comprising the first transmission power and a second transmission power of the second configured transmission, does not exceed a total allowable power value. The wireless device may transmit, using the adjusted second transmission power, the second preamble. The transmitting the second preamble may be via a second cell that is a secondary cell of a second cell group of the multiple cell groups. The wireless device may initiate a second RA procedure based on at least one of: an initial access procedure, a handover command, or a physical downlink control channel order. The wireless device may transmit, using the first transmission power, the first preamble. The base station may receive the second preamble, and the base station may receive the first preamble.

Additionally or alternatively, the wireless device may determine that a first configured transmission, of a preamble (e.g., the first preamble) via the first cell, overlaps in time with a second configured transmission of a second signal. The wireless device may determine that a total power, comprising a first transmission power of the first configured transmission and a second transmission power of the second configured transmission, exceeds a total allowable power value. The wireless device may drop the second signal, e.g., based on the determination that the total power exceeds the allowable power value. The wireless device may transmit, using the first transmission power, the preamble.

Additionally or alternatively, the wireless device may initiate a scheduling request (SR) procedure for the BFR. The wireless device may determine a first transmission power of a configured transmission via the first cell of a first signal associated with the SR procedure. The wireless device may determine that the configured transmission of the first signal overlaps in time with a configured transmission of a second signal. The second signal may be for an uplink transmission via one or more of: a physical uplink control channel, or a physical uplink shared channel. The second signal may be a sounding reference signal. The first signal may be for an uplink transmission via a first physical random access channel (PRACH), and the second signal may be for an uplink transmission via a second PRACH. The wireless device may determine that a total power, comprising the first transmission power and a second transmission power of the configured transmission of the second signal, exceeds a total allowable power value. Based on the determination that the total power exceeds a total allowable power value, the wireless device may: adjust the second transmission power so that the total power does not exceed the total allowable power value, and/or drop the second signal. The wireless device may transmit, using the first transmission power, the first signal. The wireless device may transmit, using the adjusted second transmission power, the second signal.

A wireless device may determine an expected transmission power for a PUSCH (Physical Uplink Shared Channel) transmission according to one or more system configurations. For example, an expected PUSCH transmission may be performed for a single carrier, for carrier aggregation, for dual connectivity (DC), or for multiple PUCCH-Secondary Cells.

A single carrier may be used if, e.g., a wireless device transmits a PUSCH transmission without a simultaneous PUCCH transmission for a serving cell c. For a single carrier, the wireless device transmit power $P_{\text{PUSCH},c}(i)$ for the PUSCH transmission in subframe i for the serving cell c may be given by the equation:

$$P_{\text{PUSCH,c}}(i) = \min \begin{cases} P_{\text{CMAX},c}(i), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{cases} \quad [\text{dBm}].$$

If a wireless device transmits a PUSCH transmission simultaneous with a PUCCH transmission associated with the serving cell c, the wireless device transmit power $P_{\text{PUSCH},c}(i)$ for the PUSCH transmission in subframe i for the serving cell c may be given by the equation:

$$P_{\text{PUSCH,c}}(i) = \min \begin{cases} 10\log_{10}\left(\hat{P}_{\text{CMAX},c}(i) - \hat{P}_{\text{PUCCH}}(i)\right), \\ 10\log_{10}(M_{\text{PUSCH,c}}(i)) + P_{\text{O\_PUSCH,c}}(j) + \alpha_c(j) \cdot PL_c + \Delta_{\text{TF,c}}(i) + f_c(i) \end{cases} \quad [\text{dBm}]$$

wherein:

$P_{\text{CMAX},c}(i)$ may be a configured wireless device transmission power in subframe i for serving cell c,

$\hat{P}_{\text{CMAX},c}(i)$ may be a linear value of $P_{\text{CMAX},c}(i)$,

$\hat{P}_{\text{PUCCH}}(i)$ may be a linear value of $P_{\text{PUCCH}}(i)$,

$M_{\text{PUSCH},c}(i)$ may be a bandwidth of the PUSCH resource assignment expressed in number of resource blocks valid for subframe i and serving cell c, and/or

$PL_c$ may be a downlink pathloss estimate for the wireless device serving cell c in dB.

It may be that $PL_c = referenceSignalPower$, which may be a higher-layer filtered reference signal power (RSRP). The $referenceSignalPower$ may be provided by higher layers, RSRP may be determined for the reference serving cell, and a higher-layer filter configuration may be used for the reference serving cell.

Carrier aggregation may be used if, e.g., a base station transmits, to a wireless device, one or more messages comprising configuration parameters associated with one or multiple serving cells.

If the total transmit power of the wireless device would exceed $\hat{P}_{CMAX}(i)$, a wireless device may scale $\hat{P}_{PUSCH,c}(i)$

for the serving cell c in subframe i such that the condition

$$\sum_c w(i) \cdot \hat{P}_{\mathrm{PUSCH},c}(i) \le \left( \hat{P}_{\mathrm{CMAX}}(i) - \hat{P}_{\mathrm{PUCCH}}(i) \right)$$

may be satisfied, wherein:

$\hat{P}_{\mathrm{PUCCH}}(i)$ may be a linear value of $P_{\mathrm{PUCCH}}(i)$,

$\hat{P}_{\mathrm{PUSCH},c}(i)$ may be a linear value of $P_{\mathrm{PUSCH},c}(i)$,

$\hat{P}_{\mathrm{CMAX}}(i)$ may be a linear value of the wireless device total configured maximum output power $\hat{P}_{\mathrm{CMAX}}$ in subframe i, and/or

$w(i)$ may be a scaling factor of $\hat{P}_{\mathrm{PUSCH},c}(i)$ for serving cell c, where $0 \le w(i) \le 1$.

If there is no PUCCH transmission in subframe i, power may be adjusted such that $\hat{P}_{\mathrm{PUCCH}}(i) = 0$.

If a wireless device has a PUSCH transmission with uplink control information (UCI) on serving cell j, the wireless device has a PUSCH transmission without UCI in any of the remaining serving cells, and the total transmit power of the wireless device would exceed $\hat{P}_{\mathrm{CMAX}}(i)$, the wireless device may scale $\hat{P}_{\mathrm{CMAX}}(i)$ for the serving cells without UCI in subframe i such that the condition

$$\sum_{c \ne j} w(i) \cdot \hat{P}_{\mathrm{PUSCH},c}(i) \le \left( \hat{P}_{\mathrm{CMAX}}(i) - \hat{P}_{\mathrm{PUSCH},j}(i) \right)$$

may be satisfied, wherein:

$\hat{P}_{\mathrm{PUSCH},j}(i)$ may be a PUSCH transmit power for the cell with UCI, and/or
$w(i)$ may be a scaling factor of $\hat{P}_{\mathrm{PUSCH},c}(i)$ for serving cell c without UCI.

If the above occurs, it may be that no power scaling may be performed for $\hat{P}_{\mathrm{PUSCH},j}(i)$ unless

$$\sum_{c \ne j} w(i) \cdot \hat{P}_{\mathrm{PUSCH},c}(i) = 0$$

and the total transmit power of the wireless device would exceed $\hat{P}_{\mathrm{CMAX}}(i)$.

A wireless device may transmit a PUCCH transmission and a PUSCH transmission in a substantially concurrent fashion, e.g., with a PUCCH transmission with UCI on serving cell j and a PUSCH transmission without UCI in any of the remaining serving cells. If this occurs, and the total transmission power of the wireless device would exceed $\hat{P}_{\mathrm{CMAX}}(i)$, the wireless device may obtain $\hat{P}_{\mathrm{PUSCH},c}(i)$ according to:

$$\hat{P}_{\mathrm{PUSCH},j}(i) = \min\left( \hat{P}_{\mathrm{PUSCH},j}(i), \left( \hat{P}_{\mathrm{CMAX}}(i) - \hat{P}_{\mathrm{PUCCH}}(i) \right) \right)$$

and/or

$$\sum_{c \ne j} w(i) \cdot \hat{P}_{\mathrm{PUSCH},c}(i) \le \left( \hat{P}_{\mathrm{CMAX}}(i) - \hat{P}_{\mathrm{PUCCH}}(i) - \hat{P}_{\mathrm{PUSCH},j}(i) \right).$$

If a wireless device is configured without a Secondary Cell Group (SCG) or a PUCCH Secondary Cell (PUCCH-SCell), the wireless device is configured with multiple TAGs, and the PUCCH/PUSCH transmission of the wireless device on subframe i for a given serving cell in a TAG overlaps some portion of the first symbol of the PUSCH transmission on subframe i + 1 for a different serving cell in another TAG, the wireless device may adjust its total transmission power so as not to exceed $\hat{P}_{\mathrm{CMAX}}$ on any overlapped portion.

If the wireless device is configured with multiple TAGs, and the PUSCH transmission of the wireless device on subframe i for a given serving cell in a TAG overlaps some portion of the first symbol of the PUCCH transmission on subframe i + 1 for a different serving cell in another TAG, the wireless device may adjust its total transmission power so as not to exceed $\hat{P}_{CMAX}$ on any overlapped portion.

If the wireless device is configured with multiple TAGs, the sounding reference signal (SRS) transmission of the wireless device in a symbol on subframe i for a given serving cell in a TAG overlaps with the PUCCH/PUSCH transmission on subframe i or subframe i + 1 for a different serving cell in a TAG (which may be the same TAG or a different TAG), and the total transmission power for the wireless device exceeds $P_{CMAX}$, the wireless device may drop SRS transmissions.

If the wireless device is configured with multiple TAGs and more than two serving cells, the SRS transmission of the wireless device in a symbol on subframe i for a given serving cell overlaps with:

the SRS transmission on subframe i for a serving cell(s) other than the given serving cell, and
a PUSCH transmission or PUCCH transmission on subframe i or subframe i + 1 for a serving cell(s),

and the total transmission power exceeds $\hat{P}_{CMAX}$ on any overlapped portion of the symbol, the wireless device may drop SRS transmissions.

If the wireless device is configured with multiple TAGs, the wireless device may, after being requested (e.g., by higher layers) to transmit PRACH in a secondary serving cell belonging to a first TAG in parallel with an SRS transmission in a symbol on a subframe of a different serving cell belonging to a different TAG, drop SRS transmissions if the total transmission power exceeds $\hat{P}_{CMAX}$ on any overlapped portion of the symbol.

If the wireless device is configured with multiple TAGs, the wireless device may, when requested by higher layers, to transmit on a PRACH in a secondary serving cell in parallel with a PUSCH transmission or a PUCCH transmission in a different serving cell belonging to a different TAG, adjust the transmission power of the PUSCH transmission or the PUCCH transmission so that the total transmission power does not exceed $\hat{P}_{CMAX}$ on the overlapped portion.

A wireless device may trigger a BFR request transmission on an uplink channel. The uplink channel may be a PRACH, a frequency resource different from a normal PRACH, or a PUCCH.

A wireless device may transmit a BFR request simultaneously with other uplink transmissions, e.g., one or more of: a normal PRACH transmission, a scheduling request (SR) transmission, a PUCCH transmission, a PUSCH transmission, or an SRS transmission.

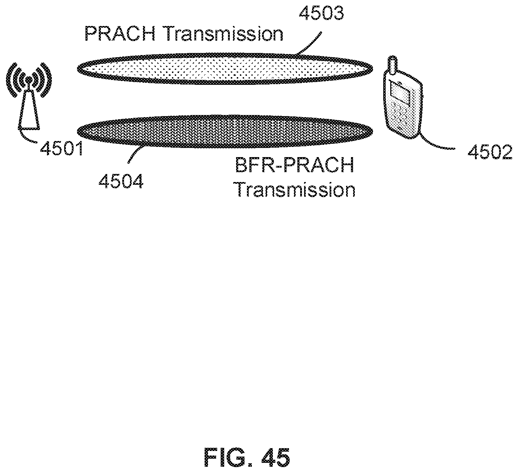

FIG. 45 shows an example of a BFR-PRACH transmission in conjunction with a regulated transmission. This example may apply, e.g., for CA. A base station 4501 may configure a wireless device 4502 with a primary cell and a secondary cell on a first carrier frequency 4503 and a second carrier frequency 4504, respectively. The base station 4501 may configure the wireless device 4502 with a normal PRACH transmission on the first carrier frequency 4503. The base station 4501 may configure the wireless device 4502 with a BFR PRACH transmission on the second carrier frequency 4504. The base station 4501 may transmit data to a wireless device 4502, e.g., using multiple beams on the second carrier frequency 4504 and using a single beam on the first carrier frequency 4503.

The base station 4501 may configure the cell on the second carrier frequency 4504 as a primary cell and the base station 4501 may configure the cell on the first carrier frequency 4503 as a secondary cell.

The wireless device 4502 may trigger a normal PRACH transmission on the first carrier frequency 4503 based on some event. For example, if the wireless device is in an RRC _CONNECTED state, but the wireless device is not UL-SYNCed to the cell on the first carrier frequency 4503, it may be advantageous for the wireless device 4502 to send new UL data. The wireless device 4502 may trigger a BFR request transmission on a BFR-PRACH on the second carrier frequency 4504 based on some event, e.g., when a downlink beam failure occurs. The wireless device 4502 may transmit a normal PRACH on the first carrier frequency 4503 and the wireless device 4502 transmit a BFR PRACH on the second carrier frequency 4504.

The wireless device 4502 may transmit a PUCCH transmission, a PUSCH transmission, or an SRS transmission on the first carrier frequency 4503, and the wireless device 2102 may do so substantially concurrently with triggering a BFR request transmission on a BFR-PRACH on the second carrier frequency 4504. The wireless device 4502, if configured with multiple serving cells, may determine, using a criterion, transmit power for a BFR PRACH transmission in parallel with one or more of: a PRACH transmission, a PUCCH transmission, a PUSCH transmission, or an SRS transmission.

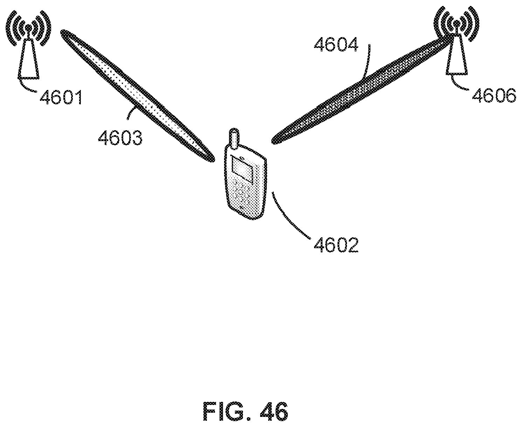

FIG. 46 shows an example of a BFR request transmission in a multiple-TRP system. In a multiple-TRP system, a base station may configure a wireless device 4602 with a plurality of beams, e.g., a first beam 4603 from a TRP 4601, and a second beam 4604 from a TRP 4606. The TRPs (e.g., TRP 4601 and TRP 4606) may belong to one base station and/or different base stations.

The wireless device 4602 may be equipped with two antenna panels. One panel may be used for transmitting to and receiving via the first beam 4603 from the TRP 4601, and another panel may be used for transmitting to and receiving via the second beam 4604 from the TRP 4606.

The base station may configure the wireless device 4602 with normal PRACH transmission on a beam pair link (BPL) via the first beam 4603, and the base station may configure the wireless device 4602 with a BFR PRACH transmission on a BPL via the second beam 4604.

The wireless device 4602 may trigger a normal PRACH transmission on the BPL via the first beam 4603 based on an event. For example, when the wireless device 4602 is in an RRC_CONNECTED state, but not UL-SYNCed to the cell associated with the TRP 4601, it may be advantageous for the wireless device 4602 to send new UL data. The wireless device 4602 may trigger a BFR request transmission via the TRP 4606 based on a beam failure event. For example, the wireless device 4602 may transmit a normal PRACH on the BPL via the first beam 4603 and the wireless device 4602 may transmit a BFR PRACH on the BPL via the second beam 4604.

The wireless device 4602 may transmit a PUCCCH transmission, a PUSCH transmission, and/or an SRS transmission on the BPL via the first beam 4603, and simultaneously, the wireless device 4602 may transmit a BFR PRACH on the BPL via the second beam 4604. If beam failure events occur on both BPLs, the wireless device 4602 may trigger BFR request transmissions on both BPLs.

If the wireless device 4602 is configured with multiple TRPs, the wireless device 4602 may determine, based on a criterion, a transmission power for a BFR-PRACH transmission in parallel with one or more of: a BFR-PRACH transmission, a normal PRACH transmission, a PUCCH transmission, a PUSCH transmission, or an SRS transmission.

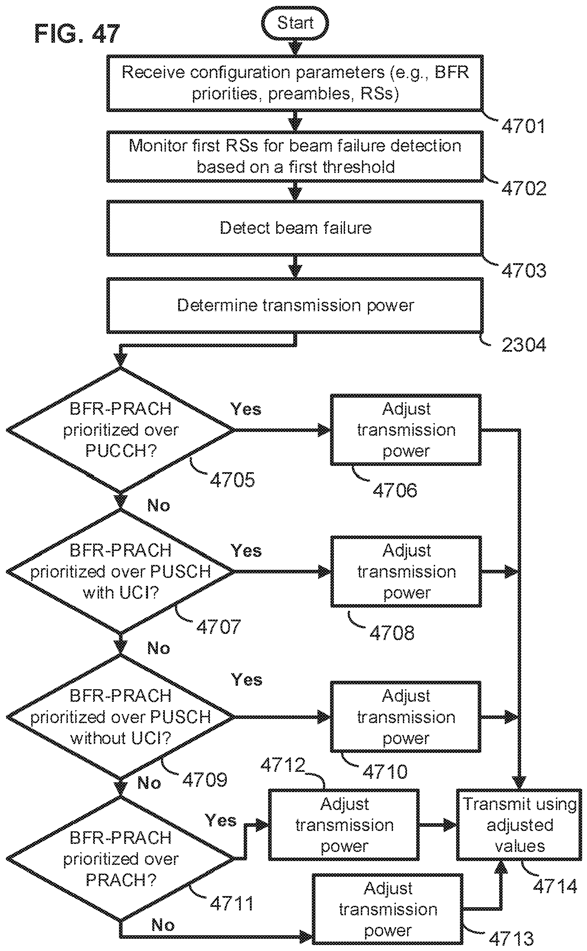

FIG. 47 shows an example of processes for a wireless device for beam failure recovery requests. A base station may transmit one or more messages comprising configuration parameters indicating one or more PRACH resources for a wireless device. The base station may transmit the one or more messages via RRC messaging. The configuration parameters may indicate one or more serving cells. The configuration parameters may indicate one or more PRACH resources for BFR requests. The configuration parameters may comprise one or more preambles and/or RSs. RS resources may comprise one or more of: CSI-RSs, SS blocks, or DMRSs of a PBCH. The configuration parameters may comprise one or more TRPs. The configuration parameters may comprise one or more first preambles and/or PRACHs associated with first RSs, one or more second preambles and/or PRACHs associated with second RSs, and/or one or more third (or other number) preambles and/or PRACHs associated with third (or other number) RSs. The configuration parameters may indicate one or more priorities for a BFR-PRACH. For example, BFR-PRACH transmission may be prioritized above or below PUCCH transmissions, PUSCH transmissions, PRACH transmissions, and/or other transmission types.

At step 4701, a wireless device may receive, from the base station, the configuration parameters. The configuration parameters may be used to configure the wireless device with a transmit beam. The configuration parameters may configure the wireless device with configured and/or activated transmit beams. The base station may use the serving beam to transmit, and the wireless device may use the serving beam to receive, PDCCH signals and associated PDSCH signals for the wireless device.

The wireless device may monitor reference signals for a potential beam failure at step 4702, e.g., after receiving configuration parameters. The wireless device may monitor a first set of RSs based on a first threshold. The first set of RSs may correspond to CSI-RSs of a serving beam. The first threshold may be determined, e.g., based on measurements from one or more previous beam failure events. The first threshold may be set to a value at or near an average of previous beam failure events, or to a value above some or all previous beam failure events. The wireless device may monitor periodically, for a duration of time (e.g., until an expiration of a timer), or until the first RSs fall below the first threshold.

At step 4703, the wireless device may detect a beam failure event. A detection of a beam failure event may comprise the wireless device determining that a channel quality of the first RSs fall below the first threshold. Additionally or alternatively, a detection of a beam failure event may comprise one or more measurements of a channel quality falling below the first threshold. The beam failure event may be on a serving beam. If a beam failure event occurs on the serving beam, the wireless device may monitor configured and/or activated beams.

At step 4704, the wireless device may determine a transmission power of an uplink channel or signal using a power control calculation. The transmission power may be configured for the entire wireless device, some physical part of the wireless device (e.g., a subset of one or more antennas of the wireless device), and/or some virtual part of the wireless device (e.g., one or more serving cells). The wireless device may determine the transmission power employing an open-loop power calculation and/or a closed-loop power calculation. The wireless device may measure a pathloss value based on one or more downlink reference signals. The wireless device may employ the pathloss value to determine an open-loop power value. The wireless device may receive one or more power control commands to determine a closed-loop power offset value for transmission in a transmission time interval (TTI).

At step 4705, the wireless device may determine if a BFR-PRACH transmission is prioritized over a PUCCH transmission. For example, a configuration parameter received from the base station may indicate that a BFR-PRACH transmission is prioritized over a PUCCH transmission. The BFR-PRACH transmission may be predefined or preconfigured to be prioritized over a PUCCH transmission. If a BFR-PRACH transmission is determined to be prioritized over a PUCCH transmission, the method may continue at step 4706. If a BFR-PRACH transmission is determined to not be prioritized over a PUCCH transmission, the method may continue at step 4707.

At step 4706, the wireless device may adjust transmission power based on determining that a BFR-PRACH transmission is prioritized over a PUCCH transmission. If a wireless device triggers a BFR request transmission on a BFR-PRACH on a serving cell in parallel with a PUSCH transmission or a PUCCH transmission on different serving cells, the wireless device may adjust the transmission power of the PUCCH transmission or the PUSCH transmission so that the total transmission power of the wireless device does not exceed a configured or predefined value (e.g., $P_{CMAX}$).

If a wireless device triggers, in subframe $i$, a PUSCH transmission and a BFR-PRACH transmission on a serving cell, the wireless device may determine if the total transmission power of the wireless device would exceed $\hat{P}_{CMAX}(i)$. If the total transmission power of the wireless device would exceed $\hat{P}_{CMAX}(i)$, the wireless device may scale $\hat{P}_{PUSCH,c}(i)$ for the serving cell c in subframe $i$ such that the condition

$$\sum_c w(i) \cdot \hat{P}_{\text{PUSCH},c}(i) \le \left( \hat{P}_{\text{CMAX}}(i) - \hat{P}_{\text{BFR-PRACH}}(i) - \hat{P}_{\text{PUCCH}}(i) \right)$$

may be satisfied, wherein:

$\hat{P}_{\text{PUCCH}}(i)$ may be a linear value of $P_{\text{PUCCH}}(i)$,

$\hat{P}_{\text{BFR-PRACH}}(i)$ may be a linear value of $\hat{P}_{\text{BFR-PRACH}}(i)$, which may be a transmission power for a BFR request on a BFR-PRACH,

$\hat{P}_{\text{PUSCH},c}(i)$ may be a linear value of $\hat{P}_{\text{PUSCH},c}(i)$,

$\hat{P}_{\text{CMAX}}(i)$ may be a linear value of the wireless device total configured maximum output power $\hat{P}_{CMAX}$ in subframe $i$, and

w(i) may be a scaling factor of $\hat{P}_{\text{PUSCH},c}(i)$ for serving cell c, where $0 \le w(i) \le 1$.

$$\sum_c w(i) \cdot \hat{P}_{\text{PUSCH},c}(i) = 0$$

No power scaling may be performed for $\hat{P}_{\text{PUCCH}}(i)$ unless and the total transmit power of the wireless device would exceed $\hat{P}_{CMAX}(i)$. If there is no PUCCH transmission in subframe $i$, power may be adjusted such that $\hat{P}_{\text{PUCCH}}(i) = 0$. If there is no BFR-PRACH transmission in subframe $i$, power may be adjusted such that $\hat{P}_{\text{BFR-PRACH}}(i) = 0$.

A wireless device may trigger, in subframe $i$, a BFR-PRACH transmission on a serving cell, a PUSCH transmission with UCI on serving cell $j$, and a PUSCH without UCI transmission in one or more of the remaining serving cells. If this occurs, and the total transmission power of the wireless device would exceed $\hat{P}_{CMAX}(i)$, the wireless device may scale $\hat{P}_{\text{PUSCH},c}(i)$ for the serving cells without UCI in subframe $i$ such that the condition

$$\sum_{c \ne j} w(i) \cdot \hat{P}_{\text{PUSCH},c}(i) \le \left( \hat{P}_{\text{CMAX}}(i) - \hat{P}_{\text{BFR-PRACH}}(i) - \hat{P}_{\text{PUSCH},j}(i) \right)$$

may be satisfied, wherein:

$\hat{P}_{\text{PUSCH},j}(i)$ is a PUSCH transmit power for the cell with UCI, and
w(i) is a scaling factor of $\hat{P}_{\text{PUSCH},c}(i)$ for serving cell c without UCI.

$$\sum_{c \ne j} w(i) \cdot \hat{P}_{\text{PUSCH},c}(i) = 0$$

No power scaling may be performed for $\hat{P}_{\text{PUSCH},j}(i)$ unless and the total transmission power of the wireless device still would exceed $\hat{P}_{CMAX}(i)$. If there is no BFR-PRACH transmission in subframe $i$, power may be adjusted such that $\hat{P}_{\text{BFR-PRACH}}(i) = 0$.

A wireless device may trigger, in subframe $i$, a BFR-PRACH transmission on a serving cell, a substantially concurrrent PUCCH transmission and PUSCH transmission with UCI on serving cell j, and a PUSCH transmission without UCI in one or more of the remaining serving cells. If this occurs, and the total transmission power of the wireless device would exceed $\hat{P}_{CMAX}(i)$, the wireless device may obtain $\hat{P}_{\text{PUSCH},c}(i)$ according to

$$\hat{P}_{\text{PUSCH},j}(i) = \min\left(\hat{P}_{\text{PUSCH},j}(i), \left(\hat{P}_{\text{CMAX}}(i) - \hat{P}_{\text{BFR-PRACH}}(i) - \hat{P}_{\text{PUCCH}}(i)\right)\right)$$

and

$$\sum_{c \neq j} w(i) \cdot \hat{P}_{\text{PUSCH},c}(i) \leq \left(\hat{P}_{\text{CMAX}}(i) - \hat{P}_{\text{BFR-PRACH}}(i) - \hat{P}_{\text{PUCCH}}(i) - \hat{P}_{\text{PUSCH},j}(i)\right).$$

A wireless device configured with a BFR-PRACH on a serving cell, which is transmitted in parallel with an SRS transmission in different serving cells, may drop the SRS transmission if the total power for parallel transmission of the BFR-PRACH and the SRS transmission would exceed a configured or predefined value (e.g., $P_{CMAX}$).

The power adjustment of step 4706 may be performed if a base station configures a wireless device with other uplink channels to transmit a BFR request (e.g., a scheduling request PUCCH (SR/PUCCH)). For example, a base station may configure a wireless device with an SR/PUCCH for a BFR request transmission (e.g., BFR-PUCCH). The wireless device may determine an uplink transmission power as described above regarding step 4706 by substituting BFR-PUCCH for BFR-PRACH.

Transmissions may resume using the adjusted values in step 4714, e.g., after adjusting the transmission power according to the priority such as described above.

At step 4707, the wireless device may determine if a BFR-PRACH transmission is prioritized over a PUSCH transmission with UCI. For example, a configuration parameter received from the base station may indicate that a BFR-PRACH transmission is prioritized over a PUSCH transmission with UCI. The BFR-PRACH transmission may be predefined or preconfigured to be prioritized over a PUSCH transmission with UCI. If a BFR-PRACH transmission is determined to be prioritized over a PUSCH transmission with UCI, the method may continue at step 4708. If a BFR-PRACH transmission is determined to not be prioritized over a PUSCH transmission with UCI, the method may continue at step 4709.

At step 4708, the wireless device may adjust transmission power based on determining that a BFR-PRACH transmission is prioritized over a PUSCH transmission with UCI. If a wireless device triggers a BFR request transmission on a BFR-PRACH on a serving cell in parallel with a PUSCH transmission or a PUCCH transmission on different serving cells, the wireless device may adjust the transmission power of the BFR-PRACH on the serving cell and the PUSCH on other serving cells so that the total transmission power of the wireless device does not exceed a configured or predefined value (e.g., $P_{CMAX}$).

A wireless device may trigger, in subframe $i$, a BFR-PRACH transmission on a serving cell and a PUSCH with UCI transmission. If this occurs, and the total transmit power of a wireless device would exceed $\hat{P}_{CMAX}(i)$, the wireless device may scale $\hat{P}_{\text{PUSCH},c}(i)$ for the serving cell c in subframe $i$ such that the condition

$$\sum_{c} w(i) \cdot \hat{P}_{\text{PUSCH},c}(i) \leq \left(\hat{P}_{\text{CMAX}}(i) - \hat{P}_{\text{PUCCH}}(i) - \hat{P}_{\text{BFR-PRACH}}(i)\right)$$

may be satisfied, wherein:

$\hat{P}_{\text{PUCCH}}(i)$ may be a linear value of $\hat{P}_{\text{PUCCH}}(i)$,

$\hat{P}_{\text{BFR-PRACH}}(i)$ may be a linear value of $P_{\text{BFR-PRACH}}(i)$, which may be a transmission power for a BFR request on BFR-PRACH,

$\hat{P}_{\text{PUSCH},c}(i)$ may be a linear value of $P_{\text{PUSCH},c}(i)$,

$\hat{P}_{CMAX}(i)$ may be a linear value of the wireless device total configured maximum output power $\hat{P}_{CMAX}$ in subframe $i$, and

w(i) may be a scaling factor of $\hat{P}_{\text{PUSCH},c}(i)$ for serving cell c, where $0 \leq w(i) \leq 1$.

No power scaling may be performed for $\hat{P}_{\text{BFR-PRACH}}(i)$ unless $\sum_{c} w(i) \cdot \hat{P}_{\text{PUSCH},c}(i) = 0$ and the total c transmit power of the wireless device would exceed $\hat{P}_{CMAX}$ *(i)*. If there is no PUCCH transmission in subframe *i*, power may be adjusted such that $\hat{P}_{PUCCH}(i) = 0$. If there is no BFR-PRACH transmission in subframe *i*, power may be adjusted such that $\hat{P}_{BFR-PRACH}(i) = 0$.

A wireless device may trigger, in subframe *i*, a BFR-PRACH transmission on a serving cell, a PUSCH transmission with UCI on serving cell *j*, and a PUSCH without UCI in one or more of the remaining serving cells. If this occurs, and the total transmit power of the wireless device would exceed $\hat{P}_{CMAX}(i)$, the wireless device may scale $\hat{P}_{PUSCH,c}(i)$ for the serving cells without UCI in subframe *i* such that the condition

$$\sum_{c \neq j} w(i) \cdot \hat{P}_{\mathrm{PUSCH},c}(i) \leq \left( \hat{P}_{\mathrm{CMAX}}(i) - \hat{P}_{\mathrm{BFR\text{-}PRACH}}(i) - \hat{P}_{\mathrm{PUSCH},j}(i) \right)$$

may be satisfied, wherein:

$\hat{P}_{PUSCH,j}(i)$ may be a PUSCH transmit power for the cell with UCI, and

$w(i)$ may be a scaling factor of $\hat{P}_{PUSCH,c}(i)$ for serving cell c without UCI.

If the above occurs, no power scaling may be performed for $\hat{P}_{BFR-PRACH}(i)$ and $\hat{P}_{PUSCH,j}(i)$ unless $$\sum_{c \neq j} w(i) \cdot \hat{P}_{\mathrm{PUSCH},c}(i) = 0$$ and the total transmit power of the wireless device still would exceed $\hat{P}_{CMAX}(i)$. If there is no BFR-PRACH transmission in subframe *i*, power may be adjusted such that $\hat{P}_{BFR-PPACH}(i) = 0$.

A wireless device may trigger, in subframe *i*, a BFR-PRACH transmission on a serving cell, a simultaneous PUCCH transmission and PUSCH transmission with UCI on serving cell *j*, and a PUSCH transmission without UCI in one or more of the remaining serving cells. If this occurs, and the total transmission power of the wireless device would exceed $\hat{P}_{CMAX}(i)$, the wireless device may obtain $\hat{P}_{PUSCH,c}(i)$ according to

$$\hat{P}_{\mathrm{PUSCH},j}(i) = \min\left( \hat{P}_{\mathrm{PUSCH},j}(i), \left( \hat{P}_{\mathrm{CMAX}}(i) - \hat{P}_{\mathrm{BFR\text{-}PRACH}}(i) - \hat{P}_{\mathrm{PUCCH}}(i) \right) \right)$$

and

$$\sum_{c \neq j} w(i) \cdot \hat{P}_{\mathrm{PUSCH},c}(i) \leq \left( \hat{P}_{\mathrm{CMAX}}(i) - \hat{P}_{\mathrm{BFR\text{-}PRACH}}(i) - \hat{P}_{\mathrm{PUCCH}}(i) - \hat{P}_{\mathrm{PUSCH},j}(i) \right).$$

A wireless device configured with a BFR-PRACH transmission on a serving cell, which is transmitted in parallel with an SRS transmission in different serving cells, may drop the SRS transmission if the total power for parallel transmission of the BFR-PRACH transmission and the SRS transmission would exceed a configured or predefined value (e.g., $P_{CMAX}$).

The power adjustment of step 4708 may be performed if a base station configures a wireless device with other uplink channels to transmit a BFR request (e.g., an SR/PUCCH). For example, a base station may configure a wireless device with an SR/PUCCH for a BFR request transmission (e.g., BFR-PUCCH). The wireless device may determine uplink transmission power as described above regarding step 4708 by substituting BFR-PUCCH for BFR-PRACH.

Transmissions may resume using the adjusted values in step 4714, e.g., after adjusting the transmission power according to the priority such as described above.

At step 4709, the wireless device may determine if a BFR-PRACH transmission is prioritized over a PUSCH transmission without UCI. For example, a configuration parameter received from the base station may indicate that a BFR-PRACH transmission is prioritized over a PUSCH transmission without UCI. The BFR-PRACH transmission may be predefined or preconfigured to be prioritized over a PUSCH transmission without UCI. If a BFR-PRACH transmission is determined to be prioritized over a PUSCH transmission without UCI, the method may continue at step 4710. If a BFR-PRACH transmission is determined to not be prioritized over a PUSCH transmission without UCI, the method may continue at step 4711.

At step 4710, the wireless device may adjust transmission power based on determining that a BFR-PRACH transmission is prioritized over a PUSCH transmission without UCI. If a wireless device triggers a BFR request transmission on a BFR-PRACH on a serving cell in parallel with a PUSCH transmission or a PUCCH transmission on different serving cells, the wireless device may adjust the transmission power of the BFR-PRACH on the serving cell and the PUSCH on other serving cells so that the total transmission power of the wireless device does not exceed a configured or predefined value (e.g., $P_{CMAX}$).

At step 4710, the wireless device may adjust transmission power based on determining that a BFR-PRACH transmission is prioritized over a PUSCH transmission without UCI. If a wireless device triggers a BFR request transmission on a BFR-PRACH on a serving cell in parallel with a PUSCH transmission or a PUCCH transmission on different serving cells, the wireless device may adjust the transmission power of the BFR-PRACH on the serving cell and the PUSCH without UCI on other serving cells so that the total transmission power of the wireless device does not exceed a configured or predefined value (e.g., $P_{CMAX}$).

A wireless device may trigger, in subframe $i$, a BFR-PRACH transmission on a serving cell and a PUSCH with UCI transmission. If this occurs, and the total transmit power of a wireless device would exceed $\hat{P}_{CMAX}(i)$, the wireless device may scale $\hat{P}_{PUSCH,c}(i)$ for the serving cell c in subframe $i$ such that the condition

$$\sum_c w(i) \cdot \hat{P}_{\text{PUSCH},c}(i) \le \left( \hat{P}_{\text{CMAX}}(i) - \hat{P}_{\text{PUCCH}}(i) - \hat{P}_{\text{BFR-PRACH}}(i) \right)$$

may be satisfied. No power scaling may be performed for $\hat{P}_{BFR-PRACH}(i)$ unless $\sum_c w(i) \cdot \hat{P}_{\text{PUSCH},c}(i) = 0$ and the total transmit power of the wireless device would exceed $\hat{P}_{CMAX}(i)$. If there is no PUCCH transmission in subframe $i$, power may be adjusted such that $\hat{P}_{PUCCH}(i) = 0$. If there is no BFR-PRACH transmission in subframe $i$, power may be adjusted such that $\hat{P}_{BFR-PRACH}(i) = 0$.

A wireless device may trigger, in subframe $i$, a BFR-PRACH transmission on a serving cell, a PUSCH transmission with UCI on serving cell $j$, and a PUSCH without UCI in any of the remaining serving cells. If this occurs, and the total transmit power of the wireless device would exceed $\hat{P}_{CMAX}(i)$, the wireless device may scale $\hat{P}_{PUSCH,c}(i)$ for the serving cells without UCI in subframe $i$ such that the condition

$$\sum_{c \ne j} w(i) \cdot \hat{P}_{\text{PUSCH},c}(i) \le \left( \hat{P}_{\text{CMAX}}(i) - \hat{P}_{\text{BFR-PRACH}}(i) - \hat{P}_{\text{PUSCH},j}(i) \right)$$

may be satisfied, wherein $\hat{P}_{PUSCH,j}(i)$ is a PUSCH transmit power for the cell with UCI. If the above occurs, no power scaling may be performed for $\hat{P}_{BFR-PRACH}(i)$ and $\hat{P}_{PUSCH,j}(i)$ unless $\sum_{c \ne j} w(i) \cdot \hat{P}_{\text{PUSCH},c}(i) = 0$ and the total transmit power of the wireless device still would exceed $\hat{P}_{CMAX}(i)$. If there is no BFR request transmission using a BFR-PRACH in subframe $i$, power may be adjusted such that $\hat{P}_{BFR-PRACH}(i) = 0$.

A wireless device may trigger, in subframe $i$, a BFR request transmission using a BFR PRACH on a serving cell, a simultaneous PUCCH and PUSCH transmission with UCI on serving cell $j$, and PUSCH transmission without UCI in any of the remaining serving cells. If this occurs, and the total transmit power of the wireless device would exceed $\hat{P}_{CMAX}(i)$, the wireless device may obtain $\hat{P}_{PUSCH,c}(i)$ according to

$$\hat{P}_{\text{PUSCH},j}(i) = \min\left( \hat{P}_{\text{PUSCH},j}(i), \left( \hat{P}_{\text{CMAX}}(i) - \hat{P}_{\text{BFR-PRACH}}(i) - \hat{P}_{\text{PUCCH}}(i) \right) \right)$$

and

$$\sum_{c \ne j} w(i) \cdot \hat{P}_{\text{PUSCH},c}(i) \le \left( \hat{P}_{\text{CMAX}}(i) - \hat{P}_{\text{BFR-PRACH}}(i) - \hat{P}_{\text{PUCCH}}(i) - \hat{P}_{\text{PUSCH},j}(i) \right).$$

A wireless device, configured with a BFR-PRACH on a serving cell, which is transmitted in parallel with an SRS transmission in different serving cells, may drop the SRS transmission if the total power for parallel transmission of the BFR-PRACH transmission and the SRS transmission would exceed a configured or predefined value (e.g., $P_{CMAX}$).

The power adjustment of step 4710 may be performed if a base station configures a wireless device with other uplink channels to transmit a BFR request (e.g., an SR/PUCCH). For example, a base station may configure a wireless device with an SR/PUCCH for a BFR request transmission (e.g., BFR-PUCCH). The wireless device may determine uplink transmission power as described above regarding step 4710 by substituting BFR-PUCCH for BFR-PRACH.

Transmissions may resume using the adjusted values in step 4714, e.g., after adjusting the transmission power according to the priority such as described above.

At step 4711, the wireless device may determine if a BFR-PRACH transmission is prioritized over other types of PRACH transmissions. For example, a configuration parameter received from the base station may indicate that a BFR-PRACH transmission is prioritized over other types of PRACH transmissions. The BFR-PRACH transmission may be predefined or preconfigured to be prioritized over other types of PRACH transmissions. If a BFR-PRACH transmission is determined to be prioritized over other types of PRACH transmissions, the method may continue at step 4712. If a BFR-PRACH transmission is determined to not be prioritized over other types of PRACH transmissions, the method may continue at step 4713.

At step 4712, the wireless device may adjust transmission power based on determining that a BFR-PRACH transmission is determined to be prioritized over other types of PRACH transmissions. If a wireless device transmits a normal PRACH preamble on a serving cell in parallel with a BFR request transmission on a BFR-PRACH on another serving cell, the wireless device may adjust the transmission power of the normal PRACH so that the total transmission power of the wireless device does not exceed a configured or predefined value (e.g., $P_{CMAX}$).

If a wireless device triggers a BFR request transmission on a BFR-PRACH in a serving cell in parallel with a normal PRACH transmission in a different serving cell, the wireless device may drop the normal PRACH transmission if the total power for parallel transmission of the BFR-PRACH transmission and the normal PRACH transmission would exceed a configured or predefined value (e.g., $P_{CMAX}$).

The power adjustment of step 4712 may be performed if a base station configures a wireless device with other uplink channels to transmit a BFR request (e.g., a SR/PUCCH). For example, a base station may configure a wireless device with a SR/PUCCH for a BFR request transmission (e.g., BFR-PUCCH). The wireless device may determine uplink transmission power as described above regarding step 4712 by substituting BFR-PUCCH for BFR-PRACH.

Transmissions may resume using the adjusted values in step 4714, e.g., after adjusting the transmission power according to the priority such as described above.

At step 4713, the wireless device may adjust transmission power based on determining that a BFR-PRACH transmission is determined to not be prioritized over other types of PRACH transmissions. If a wireless device transmits a normal PRACH preamble on a serving cell in parallel with a BFR request transmission on a BFR-PRACH on another serving cell, the wireless device may adjust the transmission power of the BFR-PRACH so that the total transmission power of the wireless device does not exceed a configured or predefined value (e.g., $P_{CMAX}$).

A wireless device may transmit a normal PRACH preamble in a RACH procedure (e.g., initial access or handover).

If a wireless device triggers a BFR request transmission on a BFR-PRACH in a serving cell in parallel with a normal PRACH transmission in a different serving cell, the wireless device may drop the BFR-PRACH transmission if the total power for parallel transmission of the BFR-PRACH transmission and the normal PRACH transmission would exceed a configured or predefined value (e.g., $P_{CMAX}$).

A wireless device configured with a BFR-PRACH transmission on a serving cell, which is transmitted in parallel with an SRS transmission in different serving cells, may drop the SRS transmission if the total power for parallel transmission of the BFR-PRACH transmission and the SRS transmission would exceed a configured or predefined value (e.g., $P_{CMAX}$).

The power adjustment of step 4713 may be performed if a base station configures a wireless device with other uplink channels to transmit a BFR request (e.g., a SR/PUCCH). For example, a base station may configure a wireless device with a SR/PUCCH for a BFR request transmission (e.g., BFR-PUCCH). The wireless device may determine uplink transmission power as described above regarding step 4713 by substituting BFR-PUCCH for BFR-PRACH.

Further power adjustments may be made for various other considerations, such as multiple TRPs. A wireless device may trigger a first BFR request on a first BFR-PRACH on a first TRP (e.g., using RSs), which may be transmitted in parallel with a second BFR request transmission on a second BFR-PRACH on a second TRP (e.g., using RSs). A wireless device may adjust the transmission power of the second BFR-PRACH so that the total transmission power of the wireless device does not exceed a configured or predefined value (e.g., $P_{CMAX}$).

The second BFR-PRACH may be associated with a TRP (e.g., using RSs) with a lower beam pair link quality. The second BFR-PRACH may be associated with a TRP (e.g., using RSs) which may be a particular TRP (e.g., using RSs) indicated by a base station.

A wireless device may trigger a first BFR request on a first BFR-PRACH on a first TRP (e.g., using RSs), which may be transmitted in parallel with a second BFR request transmission on a second BFR-PRACH on a second TRP (e.g., using RSs). A wireless device may drop the second BFR-PRACH transmission if the total power for parallel transmission of both BFR-PRACH transmissions would exceed a configured or predefined value (e.g., $P_{CMAX}$).

A wireless device may trigger a BFR-PRACH transmission in a TRP (e.g., using RSs), which may be transmitted in parallel with a PUCCH transmission or a PUSCH transmission in a different TRP (e.g., using RSs). The wireless device may allocate the transmit power for the BFR-PRACH and the other channels by using one or more of the methods herein, substituting a "TRP" for a "cell."

Power adjustments may also be made to compensate for overlapping transmission in a single cell. A wireless device may be configured with one serving cell. If a wireless device triggers a BFR-PRACH in parallel with an uplink channel transmission, the wireless device may determine transmit power for the BFR-PRACH and the other channel by using one or more of the methods described herein.

A wireless device may trigger a BFR request on a BFR-PRACH in parallel with a PUSCH transmission or a PUCCH transmission in a serving cell. The wireless device may adjust the transmission power of the PUCCH or PUSCH so that the total transmission power of the wireless device does not exceed a configured or predefined value (e.g., $P_{CMAX}$).

A wireless device may trigger a BFR request on a BFR-PRACH in parallel with a PUSCH with UCI transmission or a PUCCH transmission in a serving cell. The wireless device may adjust the transmission power of the PUSCH with UCI so that the total transmission power of the wireless device does not exceed a configured or predefined value (e.g., $P_{CMAX}$).

A wireless device may trigger a BFR request on a BFR-PRACH in parallel with a PUSCH transmission or a PUCCH transmission in a serving cell. The wireless device may adjust the transmission power of the BFR-PRACH and a PUSCH without UCI so that the total transmission power of the wireless device does not exceed a configured or predefined value (e.g., $P_{CMAX}$).

A wireless device may trigger a BFR request on a BFR-PRACH in parallel with a normal PRACH transmission in a serving cell. The wireless device may adjust the transmission power of the BFR-PRACH so that the total transmission power of the wireless device does not exceed a configured or predefined value (e.g., $P_{CMAX}$).

A wireless device may trigger a BFR request on a BFR-PRACH in parallel with a normal PRACH transmission in a serving cell. The wireless device may adjust the transmission power of the normal PRACH so that the total transmission power of the wireless device does not exceed a configured or predefined value (e.g., $P_{CMAX}$).

A base station may configure a wireless device with other uplink channels to transmit a BFR request (e.g., an SR/PUCCH). The power allocation procedure in this example may be performed for the channel. For example, a base station may configure a wireless device with an SR/PUCCH for a BFR request transmission (e.g., BFR-PUCCH). The wireless device may determine uplink transmission power as described above regarding step 4713 by substituting BFR-PUCCH for BFR-PRACH.

At step 4714, the wireless device may resume transmission using adjusted transmission power values. For example, transmission power values for a BFR-PRACH, PUCCH, PUSCH, and/or normal PRACH may be adjusted as described in steps 4705 to 4713. Transmission may continue on respective channels according to the adjusted values.

If the wireless device determines that the adjusted transmission power values are no longer needed, the wireless device may increase power values or return to default values. For example, the wireless device may determine that a beam failure recovery process has concluded. Based on determining that the beam failure recovery process has concluded, the wireless device may return transmission power values to default values (e.g., transmission power values as determined in step 4704).

Any base station may perform any combination of one or more of the above steps of FIG. 47. A wireless device, a core network device, or any other device, may perform any combination of a step, or a complementary step, of one or more of the above steps. Some or all of these steps may be performed, and the order of these steps may be adjusted. For example, a wireless device may perform one or more steps of 4705, 4706, 4713 or 4714. If the wireless device determines that a BFR-PRACH transmission is prioritized over a PUCCH transmission, the wireless device may perform adjusting transmission power according to step 4706. If the wireless device determines that a BFR-PRACH transmission is prioritized below a PUCCH transmission, the wireless device may perform adjusting transmission power according to step 2313. After the transmission power adjustment, the wireless device may transmit the BFR-PRACH and/or the PUCCH according to the adjusted transmission power value. For example, a wireless device may perform one or more steps of 4707, 4708, 4713 or 4714. For example, a wireless device may perform one or more steps of 4709, 4710, 4713 or 4714. For example, a wireless device may perform one or more steps of 4711, 4712, 4713 or 4714. For example, the wireless device may perform steps of 4705, 4707, 4709 and/or 4711 in parallel, or in any order. For example, one or more of steps 4705 to 4711 may not be performed for overlapping transmission in a single cell. As other examples, step 4705 and/or step 4704 may be performed before step 4703. Results of one or more of steps 4705 to 4713 may be weighted differently from results of one or more other of these steps for an overall decision relating to an adjustment of transmission power and/or a transmission using an adjusted transmission power.

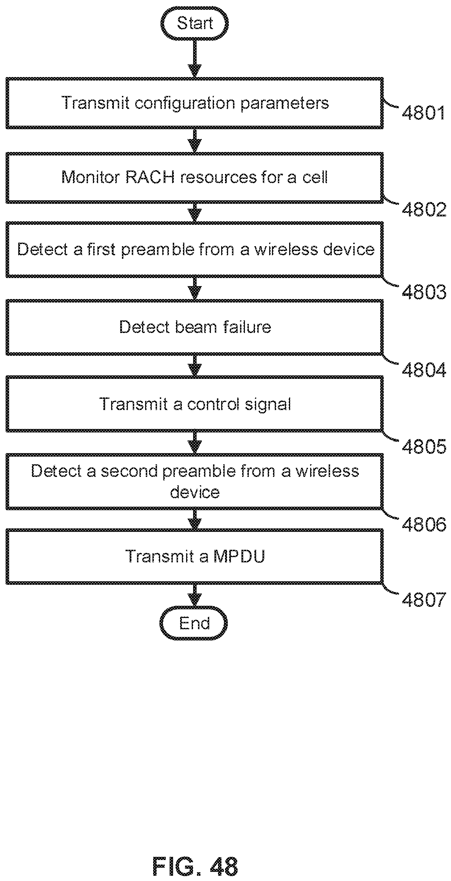

FIG. 48 shows an example of processes for a base station for beam failure recovery requests. These processes may be complementary of the processes for a wireless device for beam failure recovery requests depicted in FIG. 47.

A base station may, at step 4801, transmit a message comprising one or more configuration parameters. For example, the base station may transmit configuration parameters such as those received by a wireless device in FIG. 47. The configuration parameters may comprise priority information for a BFR PRACH transmission. The configuration parameters may indicate the BFR-PRACH priority used in the determinations above (e.g., steps 4705, 4707, 4709, or 4711). For example, the BFR-PRACH priority may be predefined or preconfigured. The transmitted parameters may comprise first parameters for a BFR procedure of a first cell (which may indicate RSs and first RACH resources), as well as second parameters for random access procedures for a second cell associated with second RACH resources. After transmitting the configuration parameters, the base station may begin monitoring RACH resources at step 4802.

At step 4802, the base station may monitor RACH resources associated with a cell. The base station may monitor the first RACH resources, as well as the second RACH resources.

At step 4803, the base station may detect a first preamble (e.g., a RAP) transmitted from a wireless device via the first RACH resources. The base station may detect, at step 4804, a beam failure related to the first RACH resources. The base station may detect the beam failure in the manner described above for beam failure detection (e.g., step 4703 of FIG. 47).

At step 4805, the base station may transmit, based on the first preamble, a control signal to the wireless device. The base station may transmit the control signal based on the detected beam failure. The control signal may comprise downlink control information. The control signal may indicate priority information for transmissions from the wireless device. For example, the control signal may indicate a priority for BFR-PRACH transmissions. The control signal may indicate the BFR-PRACH priority used in the determinations above (e.g., steps 4705, 4707, 4709, and/or 4711). The control signal may indicate a second preamble and/or a second RACH resource for a second RACH procedure.

At step 4806, the base station may detect a second preamble (e.g., a RAP) transmitted from the wireless device via the second RACH resources. The base station may transmit, at step 4807, a media access control protocol data unit (MPDU) to the wireless device.

Any base station may perform any combination of one or more of the above steps of FIG. 48. A wireless device, a core network device, or any other device, may perform any combination of a step, or a complementary step, of one or more of the above steps. Some or all of these steps may be performed, and the order of these steps may be adjusted. For example, one or more of steps 4803 to 4805 may not be performed. As another example, step 4805 to 4807 may be performed before, or concurrently with, step 4802. Results of one or more of steps 4801 to 4807 may be weighted differently from results of one or more other of these steps for an overall decision relating to an adjustment of transmission power and/or a transmission using an adjusted transmission power.

A wireless device and/or a base station may perform any combination of one or more of the above steps. A wireless device, a base station, or any other device, may perform any combination of a step, or a complementary step, of one or more of the above steps. Any base station described herein may be a current base station, a serving base station, a source base station, a target base station, or any other base station. A system may comprise a wireless device and a base station.

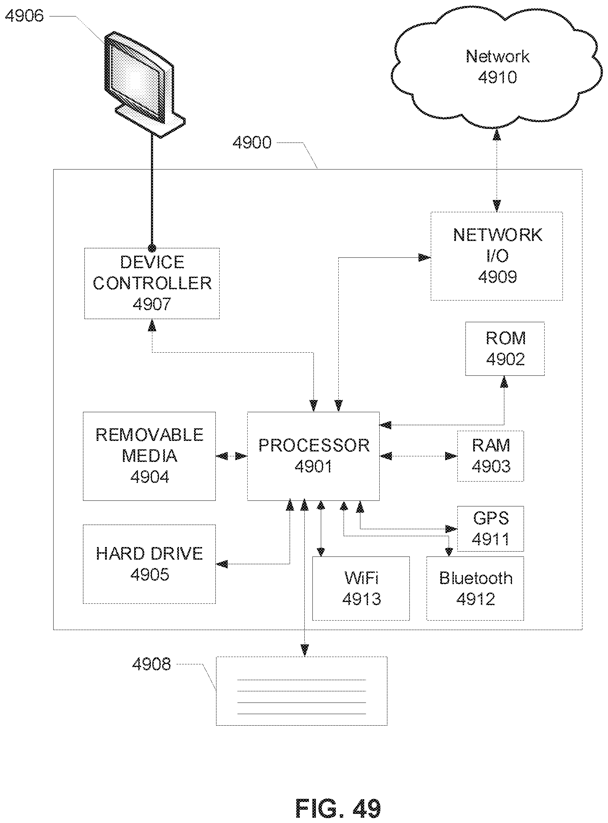

FIG. 49 shows general hardware elements that may be used to implement any of the various computing devices discussed herein, including, e.g., the base station 401, the base station 1501, the base station 1621, the base station 1701, the base station 1901, the first base station 2001, the second base station 2006, the base station 2101, the wireless device 406, the wireless device 1620, the wireless device 1902, the wireless device 2002, the wireless device 2102, or any other base station, wireless device, or computing device. The computing device 4900 may include one or more processors 4901, which may execute instructions stored in the random access memory (RAM) 4903, the removable media 4904 (such as a Universal Serial Bus (USB) drive, compact disk (CD) or digital versatile disk (DVD), or floppy disk drive), or any other desired storage medium. Instructions may also be stored in an attached (or internal) hard drive 4905. The computing device 4900 may also include a security processor (not shown), which may execute instructions of one or more computer programs to monitor the processes executing on the processor 4901 and any process that requests access to any hardware and/or software components of the computing device 4900 (e.g., ROM 4902, RAM 4903, the removable media 4904, the hard drive 4905, the device controller 4907, a network interface 4909, a GPS 4911, a Bluetooth interface 4912, a WiFi interface 4913, etc.). The computing device 4900 may include one or more output devices, such as the display 4906 (e.g., a screen, a display device, a monitor, a television, etc.), and may include one or more output device controllers 4907, such as a video processor. There may also be one or more user input devices 4908, such as a remote control, keyboard, mouse, touch screen, microphone, etc. The computing device 4900 may also include one or more network interfaces, such as a network interface 4909, which may be a wired interface, a wireless interface, or a combination of the two. The network interface 4909 may provide an interface for the computing device 4900 to communicate with a network 4910 (e.g., a RAN, or any other network). The network interface 4909 may include a modem (e.g., a cable modem), and the external network 4910 may include communication links, an external network, an in-home network, a provider's wireless, coaxial, fiber, or hybrid fiber/coaxial distribution system (e.g., a DOCSIS network), or any other desired network. Additionally, the computing device 4900 may include a location-detecting device, such as a global positioning system (GPS) microprocessor 4911, which may be configured to receive and process global positioning signals and determine, with possible assistance from an external server and antenna, a geographic position of the computing device 4900.

The example in FIG. 49 is a hardware configuration, although the components shown may be implemented as software as well. Modifications may be made to add, remove, combine, divide, etc. components of the computing device 4900 as desired. Additionally, the components may be implemented using basic computing devices and components, and the same components (e.g., processor 4901, ROM storage 4902, display 4906, etc.) may be used to implement any of the other computing devices and components described herein. For example, the various components described herein may be implemented using computing devices having components such as a processor executing computer-executable instructions stored on a computer-readable medium, as shown in FIG 49. Some or all of the entities described herein may be software based, and may coexist in a common physical platform (e.g., a requesting entity may be a separate software process and program from a dependent entity, both of which may be executed as software on a common computing device).

One or more features of the disclosure may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features of the disclosure, and such data structures are contemplated within the scope of computer executable instructions and computer-usable data described herein.

Many of the elements in examples may be implemented as modules. A module may be an isolatable element that performs a defined function and has a defined interface to other elements. The modules may be implemented in hardware, software in combination with hardware, firmware, wetware (i.e., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and complex programmable logic devices (CPLDs). Computers, microcontrollers, and microprocessors may be programmed using languages such as assembly, C, C++ or the like. FPGAs, ASICs, and CPLDs may be programmed using hardware description languages (HDL), such as VHSIC hardware description language (VHDL) or Verilog, which may configure connections between internal hardware modules with lesser functionality on a programmable device. The above mentioned technologies may be used in combination to provide the result of a functional module.

Systems, apparatuses, and methods may perform operations of multi-carrier communications described herein. Additionally or alternatively, a non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a UE, a base station, and the like) to enable operation of multi-carrier communications described herein. The device, or one or more devices such as in a system, may include one or more processors, memory, interfaces, and/or the like. Other examples may comprise communication networks comprising devices such as base stations, wireless devices or user equipment (UE), servers, switches, antennas, and/or the like. Any device (e.g., a wireless device, a base station, or any other device) or combination of devices may be used to perform any combination of one or more of steps described herein, including, e.g., any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

Systems, apparatuses, and methods may include the following examples:

Example 1: A method comprising:

receiving, by a wireless device from a base station, one or more radio resource control messages comprising configuration parameters of a cell, wherein the configuration parameters comprise:

a first preamble received target power value of the cell for a first random access procedure of a beam failure recovery procedure; and
a second preamble received target power value of the cell for a second random access procedure;

based on detecting a beam failure of the cell, transmitting, using a first transmission power that is based on the first preamble received target power value of the cell, a first preamble for the first random access procedure of the cell; and
transmitting, using a second transmission power that is based on the second preamble received target power value of the cell, a second preamble for the second random access procedure of the cell.

Example 2: The method of Example 1, further comprising:
determining the first transmission power based on adding the first preamble received target power value and a power offset value indicated by a preamble format parameter.

Example 3: The method of Example 1, further comprising:

measuring, based on one or more first reference signal resources, a beam link quality;
determining, based on the measured beam link quality, at least one beam failure; and
based on the determining the at least one beam failure:

initiating the beam failure recovery procedure; and
initiating the first random access procedure.

Example 4: The method of Example 1, wherein the first transmission power is further based on a first reference signal power value and a first path loss value.

Example 5: The method of Example 4, wherein the first path loss value is based on a layer 1 reference signal received power value.

Example 6: The method of Example 1, wherein the configuration parameters further comprise at least one of:

a channel state information reference signal;
a synchronization signal block; or
a demodulation reference signal for a physical broadcast channel.

Example 7: The method of Example 1, further comprising:
based on receiving a physical downlink control channel order, one or more of:

selecting at least one reference signal resource; or
initiating an initial access procedure.

Example 8: A method comprising:

transmitting, by a base station to a wireless device, one or more radio resource control messages comprising configuration parameters of a cell, wherein the configuration parameters comprise:

a first preamble received target power value of the cell for a first random access procedure of a beam failure recovery procedure; and
a second preamble received target power value of the cell for a second random access procedure;

receiving, from the wireless device, a first preamble for the first random access procedure of the cell, wherein a first transmission power of the first preamble is based on the first preamble received target power value of the cell; and
receiving, from the wireless device using a second transmission power based on the second preamble received target power value of the cell, a second preamble for the second random access procedure of the cell.

Example 9: The method of Example 8, wherein the first transmission power comprises a sum of the first preamble received target power value and a power offset value indicated by a preamble format parameter.

Example 10: The method of Example 8, further comprising:

determining, based on the receiving the first preamble for the first random access procedure of the cell, at least one beam failure; and
after the determining the at least one beam failure:

proceeding with a beam failure recovery procedure; and
proceeding with the first random access procedure.

Example 11: The method of Example 8, wherein the first transmission power is further based on a first reference signal power value and a first path loss value.

Example 12: The method of Example 11, wherein the first path loss value is based on a layer 1 reference signal received power value.

Example 13: The method of Example 8, wherein the configuration parameters further comprise at least one of:

a channel state information reference signal;
a synchronization signal block; or
a demodulation reference signal for a physical broadcast channel.

Example 14: The method of Example 8, further comprising:
transmitting, before receiving the second preamble, a physical downlink control channel order.

Example 15: A method comprising:

receiving, by a wireless device from a base station, one or more radio resource control messages comprising configuration parameters, wherein the configuration parameters comprise:

a first target power value for a beam failure recovery procedure; and
a second target power value for a random access procedure; detecting a failure of a first beam;

transmitting, using a first transmission power that is based on the first target power value, a first preamble for the beam failure recovery procedure;
receiving a physical downlink control channel order; and
transmitting, using a second transmission power that is based on the second target power value, a second preamble for the random access procedure.

Example 16: The method of Example 15, further comprising:
determining the first transmission power, wherein the determining the first transmission power comprises adding the first target power value and a power offset value indicated by a preamble format parameter.

Example 17: The method of Example 15, wherein the first transmission power is further based on a first reference signal power value and a first path loss value.

Example 18: The method of Example 17, wherein the first path loss value is based on a layer 1 reference signal received power value.

Example 19: The method of Example 15, wherein the configuration parameters further comprise at least one of:

a channel state information reference signal;
a synchronization signal block; or
a demodulation reference signal for a physical broadcast channel.

Example 20: The method of Example 15, further comprising:

based on receiving a physical downlink control channel order, performing one or more of:

selecting at least one reference signal resource; or
initiating an initial access procedure.

Example 21: A method comprising:

receiving, by a wireless device from a base station, one or more radio resource control messages comprising configuration parameters of a cell, wherein the configuration parameters comprise:

one or more first reference signal resource parameters of a first plurality of reference signals;
one or more second reference signal resource parameters of a second plurality of reference signals;
one or more random access preambles; and
a beam failure recovery type indicator;

detecting, based on at least one of the first plurality of reference signals, at least one beam failure;
after the detecting the at least one beam failure, selecting, based on the beam failure recovery type indicator and a channel quality of the second plurality of reference signals, a preamble of the one or more random access preambles; and
transmitting, via the cell, the selected preamble.

Example 22: The method of Example 21, wherein the first plurality of reference signals comprise at least one of:

synchronization signal blocks;
demodulation reference signals of a physical broadcast channel; or
channel state information reference signals.

Example 23: The method of Example 21, wherein the second plurality of reference signals comprise at least one of:

synchronization signal blocks;
demodulation reference signals of a physical broadcast channel; or
channel state information reference signals.

Example 24: The method of Example 21, wherein the transmitting the selected preamble comprises transmitting, based on the beam failure recovery type indicator indicating a beam failure recovery type other than a first beam failure recovery type, an indication of a candidate beam.

Example 25: The method of Example 21, wherein the selecting is further based on whether the wireless device detects at least one candidate reference signal of the second plurality of reference signals.

Example 26: The method of Example 21, wherein the detecting the at least one beam failure comprises: determining that a first channel quality of at least one first reference signal of the first plurality of reference signals is below a first threshold.

Example 27: The method of Example 26, wherein the detecting the at least one beam failure further comprises determining that a second channel quality of at least one second reference signal of the second plurality of reference signals is above a second threshold.

Example 28: A method comprising:

receiving, by a wireless device from a base station, one or more radio resource control messages comprising configuration parameters of a cell, wherein the configuration parameters comprise:

one or more resource parameters of a plurality of reference signals; and
a beam failure recovery type indicator;

detecting, based on one or more of the plurality of reference signals, at least one beam failure;
determining, based on the beam failure recovery type indicator, a type of a beam failure recovery request for the at least one beam failure;
selecting, based on the type of the beam failure recovery request, a random access channel resource for a transmission of the beam failure recovery request, wherein the selected random access channel resource comprises:

a first available random access channel resource; or
a second random access channel resource, different from the first available random access channel resource; and

transmitting, via the selected random access channel resource, the beam failure recovery request.

Example 29: The method of Example 28, further comprising:
selecting the second random access channel resource for the transmission of the beam failure recovery request.

Example 30: The method of Example 29, further comprising:
determining, based on the plurality of reference signals, a candidate beam, wherein the selecting the second random access channel resource comprises selecting a random access channel resource associated with the candidate beam.

Example 31: The method of Example 28, further comprising:
determining that a search for a candidate beam is unsuccessful.

Example 32: The method of Example 28, wherein the plurality of reference signals comprise at least one of:

synchronization signal blocks;
demodulation reference signals of a physical broadcast channel; or
channel state information reference signals.

Example 33: The method of Example 28, wherein the detecting the at least one beam failure comprises:

determining that a first channel quality of at least one first reference signal of the plurality of reference signals is below a first threshold; and
determining that a second channel quality of at least one second reference signal of the plurality of reference signals is above a second threshold.

Example 34: A method comprising:

determining, by a base station and based on at least one of a first plurality of reference signals, a beam failure recovery type for a wireless device;
transmitting, by the base station to the wireless device, one or more radio resource control messages comprising configuration parameters of a cell, wherein the configuration parameters comprise:

one or more first reference signal resource parameters of the first plurality of reference signals;
one or more second reference signal resource parameters of a second plurality of reference signals;
one or more random access preambles; and
a beam failure recovery type indicator; and

receiving, from the wireless device via the cell, a preamble, wherein the preamble is based on:

the beam failure recovery type indicator; and
a channel quality of the second plurality of reference signals.

Example 35: The method of Example 34, wherein the first plurality of reference signals comprise at least one of:

synchronization signal blocks;
demodulation reference signals of a physical broadcast channel; or
channel state information reference signals.

Example 36: The method of Example 34, wherein the second plurality of reference signals comprise at least one of:

synchronization signal blocks;
demodulation reference signals of a physical broadcast channel; or
channel state information reference signals.

Example 37: The method of Example 34, wherein the receiving the selected preamble comprises receiving an indication of a candidate beam.

Example 38: The method of Example 34, further comprising making a determination, based on the receiving the preamble, whether the wireless device received the beam failure recovery type indicator.

Example 39: The method of Example 34, wherein the determining the at least one beam failure comprises: determining that a first channel quality of at least one first reference signal of the first plurality of reference signals is below a first threshold.

Example 40: The method of Example 39, wherein the determining the at least one beam failure further comprises: determining that a second channel quality of at least one second reference signal of the second plurality of reference signals is above a second threshold.

Example 41: A method comprising:

receiving, by a wireless device, one or more radio resource control messages comprising configuration parameters of a cell, wherein the configuration parameters comprise:

one or more parameters of a plurality of reference signals; and
one or more parameters of a plurality of random access channel (RACH) resources;

receiving at least one medium access control (MAC) control element comprising an indication to activate at least one of:

a first reference signal of the plurality of reference signals; or
a first RACH resource of the plurality of RACH resources;

detecting at least one beam failure;
selecting, after the detecting the at least one beam failure, a preamble associated with the first RACH resource; and
transmitting, via the first RACH resource, the selected preamble.

Example 42: The method of Example 41, wherein the detecting the at least one beam failure comprises measuring a channel state information reference signal resource associated with the plurality of reference signals.

Example 43: The method of Example 41, wherein the transmitting the selected preamble comprises transmitting a beam failure recovery request with the selected preamble.

Example 44: The method of Example 41, further comprising monitoring a plurality of second reference signals indicated by the at least one MAC control element, wherein the first RACH resource is associated with one or more of the plurality of second reference signals.

Example 45: The method of Example 41, wherein the configuration parameters further comprise one or more thresholds, and wherein the detecting the at least one beam failure comprises:
determining that a channel quality of the first reference signal is below a first threshold of the one or more thresholds.

Example 46: A method comprising:

transmitting, by a base station, one or more radio resource control messages comprising configuration parameters of a cell, wherein the configuration parameters comprise:

one or more parameters of a plurality of reference signals; and
one or more parameters of a plurality of random access channel (RACH) resources;

transmitting, by the base station to a wireless device, at least one medium access control (MAC) control element comprising an indication to activate at least one of:

a first reference signal of the plurality of reference signals; or
a first RACH resource of the plurality of RACH resources; and

receiving, from the wireless device via the first RACH resource, a preamble, wherein the preamble is based on a channel quality of the first reference signal.

Example 47: The method of Example 46, wherein the one or more parameters of the plurality of reference signals comprises a channel state information reference signal resource.

Example 48: The method of Example 46, wherein the receiving the preamble comprises receiving a beam failure recovery request with the preamble.

Example 49: The method of Example 46, further comprising:

determining a plurality of sets of second reference signals; and
transmitting one or more indications of the plurality of sets of second reference signals,
wherein the first RACH resource is associated with a first candidate beam in a first set of the plurality of sets of second reference signals, and wherein the plurality of sets of second reference signals is indicated by the at least one MAC control element.

Example 50: The method of Example 46, wherein the configuration parameters further comprise one or more thresholds.

Example 51: A wireless device comprising:

one or more processors; and
memory storing instructions that, when executed by the one or more processors, cause the wireless device to:

receive one or more radio resource control messages comprising configuration parameters of a cell, wherein the configuration parameters comprise:

one or more parameters of a plurality of reference signals; and
one or more parameters of a plurality of random access channel (RACH) resources;

receive at least one medium access control (MAC) control element comprising an indication to activate at least one of:

a first reference signal of the plurality of reference signals; or
a first RACH resource of the plurality of RACH resources;

detect at least one beam failure;
select, after the detecting the at least one beam failure, a preamble associated with the first RACH resource; and
transmit, via the first RACH resource, the selected preamble.

Example 52: The wireless device of Example 51, wherein the instructions, when executed by the one or more processors, cause the wireless device to detect the at least one beam failure by measuring a channel state information reference signal resource associated with the plurality of reference signals.

Example 53: The wireless device of Example 51, wherein the instructions, when executed by the one or more processors, cause the wireless device to transmit the selected preamble by transmitting a beam failure recovery request with the selected preamble.

Example 54: The wireless device of Example 51, wherein the instructions, when executed by the one or more processors, cause the wireless device to monitor a plurality of second reference signals indicated by the at least one MAC control element, wherein the first RACH resource is associated with one or more of the plurality of second reference signals.

Example 55: The wireless device of Example 51, wherein the configuration parameters further comprise one or more thresholds, and wherein the instructions, when executed by the one or more processors, cause the wireless device to detect the at least one beam failure by:
determining that a channel quality of the first reference signal is below a first threshold of the one or more thresholds.

Example 56: A base station comprising:

one or more processors; and
memory storing instructions that, when executed by the one or more processors, cause the base station to:

transmit one or more radio resource control messages comprising configuration parameters of a cell, wherein the configuration parameters comprise:

one or more parameters of a plurality of reference signals; and
one or more parameters of a plurality of random access channel (RACH) resources;

transmit, to a wireless device, at least one medium access control (MAC) control element comprising an indication to activate at least one of:

a first reference signal of the plurality of reference signals; or
a first RACH resource of the plurality of RACH resources; and

receive, from the wireless device via the first RACH resource, a preamble, wherein the preamble is based on a channel quality of the first reference signal.

Example 57: The base station of Example 56, wherein the one or more parameters of the plurality of reference signals comprises a channel state information reference signal resource.

Example 58: The base station of Example 56, wherein the instructions, when executed by the one or more processors, cause the base station to receive the preamble by receiving a beam failure recovery request with the preamble.

Example 59: The base station of Example 56, wherein the instructions, when executed by the one or more processors, cause the base station to:

determine a plurality of sets of second reference signals; and
transmit one or more indications of the plurality of sets of second reference signals,
wherein the first RACH resource is associated with a first candidate beam in a first set of the plurality of sets of second reference signals, and wherein the plurality of sets of second reference signals is indicated by the at least one MAC control element.

Example 60: The base station of Example 56, wherein the configuration parameters further comprise one or more thresholds.

Example 61: A method comprising:

receiving, by a wireless device, one or more radio resource control messages comprising:

first configuration parameters of at least one cell; and
second configuration parameters of a random access procedure for a beam failure recovery;

after at least one beam failure on a first cell of the at least one cell, initiating the random access procedure for the beam failure recovery;
determining, based on the second configuration parameters, a first transmission power of a first preamble;

determining that a first configured transmission, of the first preamble via the first cell, overlaps in time with a second configured transmission of a second preamble;

adjusting a second transmission power of the second preamble so that a total power, comprising the first transmission power and a second transmission power of the second configured transmission, does not exceed a total allowable power value; and

transmitting, using the adjusted second transmission power, the second preamble.

Example 62: The method of Example 61, further comprising detecting, based on determining that a measured beam link quality value is below a threshold, the at least one beam failure.

Example 63: The method of Example 62, wherein the measured beam link quality value is based on at least one of:

a reference signal received power; or
a reference signal received quality.

Example 64: The method of Example 61, further comprising transmitting, using the first transmission power, the first preamble.

Example 65: The method of Example 61, further comprising:
selecting, based on the initiating the random access procedure for the beam failure recovery, the first preamble from a plurality of preambles.

Example 66: The method of Example 61, further comprising initiating a second random access procedure based on at least one of:

an initial access procedure;
a handover command; or
a physical downlink control channel order.

Example 67: The method of Example 61, wherein:

the at least one cell is grouped into multiple cell groups;
the first cell is a primary cell of a first cell group of the multiple cell groups; and
the transmitting the second preamble is via a second cell that is a secondary cell of a second cell group of the multiple cell groups.

Example 68: A method comprising:

receiving, by a wireless device, one or more radio resource control messages comprising:

first configuration parameters of at least one cell; and
second configuration parameters of a random access procedure for a beam failure recovery;

after at least one beam failure on a first cell of the at least one cell, initiating the random access procedure for the beam failure recovery;
determining, based on the second configuration parameters, a first transmission power of a preamble;
determining that a first configured transmission, of the preamble via the first cell, overlaps in time with a second configured transmission of a second signal; and
based on a determination that a total power, comprising the first transmission power and a second transmission power of the second configured transmission, exceeds a total allowable power value:
dropping the second signal.

Example 69: The method of Example 68, further comprising detecting, based on determining that a measured beam link quality value is below a threshold, the at least one beam failure.

Example 70: The method of Example 69, wherein the measured beam link quality value is based on at least one of:

a reference signal received power; or

a reference signal received quality.

Example 71: The method of Example 68, further comprising transmitting, using the first transmission power, the preamble.

Example 72: The method of Example 68, further comprising:
selecting, based on the initiating the random access procedure for the beam failure recovery, the preamble from a plurality of preambles.

Example 73: The method of Example 68, further comprising initiating a second random access procedure based on at least one of:

an initial access procedure;
a handover command; or
a physical downlink control channel order.

Example 74: The method of Example 68, wherein:

the at least one cell is grouped into multiple cell groups;
the first cell is a primary cell of a first cell group of the multiple cell groups; and
the second configured transmission is configured to be transmitted via a second cell that is a secondary cell of a second cell group of the multiple cell groups.

Example 75: A method comprising:

receiving, by a wireless device, one or more radio resource control messages comprising:

first configuration parameters of at least one cell; and
second configuration parameters of a beam failure recovery;

after detecting at least one beam failure on a first cell of the at least one cell, initiating a scheduling request procedure for the beam failure recovery;
determining a first transmission power of a configured transmission via the first cell of a first signal associated with the scheduling request procedure.
determining that the configured transmission of the first signal overlaps in time with a configured transmission of a second signal; and
based on a determination that a total power, comprising the first transmission power and a second transmission power of the configured transmission of the second signal, exceeds a total allowable power value:

adjusting the second transmission power so that the total power does not exceed the total allowable power value; or
dropping the second signal.

Example 76: The method of Example 75, wherein the second signal is for an uplink transmission via at least one of:

a physical uplink control channel; or
a physical uplink shared channel.

Example 77: The method of Example 75, wherein the second signal is a sounding reference signal.

Example 78: The method of Example 75, wherein:

the first signal is for an uplink transmission via a first physical random access channel; and
the second signal is for an uplink transmission via a second physical random access channel.

Example 79: The method of Example 75, further comprising transmitting, using the first transmission power, the first signal.

Example 80: The method of Example 79, further comprising transmitting, using the adjusted second transmission power, the second signal.

Example 81: A wireless device comprising:

one or more processors; and
memory storing instructions that, when executed by the one or more processors, cause the wireless device to:

receive, from a base station, one or more radio resource control messages comprising configuration parameters of a cell, wherein the configuration parameters comprise:

a first preamble received target power value of the cell for a first random access procedure of a beam failure recovery procedure; and
a second preamble received target power value of the cell for a second random access procedure;

based on detecting a beam failure of the cell, transmit, using a first transmission power that is based on the first preamble received target power value of the cell, a first preamble for the first random access procedure of the cell; and
transmit, using a second transmission power that is based on the second preamble received target power value of the cell, a second preamble for the second random access procedure of the cell.

Example 82: A base station comprising:

one or more processors; and
memory storing instructions that, when executed by the one or more processors, cause the base station to:

transmit, to a wireless device, one or more radio resource control messages comprising configuration parameters of a cell, wherein the configuration parameters comprise:

a first preamble received target power value of the cell for a first random access procedure of a beam failure recovery procedure; and
a second preamble received target power value of the cell for a second random access procedure;

receive, from the wireless device, a first preamble for the first random access procedure of the cell, wherein a first transmission power of the first preamble is based on the first preamble received target power value of the cell; and
receive, from the wireless device using a second transmission power based on the second preamble received target power value of the cell, a second preamble for the second random access procedure of the cell.

Example 83: A system comprising a base station and a wireless device;

wherein the base station comprises:

one or more processors; and
memory storing instructions that, when executed by the one or more processors of the base station, cause the base station to:

transmit, to the wireless device, one or more radio resource control messages comprising configuration parameters, wherein the configuration parameters comprise:

a first target power value for a beam failure recovery procedure; and
a second target power value for a random access procedure; and

transmit a physical downlink control channel order; and

wherein the wireless device comprises:

one or more processors; and

memory storing instructions that, when executed by the one or more processors of the wireless device, cause the wireless device to:
detect a failure of a first beam;

transmit, using a first transmission power that is based on the first target power value, a first preamble for the beam failure recovery procedure; and
transmit, using a second transmission power that is based on the second target power value, a second preamble for the random access procedure.

Example 84: A wireless device comprising:

one or more processors; and
memory storing instructions that, when executed by the one or more processors, cause the wireless device to:

receive, from a base station, one or more radio resource control messages comprising configuration parameters of a cell, wherein the configuration parameters comprise:

one or more first reference signal resource parameters of a first plurality of reference signals;
one or more second reference signal resource parameters of a second plurality of reference signals;
one or more random access preambles; and
a beam failure recovery type indicator;

detect, based on at least one of the first plurality of reference signals, at least one beam failure;
after detecting the at least one beam failure, select, based on the beam failure recovery type indicator and a channel quality of the second plurality of reference signals, a preamble of the one or more random access preambles; and
transmit, via the cell, the selected preamble.

Example 85: A wireless device comprising:

one or more processors; and
memory storing instructions that, when executed by the one or more processors, cause the wireless device to:

receive, from a base station, one or more radio resource control messages comprising configuration parameters of a cell, wherein the configuration parameters comprise:

one or more resource parameters of a plurality of reference signals; and
a beam failure recovery type indicator;

detect, based on one or more of the plurality of reference signals, at least one beam failure;
determine, based on the beam failure recovery type indicator, a type of a beam failure recovery request for the at least one beam failure;
select, based on the type of the beam failure recovery request, a random access channel resource for a transmission of the beam failure recovery request, wherein the selected random access channel resource comprises:

a first available random access channel resource; or
a second random access channel resource, different from the first available random access channel resource; and

transmit, via the selected random access channel resource, the beam failure recovery request.

Example 86: A base station comprising:

one or more processors; and
memory storing instructions that, when executed by the one or more processors, cause the base station to:

determine, based on at least one of a first plurality of reference signals, a beam failure recovery type for a wireless device;

transmit, to the wireless device, one or more radio resource control messages comprising configuration parameters of a cell, wherein the configuration parameters comprise:

one or more first reference signal resource parameters of the first plurality of reference signals;
one or more second reference signal resource parameters of a second plurality of reference signals;
one or more random access preambles; and
a beam failure recovery type indicator; and

receive, from the wireless device via the cell, a preamble, wherein the preamble is based on:

the beam failure recovery type indicator; and
a channel quality of the second plurality of reference signals.

Example 87: A system comprising a base station and a wireless device;

wherein the base station comprises:

one or more processors; and
memory storing instructions that, when executed by the one or more processors of the base station, cause the base station to:

transmit, to the wireless device, one or more radio resource control messages comprising configuration parameters of a cell, wherein the configuration parameters comprise:

one or more first reference signal resource parameters of a first plurality of reference signals;
one or more second reference signal resource parameters of a second plurality of reference signals;
one or more random access preambles; and
a beam failure recovery type indicator; and

wherein the wireless device comprises:

one or more processors; and
memory storing instructions that, when executed by the one or more processors of the wireless device, cause the wireless device to:

detect, based on at least one of the first plurality of reference signals, at least one beam failure;
after detecting the at least one beam failure, select, based on the beam failure recovery type indicator and a channel quality of the second plurality of reference signals, a preamble of the one or more random access preambles; and
transmit, via the cell, the selected preamble.

Example 88: A system comprising a base station and a wireless device;
wherein the base station comprises:

one or more processors; and
memory storing instructions that, when executed by the one or more processors, cause the base station to:

transmit one or more radio resource control messages comprising configuration parameters of a cell, wherein the configuration parameters comprise:

one or more parameters of a plurality of reference signals; and
one or more parameters of a plurality of random access channel (RACH) resources; and

transmit at least one medium access control (MAC) control element comprising an indication to activate at least one of:

a first reference signal of the plurality of reference signals; or

a first RACH resource of the plurality of RACH resources; and wherein the wireless device comprises:

one or more processors; and
memory storing instructions that, when executed by the one or more processors, cause the wireless device to:

detect at least one beam failure;
select, after the detecting the at least one beam failure, a preamble associated with the first RACH resource; and
transmit, via the first RACH resource, the selected preamble.

Example 89: A wireless device comprising:

one or more processors; and
memory storing instructions that, when executed by the one or more processors, cause the wireless device to:

receive one or more radio resource control messages comprising:

first configuration parameters of at least one cell; and
second configuration parameters of a random access procedure for a beam failure recovery;

after at least one beam failure on a first cell of the at least one cell, initiate the random access procedure for the beam failure recovery;
determine, based on the second configuration parameters, a first transmission power of a first preamble;
determine that a first configured transmission, of the first preamble via the first cell, overlaps in time with a second configured transmission of a second preamble;
adjust a second transmission power of the second preamble so that a total power, comprising the first transmission power and a second transmission power of the second configured transmission, does not exceed a total allowable power value; and
transmit, using the adjusted second transmission power, the second preamble.

Example 90: A wireless device comprising:

one or more processors; and
memory storing instructions that, when executed by the one or more processors, cause the wireless device to:

receive one or more radio resource control messages comprising:

first configuration parameters of at least one cell; and
second configuration parameters of a random access procedure for a beam failure recovery;

after at least one beam failure on a first cell of the at least one cell, initiate the random access procedure for the beam failure recovery;
determine, based on the second configuration parameters, a first transmission power of a preamble;
determine that a first configured transmission, of the preamble via the first cell, overlaps in time with a second configured transmission of a second signal; and
based on a determination that a total power, comprising the first transmission power and a second transmission power of the second configured transmission, exceeds a total allowable power value:
drop the second signal.

Example 91: A wireless device comprising:

one or more processors; and
memory storing instructions that, when executed by the one or more processors, cause the wireless device to:

receive, by a wireless device, one or more radio resource control messages comprising:

first configuration parameters of at least one cell; and
second configuration parameters of a beam failure recovery;

after detecting at least one beam failure on a first cell of the at least one cell, initiate a scheduling request procedure for the beam failure recovery;

determine a first transmission power of a configured transmission via the first cell of a first signal associated with the scheduling request procedure.

determine that the configured transmission of the first signal overlaps in time with a configured transmission of a second signal; and

based on a determination that a total power, comprising the first transmission power and a second transmission power of the configured transmission of the second signal, exceeds a total allowable power value:

adjust the second transmission power so that the total power does not exceed the total allowable power value; or

drop the second signal.

Example 92: A system comprising a base station and a wireless device;
wherein the base station comprises:

one or more processors; and
memory storing instructions that, when executed by the one or more processors, cause the base station to:
transmit, to the wireless device, one or more radio resource control messages comprising:

first configuration parameters of at least one cell; and
second configuration parameters of a beam failure recovery; and wherein the wireless device comprises:

one or more processors; and
memory storing instructions that, when executed by the one or more processors, cause the wireless device to:

after detecting at least one beam failure on a first cell of the at least one cell, initiate a scheduling request procedure for the beam failure recovery;

determine a first transmission power of a configured transmission via the first cell of a first signal associated with the scheduling request procedure.

determine that the configured transmission of the first signal overlaps in time with a configured transmission of a second signal; and

based on a determination that a total power, comprising the first transmission power and a second transmission power of the configured transmission of the second signal, exceeds a total allowable power value:

adjust the second transmission power so that the total power does not exceed the total allowable power value; or

drop the second signal.

Example 93: A computer-readable medium storing instructions that, when executed, cause performance of the method of any of Examples 1-50 or 61-80.

**Claims**

1. A method comprising:
   receiving, by a wireless device, one or more radio resource control messages comprising:

   one or more parameters of a plurality of reference signals; and
   one or more parameters of a plurality of random access channel (RACH) resources;
   receiving at least one medium access control (MAC) control element comprising an indication to activate one or more reference signals of the plurality of reference signals;
   detecting, based on the one or more reference signals, a beam failure; and
   after the detecting the beam failure, transmitting, via a RACH resource of the plurality of RACH resources, a preamble associated with the RACH resource, wherein the RACH resource is associated with a candidate beam.

2. The method of claim 1, wherein the detecting the beam failure comprises measuring a channel state information reference signal resource associated with the one or more reference signals.

3. The method of any one of claims 1 or 2, further comprising receiving, after the transmitting the preamble, a random access response.

4. The method of any one of claims 1 - 3, further comprising monitoring a plurality of second reference signals, wherein the RACH resource is associated with one or more of the plurality of second reference signals.

5. The method of any one of claims 1 - 4, wherein the one or more radio resource control messages further comprise one or more thresholds, and wherein the detecting the beam failure comprises:
determining that a channel quality of the one or more reference signals is below a first threshold of the one or more thresholds.

6. The method of any one of claims 1 - 5, wherein each RACH resource, of the plurality of RACH resources, comprises at least one of:

   a preamble; or
   a time and frequency radio resource.

7. A method comprising:

   transmitting, by a base station, one or more radio resource control messages comprising:

      one or more parameters of a plurality of reference signals; and
      one or more parameters of a plurality of random access channel (RACH) resources;
      transmitting, by the base station to a wireless device, at least one medium access control (MAC) control element comprising an indication to activate one or more reference signals of the plurality of reference signals; and
      receiving, from the wireless device via a RACH resource of the plurality of RACH resources, a preamble associated with the RACH resource, wherein the RACH resource is associated with a candidate beam.

8. The method of claim 7, wherein the one or more parameters of the plurality of reference signals comprises a channel state information reference signal resource, and
wherein the one or more reference signals are associated with beam failure detection.

9. The method of any one of claims 7 or 8, further comprising transmitting, after receiving the preamble, a random access response,
wherein the receiving the preamble is after a beam failure associated with the one or more reference signals.

10. The method of any one of claims 7 - 9, further comprising:

    determining a plurality of sets of second reference signals; and
    transmitting one or more indications of the plurality of sets of second reference signals,
    wherein the candidate beam is in a first set of the plurality of sets of second reference signals.

11. The method of any one of claims 7 - 10, wherein the one or more radio resource control messages further comprise one or more thresholds for determining a channel quality of the one or more reference signals.

12. The method of any one of claims 7 - 11, wherein each RACH resource, of the plurality of RACH resources, comprises at least one of:

    a preamble; or
    a time and frequency radio resource.

13. A computing device comprising:

    one or more processors; and
    memory storing instructions that, when executed by the one or more processors, cause the computing device to perform:

       the method of any one of claims 1 - 6; or

the method of any one of claims 7 - 12.

**14.** A system comprising:

a wireless device configured to perform the method of any one of claims 1 - 6; and
a base station configured to transmit the one or more radio resource control messages.

**15.** A computer-readable medium storing instructions that, when executed, cause performance of:

the method of any one of claims 1 - 6; or
the method of any one of claims 7 - 12.

FIG. 1

EP 4 033 822 A1

FIG. 2

FIG. 3

FIG. 4

EP 4 033 822 A1

FIG. 5A Example uplink physical channel

FIG. 5B Example uplink modulation

FIG. 5C Example downlink physical channel

FIG. 5D Example downlink modulation

FIG. 6

**FIG. 7**

Dual-Connectivity- two MAC entities at UE side

FIG. 8

EP 4 033 822 A1

UE

Base Station

900

Activate SCell

901

PDCCH order

Msg 1

902

UE begins to perform RACH for the SCell

RACH

903

Msg 2

UL Transmission

904

FIG. 9

1010

NGC

NG-C      NG-U

1020

gNB

**FIG. 10A** gNB connected to NGC

1030

NGC

NG-C      NG-U

1040

eLTE eNB

**FIG. 10B** eLTE eNB connected to NGC

1101A

EPC

S1-C    S1-U

1102A

LTE eNB    1103A    gNB

Xx-U

Xx-C

**FIG. 11A** LTE eNB connected to EPC with non-standalone gNB. gNB user plane connected to EPC via LTE eNB.

1101B

EPC

S1-C    S1-U    S1-U

1102B    1103B

LTE eNB    gNB

Xx-C

**FIG. 11B** LTE eNB connected to EPC with non-standalone gNB. gNB user plane connected to EPC directly.

1101C

NGC

NG-C    NG-U

1102C    1103C

eLTE eNB    Xn-U    gNB

Xn-C

**FIG. 11C** gNB connected to NGC with non-standalone eLTE eNB. eLTE eNB user plane connected to NGC via gNB.

1101D

NGC

NG-U    NG-C    NG-U

1102D    1103D

eLTE eNB    gNB

Xn-C

**FIG. 11D** gNB connected to NGC with non-standalone eLTE eNB. eLTE eNB user plane connected to NGC directly.

1101E

NGC

NG-C    NG-U

1102E    1103E    1102F

eLTE eNB    Xn-U    gNB

Xn-C

**FIG. 11E** eLTE eNB connected to NGC with non-standalone gNB. gNB user plane connected to NGC via eLTE eNB.

1101F

NGC

NG-C    NG-U    NG-U

1102F    1103F

eLTE eNB    gNB

Xn-C

**FIG. 11F** eLTE eNB connected to NGC with non-standalone gNB. gNB user plane connected to NGC directly.

FIG. 12A Radio protocol architecture for split bearer and SCG bearer. LTE eNB connected to EPC with non-standalone gNB.

FIG. 12B Radio protocol architecture for split bearer and SCG bearer. gNB connected to NGC with non-standalone eLTE eNB.

FIG. 12C Radio protocol architecture for split bearer and SCG bearer. eLTE eNB connected to NGC with non-standalone gNB.

1301

Core

*RAN-CN Interface*

*RAN-CN Interface*

*RAN-CN Interface*

1302

gNB

1303

gNB

1304

(e)LTE eNB

*Inter-BS Interface*

*Inter-BS Interface*

FIG. 13A Non-centralized deployment

1310

Core

*RAN-CN Interface*

1311

Central Unit (Upper layers of gNB)

*CU-DU Interface*

*CU-DU Interface*

*CU-DU Interface*

gNB

1312

Distributed Unit (Lower layers of gNB)

1313

Distributed Unit (Lower layers of gNB)

1314

Distributed Unit (Lower layers of gNB)

FIG. 13B Centralized deployment

1401A 1402A 1401B 1402B

| NR RRC | Data | NR RRC | Data |

*Split Option Example 1*

1403A — NR PDCP | NR PDCP — 1403B

*Split Option Example 2*

1404A — High NR RLC | High NR RLC — 1404B

*Split Option Example 3*

1405A — Low NR RLC | Low NR RLC — 1405B

*Split Option Example 4*

1406A — High NR MAC | High NR MAC — 1406B

*Split Option Example 5*

1407A — Low NR MAC | Low NR MAC — 1407B

*Split Option Example 6*

1408A — High NR PHY | High NR PHY — 1408B

*Split Option Example 7*

1409A — Low NR PHY | Low NR PHY — 1409B

*Split Option Example 8*

1410A — RF | RF — 1410B

# FIG. 14

SS burst set

1501

1502A 1502B 1502C 1502D 1502E 1502F 1502G 1502H

1504

SS burst set

1503

**FIG. 15**

FIG. 16

EP 4 033 822 A1

**FIG. 17**

FIG. 18

FIG. 19

FIG. 20

FIG. 21

EP 4 033 822 A1

2201

| | 1 | 2 | ... | M | ... | N |

SS/PBCH

Common RACH Config

Additional BFR-PRACH power offset

1 subframe (Y ms)

2202

2203

2204

Time

**FIG. 22**

```
                    ┌─────────┐
                    │  Start  │
                    └─────────┘
                         │
                         ▼
   ┌──────────────────────────────────────────┐
   │  Determine resources and/or parameters    │───── 2301
   └──────────────────────────────────────────┘
                         │
                         ▼
   ┌──────────────────────────────────────────┐
   │  Determine beam failure recovery received │───── 2302
   │            target power value             │
   └──────────────────────────────────────────┘
                         │
                         ▼
   ┌──────────────────────────────────────────┐
   │  Transmit resources, parameters, and beam │───── 2303
   │  failure recovery received target power value │
   └──────────────────────────────────────────┘
                         │
                         ▼
   ┌──────────────────────────────────────────┐
   │  Receive beam failure recovery preamble   │───── 2304
   └──────────────────────────────────────────┘
                         │
                         ▼
                    ┌─────────┐
                    │   End   │
                    └─────────┘
```

FIG. 23

Start

Determine resources and/or parameters  2401

Determine random access received target power value  2402

Determine offset value  2403

Determine beam failure recovery received target value (BFR = RA + offset value + additional offset value)  2404

Transmit resources, parameters, offset value, and/or additional offset value  2405

Receive beam failure recovery preamble  2406

End

FIG. 24

**FIG. 25**

Start

Receive resources, parameters, initial target power value — 2601

Determine beam failure — 2602

Determine Layer 1 measurement — 2603

Determine path loss — 2604

Determine beam failure recovery preamble transmission power based on Layer 1 measurement and path loss — 2605

Transmit beam failure recovery preamble using beam failure recovery preamble transmission power — 2606

End

FIG. 26

FIG. 27

FIG. 28

FIG. 29

FIG. 30

Start

Receive configuration parameters (e.g., BFR
type indicator, preambles, RSs)

3101

Monitor first RSs for beam failure detection
based on a first threshold

3102

Detect beam failure

3103

Yes ◁ Type 1 BFR
request? ▷ No

3104

transmit first BFR request
via first RACH resource
associated with first RSs

3105

Monitor second RSs for
candidate beam selection
based on second threshold

3106

Yes ◁ Channel quality of second RSs
satisfy second threshold? ▷ No

3107

transmit second BFR request
via a second RACH resource
associated with one of the
second RSs

3108

transmit third BFR request
via third RACH resource
associated with first RSs

3109

End

FIG. 31

**FIG. 32**

**FIG. 33**

Transmission beams

3411
3413
3415
3417
3419

3401

3402

CSI-RS configuration

CSI-RS

3403

BFR-PRACH configuration

BFR-PRACH Resource

3404

FIG. 34

CSI-RS configurations

BFR-PRACH configurations

CSI-RS 3503 → BFR-PRACH Resource 3504

CSI-RS 3505 → BFR-PRACH Resource 3506

CSI-RS 3507 → BFR-PRACH Resource 3508

3502

Transmission beams

3511
3513
3515
3517
3519

3501

FIG. 35

FIG. 36

FIG. 37

FIG. 38

FIG. 39

An Octet

| Activation or deactivation CSI-RS command for the 1st beam set | Octet 1 |

4001

| Activation or deactivation PRACH command for the 1st beam set | Octet 2 |

4002

...

| Activation or deactivation CSI-RS command for the $N^{th}$ beam set | Octet N-1 |

4003

| Activation or deactivation PRACH command for the $N^{th}$ beam set | Octet N |

4004

FIG. 40

FIG. 41

An Octet

| | | | | | | | |

Activation or deactivation CSI-RS command for the 1st beam set | Octet 1

4201

BFR-PRACH configuration for the $1^{st}$ beam set | Octet 2

4202

...

Activation or deactivation BFR-PRACH command for the $N^{th}$ beam set | Octet N-1

4203

BFR-PRACH configuration for the $N^{th}$ beam set | Octet N

4204

FIG. 42

Start

Receive configuration parameters (e.g., RACH resources, preambles, RSs) 4301

Receive a MAC CE indicating activation of a first set of RSs and/or RACH resources 4302

Monitor first RSs for beam failure detection based on a first threshold 4303

Detect beam failure 4304

Select a preamble and/or a RACH resource 4305

Transmit the preamble via the RACH resource according to BFR procedure 4306

End

FIG. 43

Start

Transmit configuration parameters ⁀4401

Select RSs and/or RACH resources
⁀4402

Transmit MAC CE indicating RSs and/or RACH resources
⁀4403

Monitor RACH resources for a cell
⁀4404

Detect a first preamble from a wireless device
⁀4405

Detect beam failure
⁀4406

Perform BFR procedure
⁀4407

End

FIG. 44

FIG. 45

**FIG. 46**

FIG. 47

Start

Receive configuration parameters (e.g., BFR priorities, preambles, RSs) — 4701

Monitor first RSs for beam failure detection based on a first threshold — 4702

Detect beam failure — 4703

Determine transmission power — 2304

BFR-PRACH prioritized over PUCCH? — 4705
Yes → Adjust transmission power — 4706
No ↓

BFR-PRACH prioritized over PUSCH with UCI? — 4707
Yes → Adjust transmission power — 4708
No ↓

BFR-PRACH prioritized over PUSCH without UCI? — 4709
Yes → Adjust transmission power — 4710
No ↓

BFR-PRACH prioritized over PRACH? — 4711
Yes → Adjust transmission power — 4712
No → Adjust transmission power — 4713

Transmit using adjusted values — 4714

Start

Transmit configuration parameters — 4801

Monitor RACH resources for a cell — 4802

Detect a first preamble from a wireless device — 4803

Detect beam failure — 4804

Transmit a control signal — 4805

Detect a second preamble from a wireless device — 4806

Transmit a MPDU — 4807

End

FIG. 48

4906

Network
4910

4900

DEVICE
CONTROLLER
4907

NETWORK
I/O
4909

ROM
4902

REMOVABLE
MEDIA
4904

PROCESSOR
4901

RAM
4903

HARD DRIVE
4905

GPS
4911

WiFi
4913

Bluetooth
4912

4908

FIG. 49

Europäisches
Patentamt

European
Patent Office

Office européen
des brevets

# EUROPEAN SEARCH REPORT

**Application Number**

EP 22 16 1363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHTTL: "Discussion on beam failure recovery", 3GPP DRAFT; R1-1708380, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 – 20170519 14 May 2017 (2017-05-14), XP051273573, Retrieved from the Internet: URL:http://www.3gpp.org/ftp/Meetings_3GPP_SYNC/RAN1/Docs/ [retrieved on 2017-05-14] * the whole document * ----- | 1-15 | INV. H04W52/34 H04W52/44 H04B17/382 H04W52/24 H04W76/19 ADD. H04W16/28 H04W72/04 H04W74/08 |
| Y | SAMSUNG: "NR beam recovery procedure", 3GPP DRAFT; R2-1703712 NR BEAM RECOVERY PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170403 – 20170407 3 April 2017 (2017-04-03), XP051245520, Retrieved from the Internet: URL:http://www.3gpp.org/ftp/Meetings_3GPP_SYNC/RAN2/Docs/ [retrieved on 2017-04-03] * the whole document * ----- -/-- | 1-15 | TECHNICAL FIELDS SEARCHED (IPC) H04W H04B |

The present search report has been drawn up for all claims

| Place of search | Date of completion of the search | Examiner |
|---|---|---|
| The Hague | 20 May 2022 | Reville, Lenora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 16 1363

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QUALCOMM INCORPORATED: "Beam recovery procedures", 3GPP DRAFT; R1-1711161 BEAM RECOVERY PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 26 June 2017 (2017-06-26), XP051300361, Retrieved from the Internet: URL:http://www.3gpp.org/ftp/Meetings_3GPP_SYNC/RAN1/Docs/ [retrieved on 2017-06-26] * page 2, line 3 - line 7 * * page 3, paragraph 3 * ----- | 1-15 | |
| A | LENOVO ET AL: "Random access procedure for beam recovery request", 3GPP DRAFT; R2-1707001 RANDOM ACCESS PROCEDURE FOR BEAM RECOVERY REQUEST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Qingdao, China; 20170627 - 20170629 26 June 2017 (2017-06-26), XP051301498, Retrieved from the Internet: URL:http://www.3gpp.org/ftp/Meetings_3GPP_SYNC/RAN2/Docs/ [retrieved on 2017-06-26] * page 1, paragraph 1. Introduction * * page 2, line 16 - line 21 * * page 2, line 26 - line 28 * * page 3, lines 1-3 * * figure 1 * ----- | 1-15 | TECHNICAL FIELDS SEARCHED (IPC) |

The present search report has been drawn up for all claims

| Place of search | Date of completion of the search | Examiner |
|---|---|---|
| The Hague | 20 May 2022 | Reville, Lenora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Patent documents cited in the description**

- US 62543816
- US 62543820
- US 62543821
- US 62543826